(19) Europäisches Patentamt

European Patent Office

Office européen des brevets

(11) EP 1 291 867 A2

(12) EUROPEAN PATENT APPLICATION

(43) Date of publication:
12.03.2003 Bulletin 2003/11

(51) Int Cl.⁷: **G11B 20/00**, H04L 9/00, G06F 1/00

(21) Application number: 02255309.3

(22) Date of filing: 30.07.2002

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: 07.08.2001 JP 2001239145

(71) Applicant: SONY CORPORATION
Tokyo 141 (JP)

(72) Inventors:
• **Asano, Tomoyuki, c/o Sony Corporation Tokyo 141 (JP)**
• **Muramatsu, Katsumi, c/o Sony Corporation Tokyo 141 (JP)**

(74) Representative: **Pratt, Richard Wilson et al**
**D. Young & Co,**
**21 New Fetter Lane**
**London EC4A 1DA (GB)**

(54) **Information-processing with cryptographic processing**

(57) When contents are copied or transferred from a first information-processing apparatus to a second information-processing apparatus, the contents are stored onto a recording medium of the second information-processing apparatus as they are without decryption and re-encryption. In addition, the first information-processing apparatus also supplies a title-unique key to the second information-processing apparatus to be used by the second information-processing apparatus for generating a title key, which is also stored in the recording medium. In a content reproduction process carried out by the second information-processing apparatus, a title-unique key is generated from its own keys such as a master, media and LSI keys in accordance with a title-unique-key generation sequence based on the stored title key, and is used for decrypting the contents. As a result, it is possible to provide a processing configuration for efficiently performing an operation to copy contents from an information-processing apparatus to another and an operation to store distributed contents onto a recording medium of a recipient apparatus.

FIG.16

EP 1 291 867 A2

**Description**

BACKGROUND OF THE INVENTION

In general, the present invention relates to an information-processing apparatus, an information-processing method and a program. Illustrative embodiments of the present invention relate to an information-processing apparatus operating with a high degree of efficiency even by consideration of inter-apparatus transfers and inter-apparatus copy processing of contents each having a use restriction such as a copyright protection or transfers and copy processing from communication media to apparatus, relates to an information-processing method adopted by the information-processing apparatus as well as relates to a program implementing the information-processing method.

With the progress and development of digital signal-processing technologies, digital recording apparatus and digital recording media have been becoming popular in recent years. By using these digital recording apparatus and digital recording media, recording and reproduction operations can be carried out repeatedly without deteriorating pictures and sounds. Since digital data can be copied repeatedly with the picture and sound qualities sustained as they are by using the digital recording apparatus and digital recording media, recording media containing illegally copied data is sold in the market. As a result, such illegal recording media damages the interests of people such as holders of copyrights of a variety of contents such as pieces of music and movies and authorized holders of marketing rights of such contents. In order to prevent digital data from being copied illegally, recently, there have been implemented or proposed a variety of processing configurations for avoiding operations to illegally copy digital data.

For example, an MD (trademark) apparatus adopts an SCMS (Serial Copy Management System) as a method for preventing illegal copy operations. It is to be noted that the MD is an abbreviation of a mini disk. The SCMS is a system in which an SCMS signal is output along with audio data from a digital interface (DIF) on the data-reproduction side, and control of processing to record audio data received from the data-reproduction side on the data-recording side is based on the SCMS signal in order to avoid illegal copy operations.

To put it concretely, the SCMS signal is a signal indicating whether audio data is copy-free data, one-generation-copy-allowed data or copy-prohibited data. Copy-free data is data that can be copied any number of times. One-generation-copy-allowed data is data that can be copied only once. Copy-prohibited data is data that cannot be copied at all. When receiving audio data from the DIF, the data-recording side detects the SCMS signal transmitted along with the audio data. If the SCMS signal indicates that the audio data is copy-free data, the audio data and the SCMS signal are recorded onto a mini disk. If the SCMS signal indicates that the audio data is one-generation-copy-allowed data, the SCMS signal is changed to a copy-prohibited SCMS signal, and the audio data as well as the SCMS signal are recorded onto a mini disk. If the SCMS signal indicates that the audio data is copy-prohibited data, the audio data is not recorded. By executing control based on the SCMS signal as described above, the mini-disk apparatus is capable of preventing audio data having a copyright indicated by the SCMS signal from being copied illegally.

In order to execute the control based on the SCMS signal, however, it is assumed that the data-recording apparatus itself has a configuration implementing control to record audio data from the reproduction side on the basis of the SCMS signal. It is thus difficult to apply the control based on the SCMS signal to an apparatus having no configuration designed for the SCMS-based control. In order to solve this problem, for example, a DVD player adopts a content-scramble system in order to realize a configuration for preventing audio data having a copyright from being copied illegally.

In accordance with the content-scramble system, video and/or audio data is encrypted and the encrypted data is recorded onto a DVD-ROM (Read-Only Memory) mounted on a DVD player. A decryption key, which is a key for decrypting encrypted data, is given to a licensed DVD player. A license is granted to a DVD player that is designed into a configuration for carrying out only processing conforming to predetermined operation prescriptions including prohibition of an illegal copy operation. Thus, a licensed DVD player is capable of decrypting encrypted data recorded on the DVD-ROM by using a key given to the player in order to reproduce pictures and sound represented by the data from the DVD-ROM.

Since a DVD player granted no license does not have a decryption key for decrypting encrypted data, on the other hand, such a DVD player is not capable of decrypting encrypted data recorded on the DVD-ROM. As described above, in accordance with the content-scramble system, a DVD player not satisfying conditions for reception of a license is not capable of reproducing digital data from a DVD-ROM so that it is possible to prevent illegal copy operations.

However, the content-scramble system adopted in DVD-ROMs is applicable only to recording media that do not allow user data to be written onto the media. The application of the content-scramble system to recording media allowing user data to be written onto the media is not taken into consideration. The recording media disallowing user data to be written onto the media are referred to hereafter as ROM media and the recording media allowing user data to be written onto the media are referred to hereafter as RAM media.

Thus, even if data recorded in a ROM medium is encrypted, all the encrypted data can be copied to a RAM medium as it is. Thus, it will be possible to produce a so-called pirate version that can be reproduced by an apparatus granted a proper license.

In order to solve the above problem, JP - A11 - 224461 has proposed a configuration in which recording-medium identification information is recorded onto a recording medium along with other data and an access can be made to the recording-medium identification information of the recording medium only if a condition is met, where the condition is a condition requiring that the apparatus making the access shall be an apparatus granted a license to make an access to the recording-medium identification information. The recording-medium identification information is information for identifying individual recording media.

By adoption of this method, data on a recording medium is encrypted by using the recording-medium identification information and a master key so that an apparatus granted no license is not capable of generating meaningful data even if the apparatus is capable or reading out the encrypted data. The master key is a private key obtained if a license is granted. It is to be noted that, if a license is granted to an apparatus, operations carried out by the apparatus are controlled so that illegal copy operations or illegitimate copy operations cannot be carried out.

An apparatus granted no license is not capable of making an access to the recording-medium identification information. In addition, the recording-medium identification recorded on a recording medium has a value unique to the medium. Thus, even if an apparatus granted no license is capable of copying all encrypted data recorded on a recording medium to another recording medium, the data copied to and recorded on the other recording medium created in this way cannot be correctly decrypted naturally by the apparatus granted no license and even by an apparatus granted a license. As a result, illegal copy operations are virtually avoided.

Recently, a recording & reproduction apparatus using a variety of recording media as contents recording media has been becoming popular as a portable recording & reproduction apparatus, on which a small hard disk can be mounted. Examples of such a recording & reproduction apparatus are an HDR (Hard Disk Recorder) and a recording & reproduction apparatus employing a flash memory. Under such a circumstance, processing to copy contents from one information recording & reproduction apparatus to another is just a day-to-day activity done among a plurality of information recording & reproduction apparatus. Examples of the information recording & reproduction apparatus include a DVR (Digital Versatile Recorder) system using a DVD-RAM and an HDR system employing a hard disk. In addition, also carried out frequently is processing such as an operation to store contents, which are distributed by way of the Internet or distributed by broadcasting through a satellite, onto RAM media.

In such a case, in principle, there is required a configuration in which contents can be used only in an apparatus granted a license, and processing to record the contents onto any recording media is carried out by using the licensed apparatus's own key provided for cryptographic processing. Thus, if contents input from another apparatus or contents distribution server is unencrypted data, the contents are recorded onto a recording medium after being encrypted by using the licensed apparatus's own key provided for cryptographic processing. In addition, in the case of encrypted data of input contents, the following processing is carried out. First of all, the encrypted contents are decrypted. Then, the decrypted contents are re-encrypted by using the licensed apparatus's own key provided for cryptographic processing before being recorded onto a recording medium. In a DVR system, for example, a key for cryptographic processing is generated by applying the medium identification information described above and a master key and used for cryptographic processing of the contents. As described earlier, the master key is a private key obtained when a license is granted.

However, the processing speed is decreased by the processing to copy contents as described above or the processing to decrypt input data and re-encrypt the decrypted data in an operation to record the input data onto a recording medium.

SUMMARY OF THE INVENTION

An embodiment of the present invention seeks to provide an information-processing apparatus that allows encrypted data being recorded to be decrypted by the apparatus only if a proper license has been granted to the apparatus and eliminates decryption and re-encryption of the data in processing to store the data, which is received as a result of a transfer or a copy operation from another apparatus or received as data presented by a data distribution site, to provide an information-processing method to be adopted by the information-processing apparatus and to provide a program representing the information-processing method.

According to an aspect of the present invention, there is provided an information-processing apparatus for carrying out a cryptographic process on information, comprising cryptographic-processing means for generating a key different from an input key by carrying out processing in accordance with a predetermined key generation sequence on the input key and for decrypting encrypted data stored on a recording medium by using the generated different key,

wherein the cryptographic-processing means:

generates a second encryption key by carrying out processing according to a reversed sequence of at least a portion of the predetermined key generation sequence on a first encryption key provided for the encrypted data input from an external source to be stored onto the recording medium; and
generates a decryption key for decrypting the encrypted data by carrying out processing in accordance with the predetermined key generation sequence on the second encryption key.

Preferably, the cryptographic-processing means generates the decryption key by carrying out processing in accordance with the predetermined key generation sequence on at least one of a stored key of the information-processing apparatus and a stored key of the recording medium in addition to the second encryption key.

Preferably, the first encryption key is a title-unique key provided for the encrypted data input from an external source, the second encryption key is a title key obtainable from processing to decrypt the title-unique key, and the decryption key for decrypting the encrypted data is generated by carrying out processing in accordance with the predetermined key generation sequence on at least one of a stored key of the information-processing apparatus and a stored key of the recording medium as well as the title key.

Preferably, the information-processing apparatus further includes storage means for storing node keys each unique to one of nodes composing a hierarchical tree structure including leaves each associated with one among a plurality of information-processing apparatus different from each other and for storing leaf keys each unique to one of the information-processing apparatus different from each other, and the cryptographic-processing means: carries out processing to decrypt an effective key block including node keys each encrypted by using keys including at least one of a node key on the hierarchical tree structure's layer at a lower hierarchical level and a leaf key on the hierarchical tree structure's layer at a lower hierarchical level; and generates a decryption key for decrypting the encrypted data by carrying out processing in accordance with the predetermined key generation sequence on the key obtained as a result of the processing to decrypt the effective key block and the second encryption key.

Preferably, the encrypted data is pieces of block data, which each comprise packets composing a transport stream, and the decryption key generated on the basis of the second encryption key is a block key for each of the pieces of block data.

Preferably, the cryptographic-processing means authenticates an apparatus, from which encrypted data is received, in an operation to receive the encrypted data, and accepts the encrypted data on condition that the apparatus transmitting the encrypted data is authenticated successfully.

Preferably, the information-processing apparatus further includes storage means for storing node keys each unique to one of nodes composing a hierarchical tree structure including leaves each associated with one among a plurality of information-processing apparatus different from each other and for storing leaf keys each unique to one of the information-processing apparatus different from each other, and the cryptographic-processing means: carries out processing to decrypt an effective key block including node keys each encrypted by using keys including at least one of a node key on the hierarchical tree structure's layer at a lower hierarchical level and a leaf key on the hierarchical tree structure's layer at a lower hierarchical level; and obtains the first encryption key as a result of the processing to decrypt the effective key block.

According to another aspect of the present invention, there is provided an information-processing method of carrying out a cryptographic process on information, comprising a cryptographic-processing step of generating a key different from an input key by carrying out processing in accordance with a predetermined key generation sequence on the input key and of decrypting encrypted data stored on a recording medium by using the generated different key,

wherein the cryptographic-processing step further comprises the steps of:

generating a second encryption key by carrying out processing according to a reversed sequence of at least a portion of the predetermined key generation sequence on a first encryption key provided for the encrypted data input from an external source to be stored onto the recording medium; and
generating a decryption key for decrypting the encrypted data by carrying out processing in accordance with the predetermined key generation sequence on the second encryption key.

Preferably, in the decryption key generating step, the decryption key is generated by carrying out processing in accordance with the predetermined key generation sequence on at least one of a stored key of the information-processing apparatus and a stored key of the recording medium in addition to the second encryption key.

Preferably, the first encryption key is a title-unique key provided for the encrypted data input from an external source, the second encryption key is a title key obtainable from processing to decrypt the title-unique key, and the decryption key for decrypting the encrypted data is generated by carrying out processing in accordance with the predetermined key generation sequence on at least one of a stored key of the information-processing apparatus and a stored key of the recording medium as well as the title key.

Preferably, an information-processing apparatus for executing the information-processing method, comprises: node keys each unique to one of nodes composing a hierarchical tree structure including leaves each associated with one among a plurality of information-processing apparatus different from each other; and leaf keys each unique to one of the information-processing apparatus different from each other, and in the decryption key generating step, the decryption key for decrypting the encrypted data is generated by execution of the steps of: carrying out processing to decrypt an effective key block including node keys each encrypted by using keys including at least one of a node key on the hierarchical tree structure's layer at a lower hierarchical level and a leaf key on the hierarchical tree structure's layer at a lower hierarchical level; and generating the decryption key by carrying out processing in accordance with the predetermined key generation sequence on the key obtained as a result of the processing to decrypt the effective key block and the second encryption key.

Preferably, the encrypted data is pieces of block data, which each comprise packets composing a transport stream, and the decryption key generated on the basis of the second encryption key is a block key for each of the pieces of block data.

Preferably, authenticating of an apparatus, from which encrypted data is received, is performed in an operation to receive the encrypted data, and accepting of the encrypted data is performed on condition that the apparatus transmitting the encrypted data is authenticated successfully.

Preferably, an information-processing apparatus for executing the information-processing method, comprises: node keys each unique to one of nodes composing a hierarchical tree structure including leaves each associated with one among a plurality of information-processing apparatus different from each other; and leaf keys each unique to one of the information-processing apparatus different from each other, processing to decrypt an effective key block including node keys each encrypted by using keys including at least one of a node key on the hierarchical tree structure's layer at a lower hierarchical level and a leaf key on the hierarchical tree structure's layer at a lower hierarchical level is carried out, and the first encryption key is obtained as a result of the processing to decrypt the effective key block.

According to further another aspect of the present invention, there is provided a program to be executed in a computer system for carrying out a cryptographic process on information, comprising a cryptographic-processing step of generating a key different from an input key by carrying out processing in accordance with a predetermined key generation sequence on the input key and of decrypting encrypted data stored on a recording medium by using the generated different key,

wherein the cryptographic-processing step further comprises the steps of:

generating a second encryption key by carrying out processing according to a reversed sequence of at least a portion of the predetermined key generation sequence on a first encryption key provided for the encrypted data input from an external source to be stored onto the recording medium; and
generating a decryption key for decrypting the encrypted data by carrying out processing in accordance with the predetermined key generation sequence on the second encryption key.

It should be noted that the program according to the present invention is a program which can be provided in a computer-readable manner in a computer system which can execute various program codes, for example, by a recording medium including a CD, FD, and MO or a communication medium such as a network. Since such a program is provided in a computer-readable manner, it is possible to realize a process in correspondence with the program in a computer system.

It is to be noted that the technical term 'system', which is used in this specification, mean a logical set configuration comprising a plurality of apparatus, which do not have to be apparatus accommodated in the same cabinet.

The present invention itself will be better understood from a study of the following illustrative description with reference to attached drawings showing preferred embodiments of the invention.

BRIEF DESCRIPTION OF THE DRAWINGS

Fig. 1 is a block diagram showing a first illustrative an information-processing apparatus according to the present invention;
Fig. 2 is a block diagram showing a second illustrative information-processing apparatus according to the present invention;
Figs. 3A and 3B are flowcharts each representing operations to record data carried out by an illustrative information-processing apparatus of the present invention;
Figs. 4A and 4B are flowcharts each representing operations to reproduce data carried out by an illustrative information-processing apparatus of the present invention;
Fig. 5 is an explanatory diagram used for describing a format of data processed by an illustrative information-processing apparatus of the present invention;
Fig. 6 is a block diagram showing the configuration of transport-stream (TS)-processing means employed in an illustrative information-processing apparatus of the present invention;
Figs. 7A through 7C are block diagrams showing the configuration of a transport stream (TS) processed by an illustrative information-processing apparatus of the present invention;
Fig. 8 is a block diagram showing the configuration of TS-processing means employed in an illustrative information-processing apparatus of the present invention;
Fig. 9 is a block diagram showing the configuration of TS-processing means employed in an illustrative information-processing apparatus of the present invention;

Fig. 10 is a diagram showing a typical structure of a block seed added to block data processed by an illustrative information-processing apparatus of the present invention;

Fig. 11 is a diagram showing a tree structure used for explaining encryption processing of a master key, a media key and other keys, which are provided for an illustrative information-processing apparatus of the present invention;

Figs. 12A and 12B are diagrams showing a typical effective key block (EKB) used for distribution of a master key, a media key and other keys to an illustrative information-processing apparatus of the present invention;

Fig. 13 is a diagram showing typical key distribution and a typical key decryption process, which use an EKB of a master key, in an illustrative information-processing apparatus of the present invention;

Fig. 14 is a flowchart representing a key decryption process using an EKB of a master key in an illustrative information-processing apparatus of the present invention;

Fig. 15 is a flowchart representing a process of comparing generations of master keys in an operation to record contents in an illustrative information-processing apparatus the present invention;

Fig. 16 is a first explanatory block diagram used for describing encryption processing carried out in a process to record data in an illustrative information-processing apparatus of the present invention;

Fig. 17 is a second explanatory block diagram used for describing encryption processing carried out in a process to record data in an illustrative information-processing apparatus of the present invention;

Fig. 18 is a flowchart representing a process to record data in an illustrative information-processing apparatus of the present invention;

Fig. 19 is an explanatory diagram used for describing typical generation of a disk-unique key in an illustrative information-processing apparatus of the present invention;

Fig. 20 is a diagram showing the position of an EMI (Encryption Mode Indicator) according to a 5CDTCP (Five Company Digital Transmission Content Protection) standard in a transmitted 1394 packet processed by an illustrative information-processing apparatus of the present invention;

Fig. 21 is a flowchart representing a process to determine whether processing to record contents is to be carried out in a cognizant or non-cognizant mode in an illustrative information-processing apparatus of the present invention;

Fig. 22 is a diagram showing typical processing to generate a title-unique key in a data-recording process carried out in an illustrative information-processing appartus of the present invention;

Fig. 23 is an explanatory diagram used for describing a method of generating a block key in an illustrative information-processing apparatus according to the present invention;

Fig. 24 is a flowchart representing a process of generating a title-unique key in an illustrative information-processing apparatus of the present invention;

Fig. 25 is an explanatory block diagram used for describing a process to decrypt contents data during data reproduction processing carried out in an illustrative information-processing apparatus of the present invention;

Fig. 26 is a flowchart representing a data reproduction process carried out in an illustrative information-processing apparatus of the present invention;

Fig. 27 is a flowchart representing details of a process to form a judgment as to whether or not data is reproducible in data reproduction processing carried out in an illustrative information-processing apparatus of the present invention;

Fig. 28 is a flowchart representing processing to generate a title-unique key in a data reproduction process carried out in an illustrative information-processing apparatus of the present invention;

Fig. 29 is a flowchart representing typical key distribution and a typical key decryption process, which use an EKB of a media key in an illustrative information-processing apparatus of the present invention;

Fig. 30 is a flowchart representing a key decryption process using an EKB of a media key in an illustrative information-processing apparatus of the present invention;

Fig. 31 is a flowchart representing a process to record contents by using a media key in an illustrative information-processing apparatus of the present invention;

Fig. 32 is a first explanatory block diagram showing encryption processing in a process to record data by using a media key in an illustrative information-processing apparatus of the present invention;

Fig. 33 is a second explanatory block diagram showing encryption processing in a process to record data by using a media key in an illustrative information-processing apparatus of the present invention;

Fig. 34 is a flowchart representing a process to record data by using a media key in an illustrative information-processing apparatus of the present invention;

Fig. 35 is an explanatory block diagram used for describing cryptographic processing in a process to reproduce data by using a media key in an illustrative information-processing apparatus of the present invention;

Fig. 36 is a flowchart representing a process to reproduce data by using a media key in an illustrative information-processing apparatus of the present invention;

Fig. 37 is a flowchart representing details a process to form a judgment as to whether or not data is reproducible in data reproduction processing carried out in an illustrative information-processing apparatus of the present invention;

Fig. 38 is an explanatory block diagram showing encryption processing in a process to record data by using an LSI key in an illustrative information-processing apparatus of the present invention;

Fig. 39 is a flowchart representing details of a process to record data by using an LSI key in an illustrative information-processing apparatus of the present invention;

Fig. 40 is an explanatory diagram used for describing a configuration of a process to generate a title-unique key by using an LSI key in an illustrative information-processing apparatus of the present invention;

Fig. 41 is an explanatory block diagram showing cryptographic processing in a process to reproduce data by using an LSI key in an illustrative information-processing apparatus of the present invention;

Fig. 42 is a flowchart representing details of a process to reproduce data by using an LSI key in an illustrative information-processing apparatus according to the present invention;

Figs. 43A and 43B are flowcharts representing copy control processing in a data recording process carried out in an illustrative information-processing apparatus of the present invention;

Figs. 44A and 44B are flowcharts representing copy control processing in a data reproduction process carried out in an illustrative information-processing apparatus of the present invention;

Fig. 45 is an explanatory block diagram used for describing a process carried out by an HDR (Hard Disk Recorder) serving as a data-transmitting apparatus in processing to copy data from the HDR to another information-processing apparatus;

Fig. 46 is a flowchart representing a process carried out by an HDR serving as a data-transmitting apparatus in processing to copy data from the HDR to another information-processing apparatus;

Fig. 47 is an explanatory block diagram used for describing a process carried out by a DVR serving as a data-receiving apparatus in processing to copy data from another information-processing apparatus to the DVR;

Fig. 48 is a flowchart representing a process carried out by a DVR serving as a data-receiving apparatus in processing to copy data to the DVR from another information-processing apparatus;

Fig. 49 is an explanatory diagram showing a mutual authentication process using a MAC value;

Fig. 50 is an explanatory diagram showing a mutual authentication process adopting a public-key cryptographic processing technique;

Fig. 51 is an explanatory diagram used for describing the configuration of processing to generate a title key from a title-unique key;

Figs. 52A and 52B are explanatory diagrams used for describing processes to contract and de-contract data, respectively, of a title-unique key or the like;

Fig. 53 is an explanatory block diagram used for describing a process carried out by a DVR serving as a data-transmitting apparatus in a process to copy data from the DVR to another information-processing apparatus;

Fig. 54 is a flowchart representing a process carried out by a DVR serving as a data-transmitting apparatus in processing to copy data from the DVR to another information-processing apparatus;

Fig. 55 is an explanatory block diagram used for describing a process carried out by an HDR serving as a data-receiving apparatus in processing to copy data from another information-processing apparatus to the HDR;

Fig. 56 is a flowchart representing a process carried out by an HDR serving as a data-receiving apparatus in processing to copy data to the HDR from another information-processing apparatus;

Fig. 57 is an explanatory diagram used for describing the configuration of processing to generate a title key from a title-unique key;

Fig. 58 is an explanatory block diagram used for describing a process carried out by a server in processing to distribute data;

Figs. 59A through 59C are flowcharts representing processes carried out by a server in processing to distribute data;

Fig. 60 is an explanatory block diagram used for describing a process carried out by a DVR serving as a data-receiving apparatus in processing to distribute data;

Figs. 61A and 61B are flowcharts representing processes carried out by a DVR serving as a data-receiving apparatus in processing to distribute data;

Fig. 62 is a diagram representing flowcharts describing processes to transmit and receive a title-unique key by using an EKB in processing to distribute data; and

Fig. 63 is a block diagram showing the configuration of a cryptographic-processing means, which is employed in an information-processing apparatus and a server.

## DETAILED DESCRIPTION OF THE PREFERRED EMBODIMENTS

Some preferred embodiments of the present invention are explained in detail by referring to diagrams. It is to be noted that the embodiments are described in the following order:

1: Overview of the Configuration and Processing of the Information-Processing Apparatus

2: Format of Contents on the Recording Medium

3: Tree Structure for Key Distribution

4: Recording and Reproduction of Contents Based on Cryptographic Processing Using a Master Key

5: Recording and Reproduction of Contents Based on Cryptographic Processing Using a Media Key

6: Recording and Reproduction of Contents Based on Cryptographic Processing Using an LSI Key

7: Copy Control

8: Copying or Storing Process of Contents Requiring No Re-Encryption

8-1: Processing to Copy Contents from an Apparatus to Another

8-2: Processing to Store Distributed Contents

9: Configurations of an Information-Processing Apparatus and a Server

1: Overview of the Configuration and Processing of the Information-Processing Apparatus

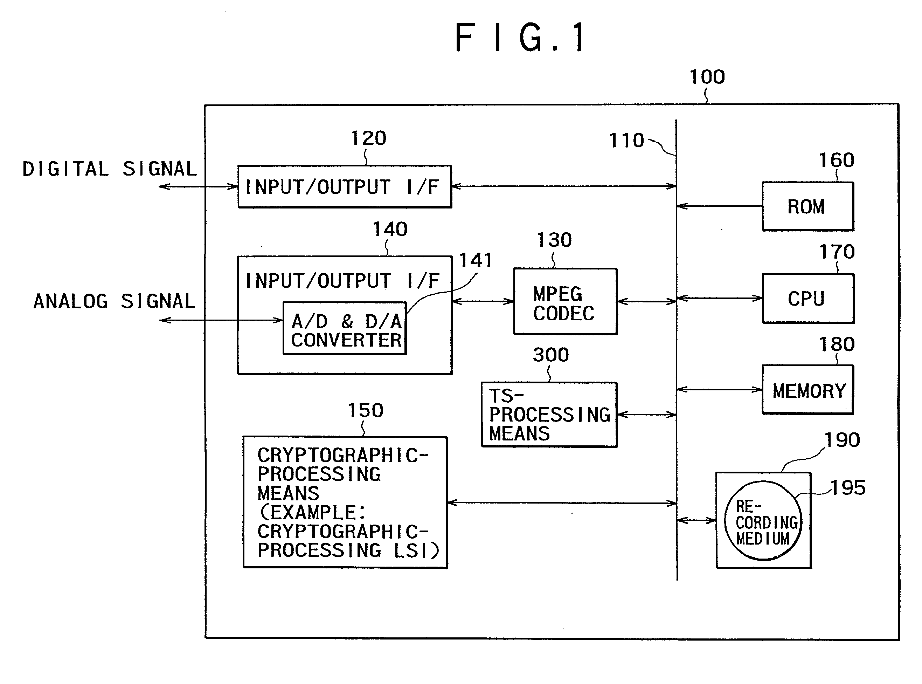

Fig. 1 is a block diagram showing the configuration of an embodiment of a recording & reproduction apparatus 100 which is an example of an information-processing apparatus according to the present invention. The recording & reproduction apparatus 100 is typically a DVR system capable of writing and reading data onto and from a RAM disk mounted on the DVR system. A RAM disk is a disk, which data can be recorded onto and reproduced from. The recording & reproduction apparatus 100 can also be an HDR system capable of writing and reading data onto and from a hard disk mounted on the HDR system. A hard disk is a disk, which data can be recorded onto and reproduced from. That is to say, the recording & reproduction apparatus 100 is an apparatus capable of recording and reproducing digital data onto and from a medium for storing digital data. Examples of such a medium are an optical disk such as a CD, a magnetic disk such as a magneto-optical disk and an HD (hard disk), a magnetic tape and a semiconductor memory such as a RAM.

As shown in the figure, the recording & reproduction apparatus 100 includes an input/output I/F (interface) 120, an MPEG (Moving Picture Expert Group) codec 130, an input/output I/F 140 having an A/D & D/A converter 141, a cryptographic-processing means 150, a ROM (Read-Only Memory) 160, a CPU (Central Processing Unit) 170, a memory 180, a drive 190 for driving a recording medium 195 and a transport-stream-processing means (TS-processing means) 300. The input/output I/F 120, the MPEG codec 130, the input/output I/F 140, the cryptographic-processing means 150, the ROM 160, the CPU 170, the memory 180, the drive 190 and the TS-processing means 300 are connected to each other by a bus 110.

The input/output I/F 120 receives digital signals representing a variety of contents such as a picture, a sound and a program from an external source. The input/output I/F 120 outputs the digital signal received from the external source to the bus 110, and reversely outputs a digital signal received from the bus 110 to an external source. The MPEG codec 130 decodes data, which has completed an MPEG coding process and is received from the bus 110, outputting the decoded data to the input/output I/F 140. Reversely, the MPEG codec 130 carries out an MPEG coding process on data received from the input/output I/F 140 and outputs the coded data to the bus 110. As described above, the input/output I/F 140 has the A/D & D/A converter 141 embedded therein. The input/output I/F 140 receives an analog signal representing contents from an external source, converts the analog signal into a digital signal by carrying out an A/D (analog-to-digital) process in the A/D & D/A converter 141 and outputs the digital signal to the MPEG codec 130. Reversely, the input/output I/F 140 receives a digital signal from the MPEG codec 130, converts the digital signal into an analog signal by carrying out an D/A (digital-to-analog) process in the A/D & D/A converter 141 and outputs the analog signal to an external source.

The cryptographic-processing means 150 is typically a single-chip LSI (Large-Scale Integrated Circuit) for encrypting or decrypting the digital signal as contents received from the bus 110 and outputs the encrypted or decrypted contents back to the bus 110. It is to be noted that the cryptographic-processing means 150 is not limited to a single-chip LSI. That is to say, the cryptographic-processing means 150 can be realized as a combination of pieces of hardware. Alternatively, functions of the cryptographic-processing means 150 can be implemented by execution of software. A configuration of the cryptographic-processing means 150 implemented as a processing means driven by software will be described later.

The ROM 160 is used for storing leaf keys and node keys. A leaf key is a device key intrinsic to a recording & reproduction apparatus or intrinsic to a group including a plurality of recording & reproduction apparatus. A node key is a device key shared by a plurality of recording & reproduction apparatus or shared by a plurality of groups each including a plurality of recording & reproduction apparatus. The CPU 170 executes programs stored in the memory 180 to control components such as the MPEG codec 130 and the cryptographic-processing means 150. The memory 180 is typically a nonvolatile memory, and is used for storing the programs to be executed by the CPU 170 and data required in operations carried out by the CPU 170. The drive 190 drives the recording medium 195, which digital data can be recorded onto and reproduced from, to read out (reproduce) digital data from the recording medium 195 and output the data to the bus 110. Reversely, the drive 190 drives the recording medium 195 to record digital data supplied via the bus 110 onto the recording medium 195. It is to be noted that programs and device keys can also be stored in the ROM 160 and the memory 180 respectively.

The recording medium 195 is a recording medium that can be used for storing digital data. Examples of the recording medium 195 are an optical disk such as a CD and a DVD, a magnetic disk such as a magneto-optical disk and an HD (hard disk), a magnetic tape and a semiconductor memory such as a RAM. In this embodiment, the drive 190 has a structure that can be mounted and dismounted on and from the drive 190. However, the recording medium 195 can also have a structure embedded in the recording & reproduction apparatus 100.

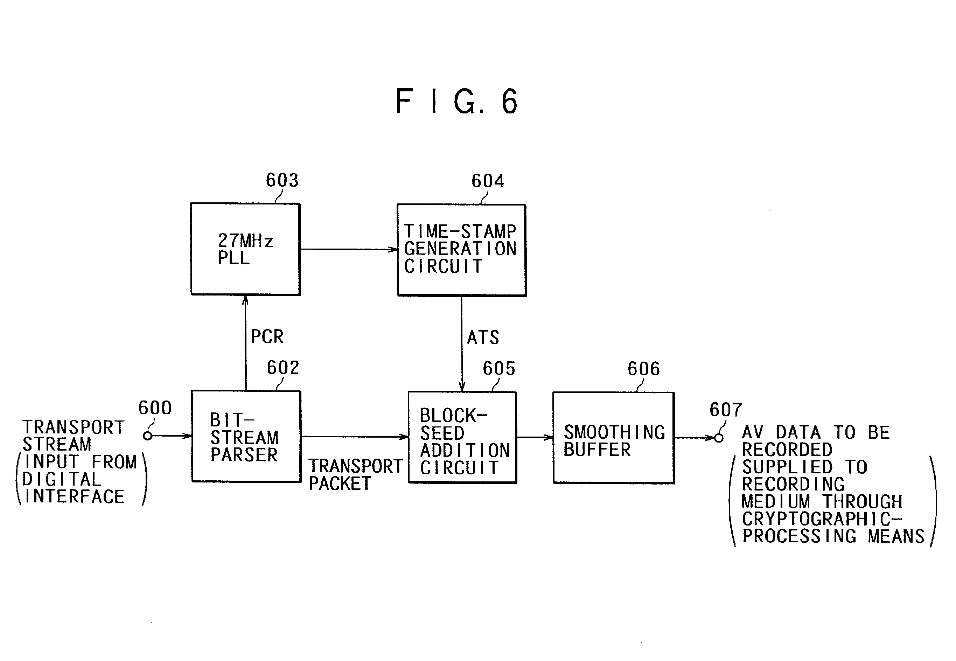

The transport-stream-processing means 300 will be described later in detail by referring to Fig. 6 and subsequent figures. The transport-stream-processing means 300 typically carries out data processing to fetch transport packets of a specific TV program (or contents) from a transport stream including a plurality of multiplexed TV programs, store information on the appearance timings of the fetched transport packets onto the recording medium 195 along with the packets and control appearance timings read out from the recording medium 195 in a reproduction process.

On a transport stream, an ATS (Arrival Time Stamp) is set as information on each of the appearance timings of transport packets composing the transport stream. These timings are determined at a coding time so as not to ruin a T-STD (Transport stream System Target Decoder), which is a virtual decoder prescribed by the MPEG2 systems. In an operation to reproduce the transport stream, appearance timings are controlled by using the ATS added to each of the transport packets. The transport-stream-processing means 300 executes these kinds of control. In an operation to record transport packets onto a recording medium, for example, the packets are recorded as source packets having closed gaps therebetween. By also recording the appearance timings of the transport packets onto the recording medium along with the transport packets, however, the appearance timings can be controlled at a reproduction time. In an operation to record transport packets onto the recording medium 195 such as a DVD, the transport-stream-processing means 300 adds the ATS (Arrival Time Stamp), which each represents an input timing of one of the transport packets, to the transport packets, and stores the ATS along with the transport packets.

The cryptographic-processing means 150 employed in the recording & reproduction apparatus 100 encrypts contents including a transport stream with the aforementioned ATS each added to a transport packet of the transport stream, and stores the encrypted contents onto the recording medium 195. On the contrary, the cryptographic-processing means 150 decrypts encrypted contents stored in the recording medium 195. These encryption and decryption processes will be described later in detail.

The recording medium 195 is used for storing also various kinds of identification data such as a stamper ID, a disk ID, contents IDs and cryptographic-processing keys. The stamper ID is used for identifying a stamper used at the manufacturing time of the disk. The stamper ID is peculiar to the stamper. The disk ID varies from disk to disk. By the same token, the contents ID varies from contents to contents.

The cryptographic-processing means 150 decrypts secret information stored in the recording medium 195 and uses the decrypted secret information to generate a cryptographic-processing key to be applied to operations to record and reproduce contents onto and from the recording medium 195. The secret information is provided in such a way that it can be used only by the cryptographic-processing means 150 to generate a cryptographic-processing key, and the secret information cannot be leaked out.

In order to make the explanation easy to understand, the cryptographic-processing means 150 and the transport-stream-processing means 300 are shown as separated blocks in Fig. 1. Note that it is also possible to provide another configuration in which the functions of the cryptographic-processing means 150 or the transport-stream-processing means 300 are executed by a single LSI or a plurality of LSIs. It is also possible to provide a further configuration in which some of the functions are implemented by a combination of pieces of software or hardware.

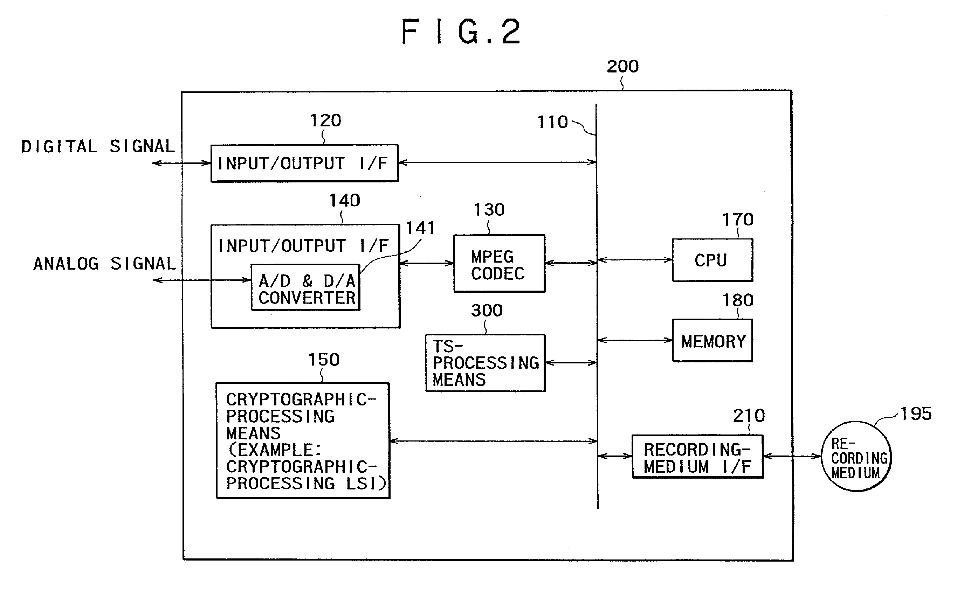

As another example of the recording & reproduction apparatus of the present invention, Fig. 2 shows the configuration of a recording & reproduction apparatus 200 beside the configuration shown in Fig. 1. In the recording & reproduction apparatus 200 shown in Fig. 2, a recording medium 195 can be mounted and dismounted onto and from a recording-medium I/F (interface) 210, which serves as a drive. Data can be read out from and written onto the recording medium 195 even when the recording medium 195 is mounted on another recording & reproduction apparatus.

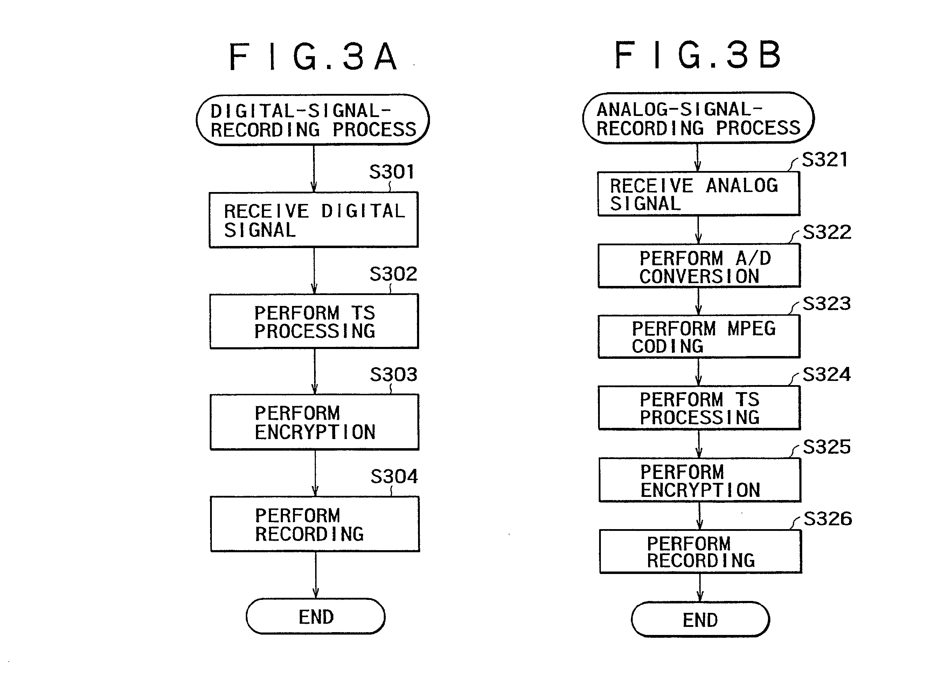

Next, by referring to flowcharts shown in Figs. 3A through 4B, the following description explains processing to record data onto a recording medium 195 mounted on the recording & reproduction apparatus shown in Fig. 1 or 2 and processing to reproduce data from such a recording medium 195. The flowchart shown in Fig. 3A represents the processing to record contents represented by a digital signal received from an external source. As shown in the figure, the flowchart begins with a step S301 at which the input/output I/F 120 receives contents represented by a digital signal supplied to the recording & reproduction apparatus by way of an IEEE (Institute of Electrical and Electronics Engineers) 1394 serial bus or the like, and passes on the contents to the transport-stream-processing means 300 through the bus 110. The contents represented by a digital signal is referred to hereafter as digital contents.

Then, at the next step S302, the transport-stream-processing means 300 generates block data by adding an ATS to each of transport packets composing a transport stream of the digital contents, and supplies the block data to the cryptographic-processing means 150 by way of the bus 110.

Subsequently, at the next step S303, the cryptographic-processing means 150 encrypts the block data of the digital contents to produce encrypted contents, and supplies the encrypted contents to the drive 190 or the recording-medium I/F 210 through the bus 110. Then, at the next step S304, the drive 190 or the recording-medium I/F 210 records the encrypted contents onto the recording medium 195 to end recording processing. It is to be noted that the processing carried out by the cryptographic-processing means 150 to encrypt the block data will be described later.

It is also worth noting that five companies have provided a 5CDTCP (Five Company Digital Transmission Content Protection) as a standard for protection of digital contents transmitted among apparatus connected to each other by the IEEE 1394 serial bus. The 5 companies include Sony Corporation. The 5CDTCP is abbreviated hereafter to a DTCP. In accordance with the DTCP standard, prior to a transmission of copy-prohibited digital contents between a transmitting and receiving apparatus, the transmitting and receiving apparatus carry out mutual authentication to determine whether copy control information for controlling a copy operation can be handled correctly. Then, the transmitting apparatus encrypts the digital contents and transmits the encrypted contents to the receiving apparatus. On the other hand, the receiving apparatus decrypts the encrypted digital contents received from the transmitting apparatus.

In the data transmission and reception based on the DTCP, at the step 301, the input/output I/F 120 employed in the receiving apparatus receives encrypted digital contents from the IEEE 1394 serial bus and decrypts the encrypted digital contents in conformity with the DTCP standard to generate unencrypted data which is output to the cryptographic-processing means 150.

In the processing to encrypt digital contents in conformity with the DTCP standard, a key varying with time is generated and such a time-variable key is used for the encryption. The encrypted digital contents including the key used in the encryption is transmitted to the receiving apparatus by way of the IEEE 1394 serial bus. The receiving apparatus decrypts the encrypted digital contents by using the key included in the encrypted digital contents.

Specifically, in accordance with the DTCP standard, the initial value of a key used in the encryption and a flag showing a timing to modify the key are included in the transmitted encrypted digital contents. The receiving apparatus changes the initial value of the key included in the encrypted digital contents with the timing indicated by the flag included in the encrypted digital contents to generate the key used in the encryption. The receiving apparatus then decrypts the encrypted digital contents. Thus, one may think of an equivalent case in which the encrypted digital contents include the key used in the encryption instead of the initial value. In the following description, such an equivalent case is assumed. An informational version of the DTCP standard can be obtained from a web page identified by a URL (Uniform Resource Locator) of http://www.dtcp.com.

Next, by referring to the flowchart shown in Fig. 3B, the following description explains processing to record contents, which are represented by an analog signal received from an external source, onto the recording medium 195. Such contents are referred to as analog contents. As shown in the figure, the flowchart begins with step S321 at which the input/output I/F 140 receives the analog contents. Then, at the next step S322, the embedded A/D & D/A converter 141 carries out A/D conversion processing to convert the analog contents into digital contents, which are contents represented by a digital signal.

Subsequently, at the next step S323, the digital contents are supplied to the MPEG codec 130 for carrying out an MPEG encoding process on the digital contents. The MPEG encoding process is an encoding process by MPEG compression. The encoded digital contents are then supplied to the cryptographic-processing means 150 by way of the bus 110.

At the subsequent steps S324, S325 and S326, the same processing as that of the steps S302, S303 and S304 of the flowchart shown in Fig. 3A is carried out. Specifically, the transport-stream-processing means 300 adds an ATS to each transport packet of the digital contents and the cryptographic-processing means 150 encrypts the digital contents to generate encrypted digital contents which are recorded onto the recording medium 195 prior to the end of the recording process.

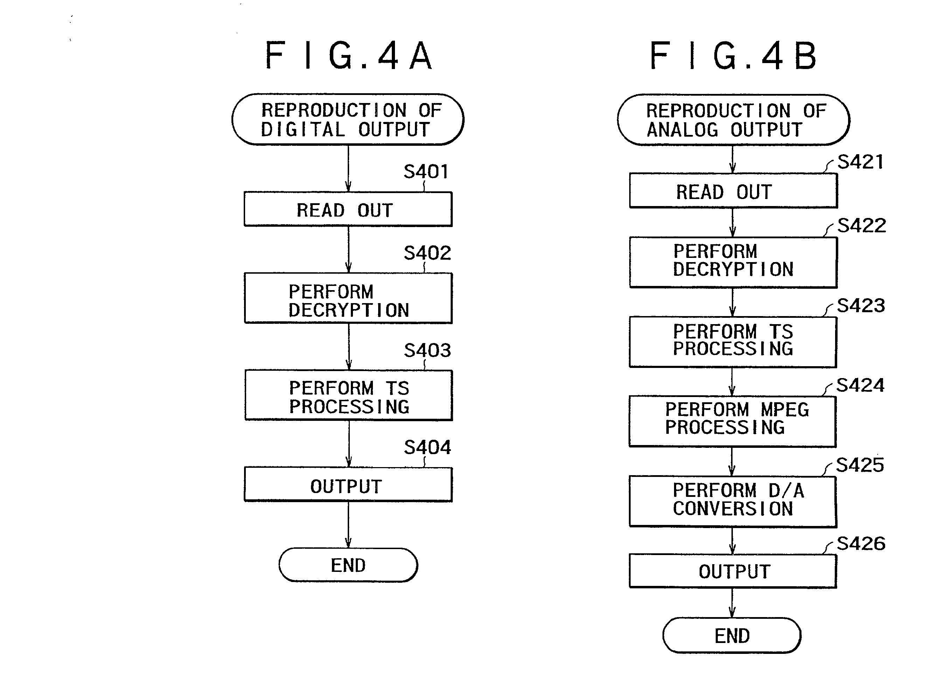

Next, by referring to the flowcharts shown in Figs. 4A and 4B, the following description explains processing to reproduce contents stored in the recording medium 195 and output the reproduced contents as digital or analog contents. The flowchart shown in Fig. 4A represents the processing to reproduce contents and output the reproduced content as digital contents. As shown in the figure, the flowchart begins with step S401 at which the drive 190 or the recording-medium I/F 210 reads out encrypted contents from the recording medium 195 and outputs the contents to the cryptographic-processing means 150 by way of the bus 110.

Then, at the next step S402, the cryptographic-processing means 150 decrypts the encrypted contents received from the drive 190 or the recording-medium I/F 210 and outputs the result of the decryption to the transport-stream-processing means 300 by way of the bus 110.

Subsequently, at the next step S403, the transport-stream-processing means 300 recognizes an output timing included in an ATS added to each of transport packets composing the transport stream of the contents and executes control based on the ATS to supply the digital contents to the input/output I/F 120 by way of the bus 110. Then, at the next step S404, the input/output I/F 120 passes on the digital contents received from the transport-stream-processing means 300 to an external destination before ending the reproduction processing. It is to be noted that the processing carried out by the transport-stream-processing means 300 and the processing carried out by the cryptographic-processing means 150 to decrypt the digital contents will be described later.

It is also worth noting that, if the input/output I/F 120 outputs the digital contents to an external destination by way of an IEEE 1394 serial bus at the step S404, the recording & reproduction apparatus and the partner apparatus at the external destination authenticate each other in conformity with the DTCP standard. Then, the digital contents are encrypted before being transmitted.

Next, by referring to the flowchart shown in Fig. 4B, the following description explains processing to reproduce contents stored in the recording medium 195 and output the reproduced contents as analog contents.

Pieces of processing carried out at steps S421, S422 and S423 are the same as those of respectively the steps S401, S402 and S403 of the flowchart shown in Fig. 4A. At the step S423, decrypted digital contents obtained in the cryptographic-processing means 150 is supplied to the MPEG codec 130 through the bus 110 after being subjected to the transport-stream processing in the transport-stream-processing means 300.

Then, at the next step S424, the MPEG codec 130 carries out an MPEG decoding process on the digital contents to decompress the contents. The MPEG codec 130 supplies the digital contents decompressed at the step S424 to the input/output I/F 140. At the next step S425, the A/D & D/A converter 141 embedded in the input/output I/F 140 carries out a D/A conversion process to convert the decompressed digital contents obtained as a result of the MPEG decoding process carried out at the step S424 by the MPEG codec 130 into analog contents. Then, at the next step S426, the input/output I/F 140 outputs the analog contents to an external destination before ending the reproduction processing.

2: Format of Contents on the Recording Medium

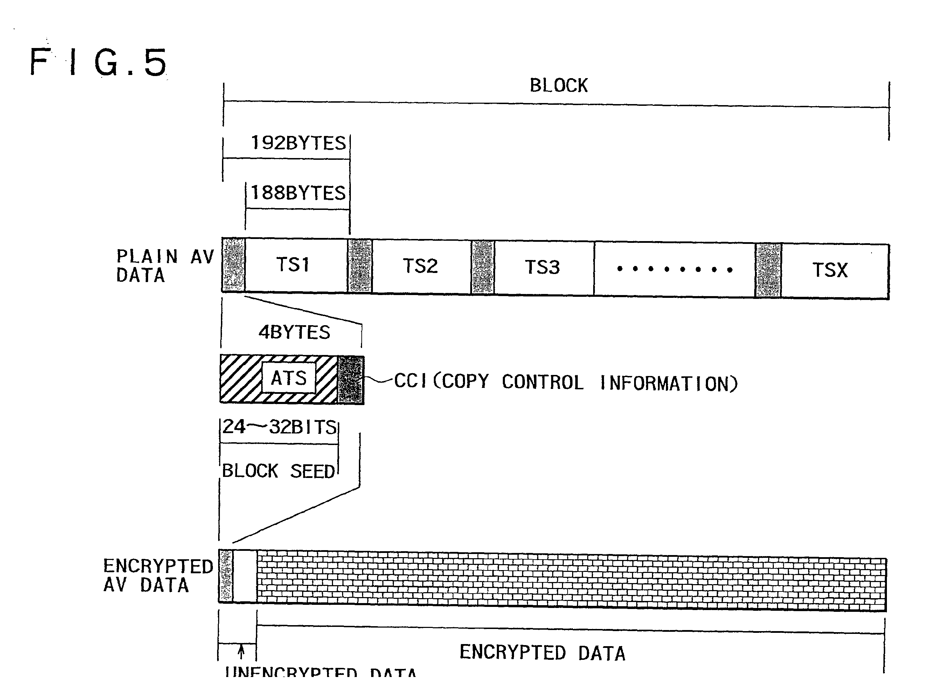

By referring to Fig. 5, the following description explains by way of example the format of data recorded on a recording medium in accordance with an aspect of the present invention. An example of the data is data stored in a recording medium employed in a DVR system. Smallest units in which data is written onto a recording medium are each referred to as a block. A block has a size of 192 * X bytes where X is typically 32.

In an embodiment of the present invention, an ATS is added to each MPEG2 TS (Transport Stream) packet having a size of 188 bytes to form a piece of data with a size of 192 bytes. X pieces of such data are collected to create a block. An ATS is information on an arrival time. The ATS has a length in the range 24 to 32 bits. As described earlier, the ATS is an abbreviation of the Arrival Time Stamp. The ATS exhibits randomness according to arrival times of packets. A block (or sector) on a recording medium is used for storing a data block including X pieces of TS (Transport Stream) packets each including an additional ATS. A transport stream includes blocks, which are each composed of TS packets. In an embodiment of the present invention, an ATS added to the first TS packet of each block is used for generating a block key for the block including the first TS packet. A block key is used for encrypting data stored in a sector for the block (or sector), to which the block key is assigned.

Since an encryption block key is generated for a block by using an ATS exhibiting randomness, the generated block key is peculiar to the block. Each block is encrypted by using the peculiar block key generated for the block. In addition, since an encryption block key is generated for a block by using an ATS included in the block, no area on the recording medium is required specially for storing encryption keys for blocks so that a main data area on the recording medium can be utilized effectively. Furthermore, in operations to record and reproduce data, it is no longer necessary to make accesses to areas other than the main data area so that the operations can be carried out with a high degree of efficiency.

It is to be noted that a block seed shown in Fig. 5 is the information added to each TS packet. The additional information includes an ATS. The block seed may also include CCI (Copy Control Information). In the case of such a block seed, a block key is generated for a block by using the ATS and the CCI that are included in the block seed added to the first TS packet of the block.

It is worth noting that CCI (Copy Control Information) included in a block seed is CCI advocated by the 5CDTCP (Digital Transmission Content Protection) system proposed jointly by the 5 companies mentioned earlier. The CCI, details of which will be described later, reflects one of 2 types of information, namely, an EMI (Encryption Mode Indicator) and embedded CCI embedded in contents, to which a format allocating a place for transmission of copy control information in advance is applicable.

It is to be noted that, in an operation to store contents onto a recording medium such as a DVD in accordance with an embodiment of the present invention, most of the data of the contents are encrypted. As shown at the bottom diagram of Fig. 5, however, m bytes at the beginning of each block of contents, where m is typically 8 or 16, are not encrypted but recorded as unencrypted data as it is. However, the rest starting with the (m+1)th byte is encrypted. The value of m is set at a multiple of 8 because the block is encrypted in 8-byte units imposing a restriction on the segmentation of data subjected to encryption. It is worth noting that, if the block can be encrypted in 1-byte units in place of 8-byte units, the value of m can be set typically at 4. In this case, the first 4 bytes composing the seed block of each block is not encrypted while the rest starting with the 5th byte is encrypted.

Next, functions of the ATS are described in detail. As described earlier, the ATS is an arrival time stamp added to each of transport packets composing a transport stream. The ATS is used for recording the appearance timing of a transport packet to which the ATS is added.

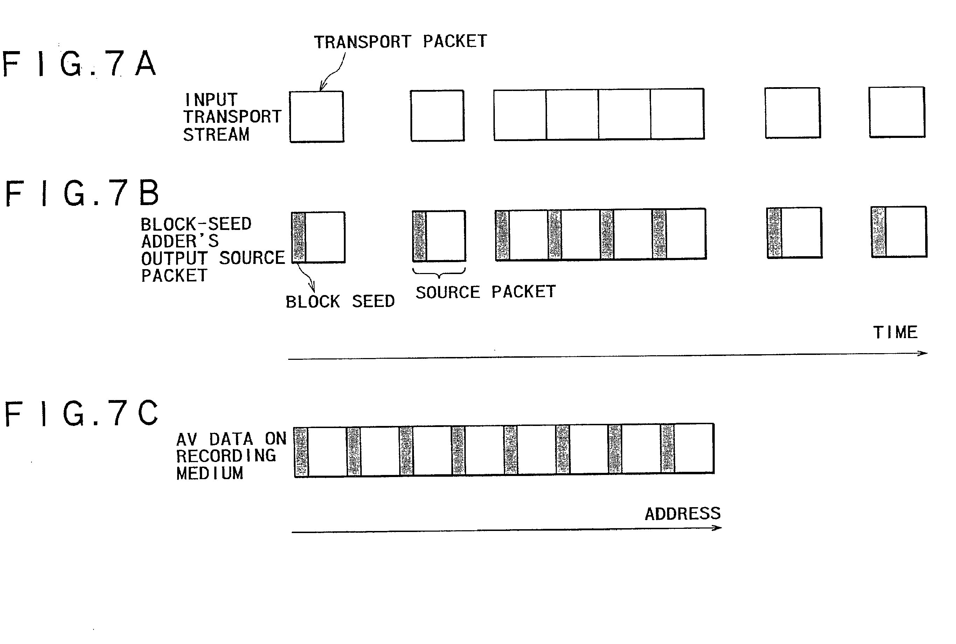

Assume for example that one or more TV programs (contents) are fetched from a transport stream including a plurality of multiplexed TV programs (contents). Transport packets composing the transport stream from which the packets are fetched appear at irregular intervals as shown in Fig. 7A. Appearance timings of the transport packets composing the transport stream each have a significant meaning. These timings are determined at an encoding time so as not to ruin a T-STD (Transport stream System Target Decoder), which is a virtual decoder prescribed by the MPEG2 systems (or ISO/IEC 13818-1).

In an operation to reproduce the transport stream, appearance timings are controlled by using the ATS added to the transport packets composing the transport stream. It is therefore necessary to save input timings of transport packets when the transport packets are recorded onto a recording medium. When transport packets are recorded onto a recording medium such as a DVD, for example, an ATS showing the input timing of a transport packet is added to each of the transport packets and recorded along with the transport packet, to which the ATS is added.

Fig. 6 is a block diagram showing the recording configuration of the transport-stream-processing means 300. The figure is referred to in explanation of processing carried out by the transport-stream-processing means 300 in an operation to record a transport stream received through a digital interface onto a recording medium such as a DVD serving as storage media. A terminal 600 receives the transport stream as digital data originated from a digital broadcasting or the like. The transport stream is supplied to the terminal 600 directly from the input/output I/F 120 or the MPEG codec 130 by way of the input/output I/F 140 as shown in Fig. 1 or 2.

The transport stream is passed on to a bit-stream parser 602. The bit-stream parser 602 detects a PCR (Program Clock Reference) packet from the input transport stream. A PCR packet is a packet including an encoded PCR prescribed by the MPEG2 systems. PCR packets are encoded at intervals each not exceeding 100 msec. A PCR expresses a time, at which a transport packet arrives at the reception side, at a precision of 27 MHz.

A 27-MHz PLL 603 locks a 27-MHz clock signal of the recording & reproduction apparatus to the PCRs of the transport stream. A time-stamp generation circuit 604 generates a time stamp based on a count value obtained as a result of counting the number of clock pulses with a frequency of 27 MHz. A block-seed addition circuit 605 adds a time stamp to a transport packet as an ATS. A time stamp added to a transport packet shows a time at which the first byte of the transport packet is supplied to a smoothing buffer 606.

A transport packet and an ATS added to the packet are temporarily stored in the smoothing buffer 606 before being supplied to the cryptographic-processing means 150 by way of a terminal 607. Then, after completing encryption processing to be described later, the transport packet and the added ATS are supplied by way of the drive 190 shown in Fig. 1 and the recording-medium I/F 210 shown in Fig. 2 to the recording medium 195 serving as a storage medium for storing the transport packet and the ATS.

Figs. 7A through 7C are diagrams of typical processing to record an input transport stream onto a recording medium. In particular, Fig. 7A shows input of the transport packets composing specific contents, which are a TV program in this example. The horizontal axis is a time axis representing times along the transport stream. In this example, the input transport packets appear with irregular timings as shown in Fig. 7A.

Fig. 7B is a diagram showing the output of the block-seed addition circuit 605. The block-seed addition circuit 605 adds a block seed to each of the transport packets. A block seed includes an ATS showing the time-axis appearance time of the transport packet on the transport stream. Fig. 7C is a diagram showing source packets, which are each a transport packet recorded on the recording medium. The source packets are recorded on the recording medium by packing the packets to close a gap between every 2 consecutive packets so as to utilize the recording area of the recording medium with a high degree of efficiency.

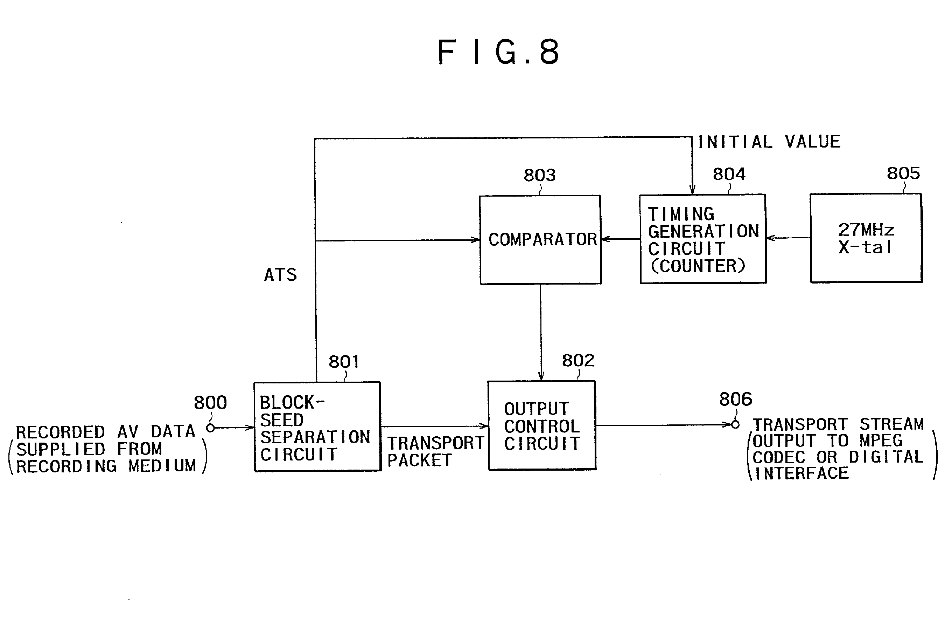

Fig. 8 is a block diagram showing a reproduction configuration of the transport-stream-processing means 300. The figure is referred to in explanation of processing carried out by the transport-stream-processing means 300 in an operation to reproduce a transport stream from the recording medium 195. A transport packet including an additional ATS is received by a terminal 800 and passed on to a block-seed separation circuit 801 for separating the ATS from the transport packet. The transport packet and the additional ATS have been subjected to decryption processing to be described later. A timing generation circuit 804 measures the length of a time on the basis of a clock counter value, which is obtained by counting the number of clock pulses generated by a 27-MHz clock generator 805 employed in the player.

It is to be noted that, at the start of reproduction processing, the timing generation circuit 804 is reset at an initial value equal to the first ATS. A comparator 803 compares an ATS with the present time input from the timing generation circuit 804. As the present time input from the timing generation circuit 804 becomes equal to the ATS, an output control circuit 802 outputs a transport packet including the ATS to the MPEG codec 130 or the input/output I/F 120.

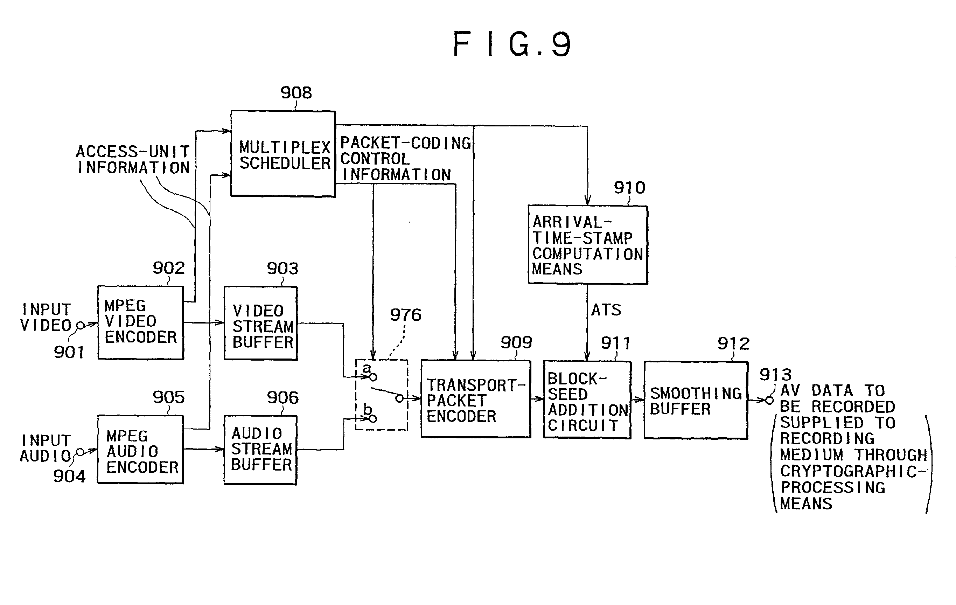

Fig. 9 is a diagram showing a configuration to implement an MPEG encoding process to encode an input AV signal in the MPEG codec 130 employed in the recording & reproduction apparatus 100 and processing to encode a transport stream in the transport-stream-processing means 300 employed in the recording & reproduction apparatus 100. That is to say, Fig. 9 is a block diagram showing joint processing configurations of both the MPEG codec 130 and the transport-stream-processing means 300, which are employed in the recording & reproduction apparatus 100 shown in Fig. 1 or the recording & reproduction apparatus 200 shown in Fig. 2. A video signal input to a terminal 901 is passed on to an MPEG video encoder 902.

The MPEG video encoder 902 encodes the input video signal to generate an MPEG video stream, and outputs the stream to a video-stream buffer 903. In addition, the MPEG video encoder 902 supplies information on an access unit of the MPEG video stream to a multiplex scheduler 908. A picture is taken as the access unit of the MPEG video stream. The information on the access unit includes the type of the picture, the number of encoded bits and a decode time stamp. The type of a picture can be I, P or B. The decode time stamp is information prescribed by the MPEG2 specifications.

On the other hand, an audio signal input to a terminal 904 is passed on to an MPEG audio encoder 905. The MPEG audio encoder 905 encodes the input audio signal to generate an MPEG audio stream, and outputs the stream to an audio-stream buffer 906. In addition, the MPEG audio encoder 905 supplies information on an access unit of the MPEG audio stream to the multiplex scheduler 908. An audio frame is taken as the access unit of the MPEG audio stream. The information on the access unit includes the number of encoded bits in each audio frame and a decode time stamp.

As described above, the multiplex scheduler 908 thus receives both the information on a video access unit and the information on an audio access unit. The multiplex scheduler 908 controls a method of encoding the video and audio streams to generate transport packets on the basis of the information on a video access unit and the information on an audio access unit. The multiplex scheduler 908 has an internal clock for generating reference times having a precision of 27 MHz and determines information on packet-encoding control for transport packets so as to satisfy the T-STD, which is a virtual decoder model prescribed in the MPEG2 systems. The information on packet-encoding control is the type and length of a packetized stream.

If the stream type included in the information on packet-encoding control indicates that the stream is to be packetized into video packets, a switch 976 is set on an 'a' side to read out video data having a payload data length specified in the information on packet-encoding control from the video-stream buffer 903 and forward the video data to a transport-packet encoder 909.

If the stream type included in the information on packet-encoding control indicates that the stream is to be packetized into audio packets, on the other hand, the switch 976 is set on a 'b' side to read out audio data having a payload data length specified in the information on packet-encoding control from the audio stream buffer 906 and forward the audio data to the transport-packet encoder 909.

If the stream type included in the information on packet-encoding control indicates that a PCR packet is to be generated, the transport-packet encoder 909 fetches a PCR input from the multiplex scheduler 908 and outputs a PCR packet. If the stream type included in the information on packet-encoding control indicates that no packet is to be generated, no information other than the information on packet-encoding control is supplied to the transport-packet encoder 909.

If the stream type included in the information on packet-encoding control indicates that no packet is to be generated, the transport-packet encoder 909 generates no transport packets. Otherwise, the transport-packet encoder 909 generates and outputs transport packets determined by the stream type included in the information on packet-encoding control. Thus, the transport-packet encoder 909 generates and outputs transport packets intermittently. An ATS (Arrival Time Stamp) computation means 910 computes an ATS showing a time, at which the first byte of a transport packet arrives at the reception side, on the basis of a PCR received from the multiplex scheduler 908.

Since the PCR received from the multiplex scheduler 908 shows a time, at which the tenth byte of a transport packet arrives at the reception side as prescribed by the MPEG2 specifications, the ATS is the arrival time of a byte preceding the PCR by 10 bytes.

A block-seed addition circuit 911 adds an ATS to a transport packet generated by the transport-packet encoder 909. The block-seed addition circuit 911 outputs the transport packet including the additional ATS to the cryptographic-processing means 150 by way of a smoothing buffer 912 and a terminal 913. As will be described later, the cryptographic-processing means 150 encrypts the transport packet including the additional ATS and stores the encrypted transport packet including the additional ATS onto a storage medium, that is, the recording medium 195.

Before being encrypted by the cryptographic-processing means 150 prior to a recording process onto the recording medium 195, the transport packets each including an additional ATS are packed to close a gap between every two consecutive packets as shown in Fig. 7C. Thus, the transport packets each including an additional ATS are recorded onto the recording medium 195 in the packed state shown in Fig. 7C. Even if a gap between every two consecutive transport packets is closed in the packed state, by referring to the ATS, times at which the transport packets arrive at the reception side can be controlled.

By the way, the size of each ATS is by no means fixed at 32 bits. For example, the size can also be set at a value in the range of 24 to 31 bits. A period of time required by a timer to measure the length of an ATS increases in proportion to the number of bits included in the ATS. In the case of a binary counter with a precision of 27 MHz, the period of time required by the timer to measure the length of a 24-bit ATS is about 0.6 seconds. For an ordinary transport stream, this period of time is sufficiently long. This is because a gap between 2 consecutive packets of a transport stream is prescribed by the MPEG2 specifications to be a maximum of 0.1 seconds. Nevertheless, the length of the ATS can be set at a bit count greater than 24 bits in order to provide an adequate margin.

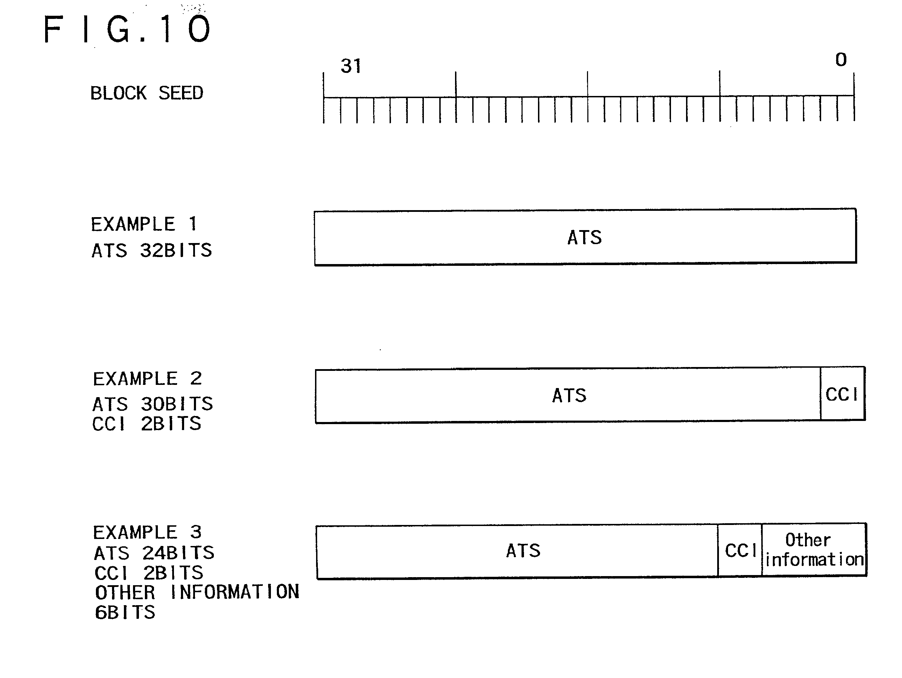

An ATS is part of a block seed, which normally has a length of 32 bits. Thus, by setting the length of the ATS at different values as described above, it is possible to provide some configurations of the block seed. Fig. 10 is a diagram showing typical configurations of the block seed. In example 1 shown in Fig. 10, the ATS occupies all the 32 bits of the block seed. In example 2 shown in Fig. 10, the ATS occupies only 30 bits of the block seed and the remaining 2 bits are allocated to copy control information (CCI). The copy control information is information indicating status of copy control of data to which the block seed including this copy control information is added. Commonly known examples of the copy control information are an SCMS (Serial Copy Management System) and a CGMS (Copy Generation Management System). These pieces of copy control information may each indicate whether the data to which the block seed including this copy control information is added is copy-free data, one-generation-copy-allowed data or copy-prohibited data. Copy-free data is data that can be copied any number of times. One-generation-copy-allowed data is data that can be copied only once. Copy-prohibited data is data that cannot be copied at all.

In example 3 shown in Fig. 10, the ATS occupies only 24 bits of the block seed and 2 of the remaining bits are allocated to copy control information (CCI) whereas 6 of the remaining bits are allocated to other information. The other information includes information indicating whether a macrovision is on or off. The macrovision is a copy control mechanism of analog video data for a case in which analog data is output.

3: Tree Structure for Key Distribution

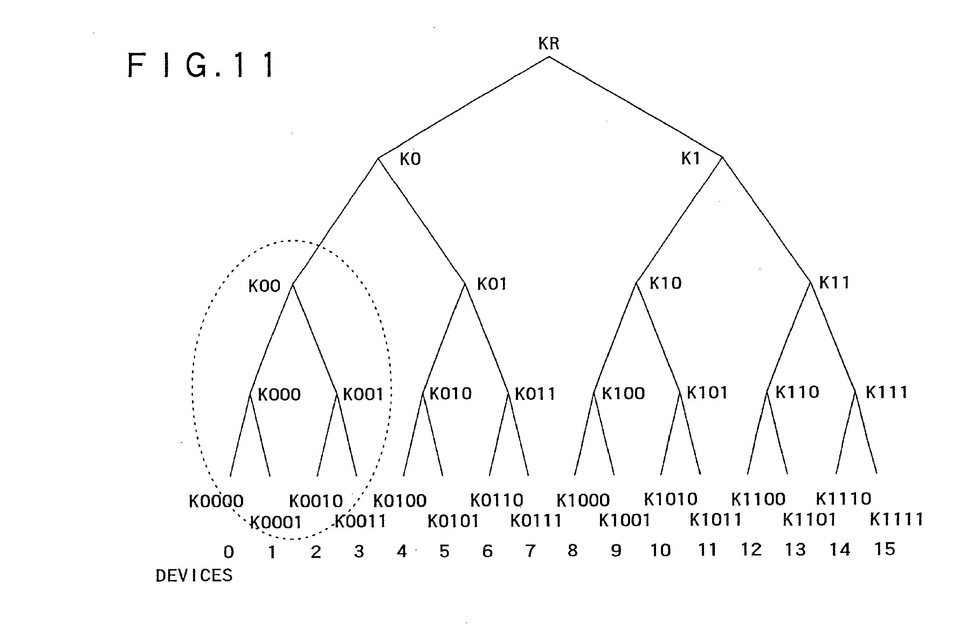

The following description explains a configuration for distributing a master key from apparatus such as the recording & reproduction apparatus shown in Fig. 1 or 2 to other apparatus. The master key is required in operations carried out by the recording & reproduction apparatus to record data onto a recording medium and reproduce data from a recording medium. Fig. 11 is a diagram showing the configuration for distributing keys by recording & reproduction apparatus in a recording system adopting a distribution technique provided by this configuration. Numbers 0 to 15 at the bottom of the configuration shown in Fig. 11 are each assigned to a recording & reproduction apparatus. That is to say, each leaf of a tree structure shown in Fig. 11 represents a recording & reproduction apparatus, which is also referred to as a device in the following description.

The tree shown in Fig. 11 has a root, leaves and nodes between the root and the leaves. Initially, a root key, leave keys and node keys are pre-assigned to the root, leaves and nodes respectively. When shipped from a factory, each of devices 0 to 15 has its own leaf key assigned to the leaf representing the device and node keys assigned to nodes between the leaf and the root. The root key is a node key that is special in that it is assigned to the root of the tree. The node keys and the leaf key, which are assigned to a device, are stored in the device. Leaf keys K0000 to K1111 at the bottom of the tree are assigned to devices 0 to 15 respectively. The node keys are root key KR assigned to the root at the top of the tree and node keys assigned to nodes starting with nodes right below the root and ending with nodes right above the leaves. To be more specific, the node keys are KR, K0, K1, K00, K01, ..., and K111.

As shown in the tree structure of Fig. 11, device 0 has leaf key K0000 and node keys K000, K00, K0 and KR. Device 5 has keys K0101, K010, K01, K0 and KR. Device 15 has keys K1111, K111, K11, K1 and KR. The tree structure shown in Fig. 11 has only 16 leaves assigned to devices 0 to 15 respectively and has only 4 layers including a leaf layer at the bottom of the tree and a root layer at the top of the tree. In addition, the tree structure consists of left and right portions symmetrical with respect to the vertical center line passing through the root. It is to be noted, however, that the tree may have more leaves each assigned to a device and an unsymmetrical structure in which each vertical hierarchical link connecting a leaf to the root may include a layer count different from layer counts of other vertical hierarchical links.

The devices each associated with a leaf of the tree structure shown in Fig. 11 can be different recording & reproduction apparatus having any one of a variety of recording media such as a DVD, a CD, an MD, an HD and a memory stick (a trademark). In addition, the recording & reproduction apparatus may be assumed to render application services different from each other. The key distribution structure shown in Fig. 11 is suitable for a configuration including devices, which coexist to render different application services.

In a system where a variety of devices and a variety of applications coexist, for example, devices 0, 1, 2 and 3 form a group sharing the same recording medium in a portion of the tree structure enclosed by a dashed line in Fig. 11. Typically, contents common to the devices in the group enclosed by the dashed line is encrypted and transmitted to the devices in batch processing carried out by a provider. A master key common to the devices is also transmitted to the devices. On the contrary, payment data of contents fee is encrypted and transmitted by each of the devices to a business enterprise such as a contents provider or a settlement-processing institution. To the business enterprise such as a contents provider or a settlement-processing institution exchanging data with the devices 0, 1, 2 and 3 in the portion of the tree structure enclosed by a dashed line in Fig. 11, the devices appear as a group to which data can be transmitted in batch processing. A plurality of such groups may exist in the tree structure shown in Fig. 11.

It is to be noted that node and leaf keys can also be managed by a key management center in an integrated manner. As an alternative, the keys can also be managed in group units by a contents provider or a settlement-processing institution exchanging data with each group. In the event of a key leak, for example, the node and leaf keys are updated and processing to update the keys is carried out typically by a key management center, a contents provider or a settlement-processing institution.

As is obvious from Fig. 11, the 4 devices, namely, devices 0, 1, 2 and 3 included in a group in the tree structure, share node keys K00, K0 and KR as keys common to the devices. By adoption of a configuration to allowing devices 0, 1, 2 and 3 to share the node keys, for example, a master key can be presented to only these devices. For instance, by setting the shared common key K00 itself as a master key, the master key common to devices 0, 1, 2 and 3 can be presented only to the devices without the need for a transmission of a new key. As an alternative, as will be described later, new master key Kmaster is encrypted by using node key K00 to result in encrypted value Enc (K00, Kmaster), which is then distributed to devices 0, 1, 2 and 3 by way of a network or by using a recording medium for storing the encrypted value as distribution media. By distributing encrypted value Enc (K00, Kmaster) to devices 0, 1, 2 and 3, only the devices are capable of decrypting encrypted value Enc (K00, Kmaster) by using common node key K00, which is owned only by the devices, to obtain new master key Kmaster. It is to be noted that notation Enc (Ka, Kb) is an encrypted value obtained as a result of encryption of Kb by using Ka.

In addition, assume that an exposure of keys K0011, K001, K00, K0 and KR, which are assigned to device 3, to a hacker as a result of an analysis of the keys by the hacker is detected at a time t. In this case, in order to protect data exchanged with the system or, particularly, the group including devices 0, 1, 2 and 3 thereafter, it is necessary to detach device 3 from the system. In addition, it is also necessary to update node keys K001, K00, K0 and KR to new keys K(t)001, K(t)00, K(t)0 and K(t)R respectively and distribute the new keys to devices 0, 1 and 2. It is to be noted that notation K(t)aaa denotes key Kaaa's updated version of a t generation.

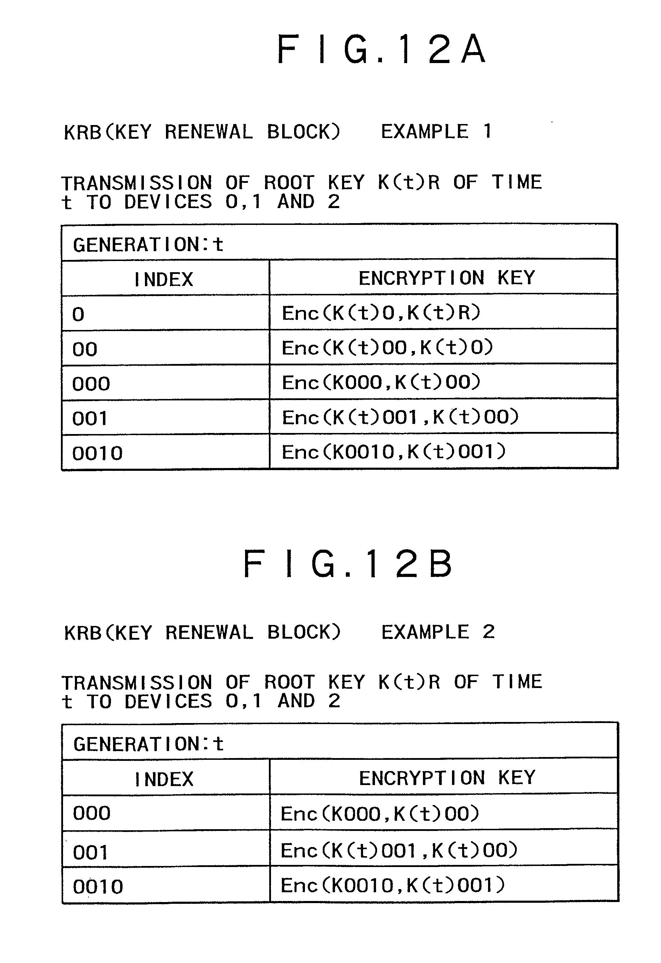

Next, processing to distribute updated keys is explained. Encrypted values of updated keys are distributed to devices 0, 1, and 2 by way of a network or by using a recording medium for storing the encrypted values as distribution media. The encrypted values are put in a table as a block data referred to as an EKB (Enabling Key Block) like one shown in Fig. 12A.

The EKB (Enabling Key Block) shown in Fig. 12A is block data including encrypted value of every updated node key that can be decrypted to obtain the updated key only by a device requiring the updated key. The typical EKBs shown in Fig. 12 are each block data created for the purpose of distributing updated node keys of the t generation to devices 0, 1 and 2 corresponding to leaves of the key structure shown in Fig. 11. As is obvious from the key structure shown in Fig. 11, devices 0 and 1 require updated node keys K(t)00, K(t)0 and K(t)R whereas device 2 requires updated node keys K(t)001, K(t)00, K(t)0 and K(t)R.

As shown in Fig. 12A, the EKB contains a plurality of encrypted values of updated keys. The encrypted value at the bottom of the EKB is Enc (K0010, K(t)001), which has been obtained as a result of encryption of updated node key K(t)001 by using leaf key K0010 owned by device 2. Thus, device 2 is capable of decrypting encrypted value Enc (K0010, K(t)001) by using leaf key K0010 owned by the device itself to obtain updated node key K(t)001. Furthermore, by using updated node key K(t)001 obtained as a result of the decryption, it is possible to decrypt encrypted value Enc (K(t)001, K(t)00) on the second line from the bottom of the EKB shown in Fig. 12A to give updated node key K(t)00. Then, by using updated node key K(t)00 obtained as a result of the decryption, it is possible to decrypt encrypted value Enc (K(t)00, K(t)0) on the second line from the top of the EKB shown in Fig. 12A to give updated node key K(t)0. Finally, by using updated node key K(t)0 obtained as a result of the decryption, it is possible to decrypt encrypted value Enc (K(t)0, K(t)R) on the top line of the EKB shown in Fig. 12A to give updated root key K(t)R.

On the other hand, node key K000 owned by devices 0 and 1 is not updated. As described above, devices 0 and 1 require only updated node keys K(t)00, K(t)0 and K(t)R. Thus, the decryption process starts with the third line from the top of the EKB shown in Fig. 12A. Devices 0 and 1 decrypt encrypted value Enc (K000, K(t)00) by using node key K000 owned by the devices themselves to obtain updated node key K(t)00. Then, by using updated node key K(t)00 obtained as a result of the decryption, it is possible to decrypt encrypted value Enc (K(t)00, K(t)0) on the second line from the top of the EKB shown in Fig. 12A to give updated node key K(t)0. Finally, by using updated node key K(t)0 obtained as a result of the decryption, it is possible to decrypt encrypted value Enc (K(t)0, K(t)R) on the top line of the EKB shown in Fig. 12A to give updated root key K(t)R.

As described above, devices 0, 1 and 2 are capable of obtaining updated root key K(t)R. It is to be noted that indexes of the EKB shown in Fig. 12A are each an absolute number of a leaf or node key used as a decryption key for decrypting an encrypted value on the same line of the EKB as the index.

Fig. 12B is a diagram showing an EKB (Enabling Key Block) distributed to devices 0, 1 and 2 for a case in which only node key K00 needs to be updated so that only updated node key K(t)00 needs to be distributed to devices 0, 1 and 2. That is to say, node key K0 on the upper layer of the tree structure shown in Fig. 11 and root key KR on the top of the tree structure do not need to be updated.

The EKB shown in Fig. 12B is used for example in a case wherein a new master key common to devices included in a group is distributed to the devices. To put it concretely, devices 0, 1 and 2 in the group sharing a recording medium and using common master key Kmaster requires new common master key K(t)master. In this case, node key K00 is updated to generate updated node key K(t)00 to be used as a key for encrypting new common master key K(t)master into encrypted value Enc (K(t)00, K(t)master). Then, encrypted value Enc (K(t)00, K(t)master) and the EKB shown in Fig. 12B are distributed to devices 0, 1 and 2. The EKB does not allow a device in other groups such as device 4 to decrypt the encrypted values included in the EKB.

Devices 0, 1 and 2 process the EKB to obtain updated node key K(t)00. Then, updated node key K(t)00 is used as a decryption key for decrypting encrypted value Enc (K(t)00, K(t)master), which was received along with the EKB, to get new common master key K(t)master of the t generation.

Distribution of the master key by using the EKB

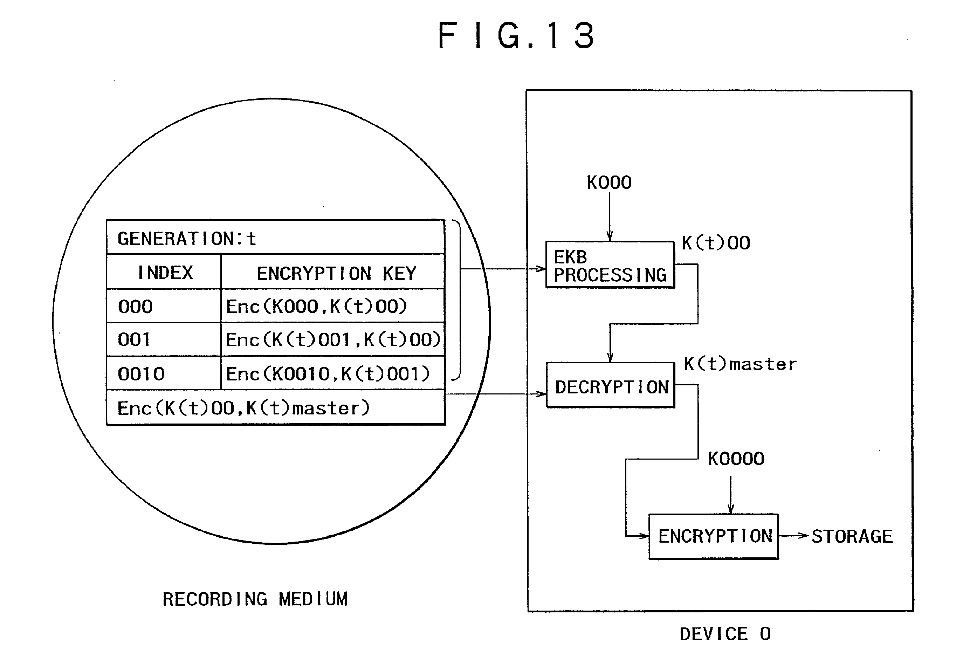

Fig. 13 is a diagram showing processing to get new common master key K(t)master of the t generation. To be more specific, the diagram shows processing carried out by device 0, which has received a recording medium for storing encrypted value Enc (K(t)00, K(t)master) and the EKB shown in Fig. 12B. As described above, encrypted value Enc (K(t)00, K(t)master) is obtained as a result of encryption of new common master key K(t)master by using updated node key K(t)00.

As shown in Fig. 13, device 0 decrypts encrypted value Enc (K0000, K(t)00) on the top line of the t-generation EKB stored in the recording medium by using its own node key K000 to get updated node key K(t)00 by carrying out EKB processing similar to what is described above. Then, updated node key K(t)00 is used as a decryption key for decrypting encrypted value Enc (K(t)00, K(t)master), which is also stored in the recording medium, to get new master key K(t)master.

New master key K(t)master is encrypted by using its own leaf key K0000 and stored in a memory for later use. It is to be noted that, if device 0 is capable of storing new master key K(t)master in its own memory with a high degree of security, on the other hand, it is not necessary to encrypt new master key K(t)master using leaf key K0000.

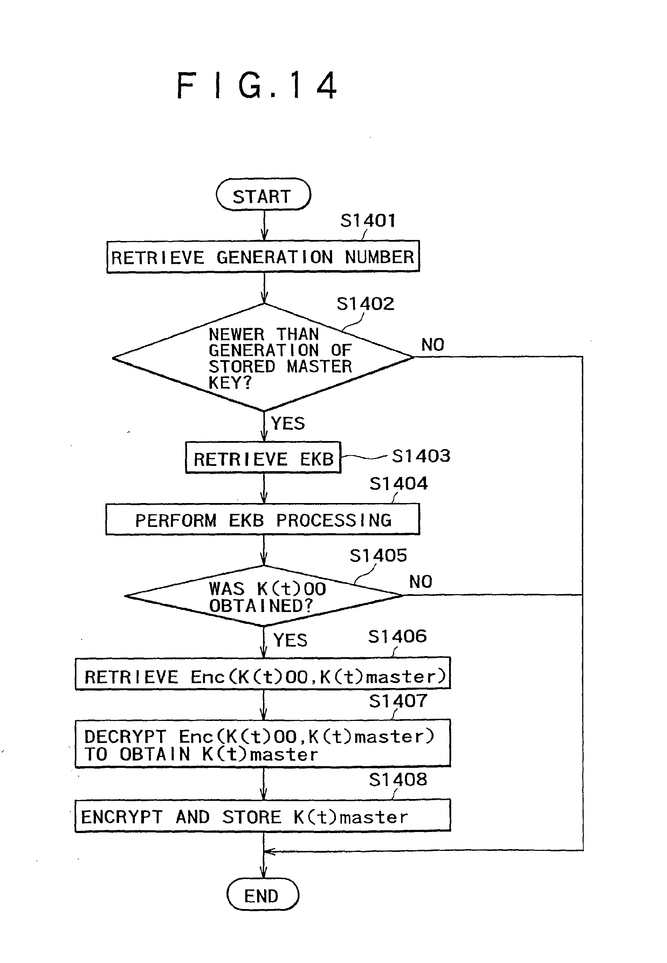

The processing to obtain this updated master key is explained by referring to a flowchart shown in Fig. 14. It is to be noted that, when a recording & reproduction apparatus is shipped from a factory, most recent master key K(c)master is granted to the apparatus and stored with a high degree of security in a memory owned by the apparatus. To put it concretely, the master key is encrypted by using a leaf key owned by the recording & reproduction apparatus and the encrypted master key is stored in the memory.

The flowchart begins with a step S1401 when a recording medium containing updated master key K(n)master and an EKB is mounted on the recording & reproduction apparatus. At this step, the recording & reproduction apparatus reads out a generation number (n) of master key K(n)master recorded on the recording medium. The generation number n is also called pre-recording generation information or generation #n. The generation number n of master key K(n)master has been recorded on the recording medium in advance. Then, the recording & reproduction apparatus also reads out an encrypted master key C held by itself. Subsequently, at the next step S1402, the generation number c of this encrypted master key C is compared with the value n of the pre-recording generation information (generation #n) to form a judgment as to whether or not the generation number c is newer than the value n.

If the result of the judgment formed at the step S1402 indicates that the value n of the pre-recording generation information (generation #n) recorded in the recording medium is not later (not newer) than the generation number c of this encrypted master key C stored in the memory, that is, the generation number c of this encrypted master key C is the same as or later than the value n of the pre-recording generation information (generation #n), steps S1403 to S1408 are skipped to end the processing to obtain this updated master key. That is to say, in this case, since it is not necessary to update master key K(c)master stored in the memory of the recording & reproduction apparatus, that is, the encrypted master key C, the processing to update this master key is not carried out.

If the result of the judgment formed at the step S1402 indicates that the value n of the pre-recording generation information (generation #n) recorded in the recording medium is later (newer) than the number c of this encrypted master key C stored in the memory, that is, the number c of this encrypted master key C is the same as or older than the value n of the pre-recording generation information (generation #n), on the other hand, the flow of the program goes on to the step S1403 at which the recording & reproduction apparatus reads out the EKB (Enabling Key Block) from the recording medium.

Then, at the next step S1404, the recording & reproduction apparatus finds node key K(t)00 by using the EKB read out at the step S1403, a leaf key and node keys. Node key K(t)00 is a key generated for the t generation shown in Fig. 13 and assigned to node 00. The t generation corresponds to the value n of the pre-recording generation information (generation #n). If the recording & reproduction apparatus is device 0 shown in Fig. 11, the leaf key is key K0000 and the node keys are K000, K00 and so on. The leaf key and the node keys are stored in the memory employed in the recording & reproduction apparatus itself.

Subsequently, the flow of the program goes on to the next step S1405 to form a judgment as to whether or not the node key K(t)00 was obtained successfully at the step S1404. If the node key K(t)00 has not been obtained successfully, it indicates that the recording & reproduction apparatus has been revoked from the tree structure at a time t corresponding to the t generation. In this case, the steps S1406 to S1408 are skipped to end the processing to obtain this updated master key.

If node key K(t)00 was obtained successfully, on the other hand, the flow of the program goes on to a step S1406 at which encrypted value Enc(K(t)00, K(t) master) is read out from the recording medium. As described earlier, encrypted value Enc(K(t)00, K(t)master) is a value obtained as a result of encryption of t-generation master key K(t)master by using t-generation node key K(t)00. Then, at the next step S1407, encrypted value Enc(K(t)00, K(t)master) is decrypted by using node key K(t)00 to result in master key K(t)master.

Subsequently, at the next step S1408, master key K(t)master is encrypted by using the leaf key owned by the recording & reproduction apparatus itself and stored in a memory to end the processing to update the master key. If the recording & reproduction apparatus is device 0 shown in Fig. 11, the leaf key is K0000.

By the way, a master key is used by being sequentially updated from generation 0 to subsequent generations. However, it is desirable to provide a configuration in which a master key of a particular generation can be found from a master key of a generation newer than the particular generation. To put it in detail, the recording & reproduction apparatus is provided with a unidirectional function f. A master key of a particular generation is found from a master key of a generation newer than the particular generation by applying the unidirectional function f as many times as a numerical difference between the particular generation and the newer generation.

To put it concretely, assume that the generation of master key MK stored in the memory employed in the recording & reproduction apparatus is (i+1) and master key MK of generation (i-1) is required for reproducing certain data. This is because master key MK of generation (i-1) was used for recording the data. In this case, master key K(i-1)master is found by the recording & reproduction apparatus by applying the unidirectional function f 2 times as follows:

$$K(i-1)master = f (f (K(i+1)master))$$

If the generation of master key MK stored in the memory employed in the recording & reproduction apparatus is (i+1) and master key MK of generation (i-2) is required for reproducing certain data, master key K(i-2)master is found by the recording & reproduction apparatus by applying the unidirectional function f 3 times as follows:

$$K(i-1)master = f (f (f (K(i+1)master)))$$

The unidirectional function is typically a hash function. Examples of the hash function include MD5 (Message Digest 5) and SHA-1 (Secure Hash Algorithm-1). A key generation engine for generating keys uses any of these unidirectional functions in advance to generate master keys of generations preceding the generation of its own. The master keys of generations preceding the generation of its own are master key K(0) master, master key K(1) master, master key K(2) master, ..., and master key K(N) master. To put it concretely, first of all, the key generation engine sets master key K(N)master of the N-th generation. Then, the unidirectional function is applied to master key K(N)master to find master key K(N-1)master of the (N-1)th generation as follows:

$$K(N-1)master = f (K(N)master)$$

Subsequently, the unidirectional function is sequentially applied to find master key K(m-1)master as follows:

$$K(m-1)master = f(K(m)master)$$

where m = N-1 to 1.

Master keys K(m+1)master generated above are then used one after another, starting with master key K(0)master of the earliest generation. It is to be noted that any unidirectional function for finding a master key of a particular generation from a master key of a generation newer than the particular generation is set in the recording & reproduction apparatus.

In addition, to implement a unidirectional function, typically, a public-key encryption technology can also be adopted. In this case, the key generation engine has a private key of the public-key encryption technique and gives a public key for the private key to all apparatus in advance. Then, the key generation engine sets K(0) master, which is a master key of the 0th generation. The key generation engine uses the master key of the 0th generation as a start key. To put it in detail, when it is necessary to use master key K(i)master of the i-th generation, the key generation engine generates master key K(i)master of the i-th generation by conversion of master key K(i-1)master of the (i-1)th generation preceding the i-th generation by 1 generation by using the private key where i = 1, 2 and so on. Thus, it is not necessary for the key generation engine to generate the N-th-generation master key by using the unidirectional function in advance where N = 1, 2 and so on. In addition, in accordance with this method, theoretically, it is possible to generate master keys of unlimited generations. It is to be noted that, if a recording & reproduction apparatus has a master key of a particular generation, the apparatus is capable of obtaining a master key of a generation preceding the particular generation by conversion of the master key of the particular generation by using the public key.

4: Recording and Reproduction of Contents Based on Cryptographic Processing Using a Master Key

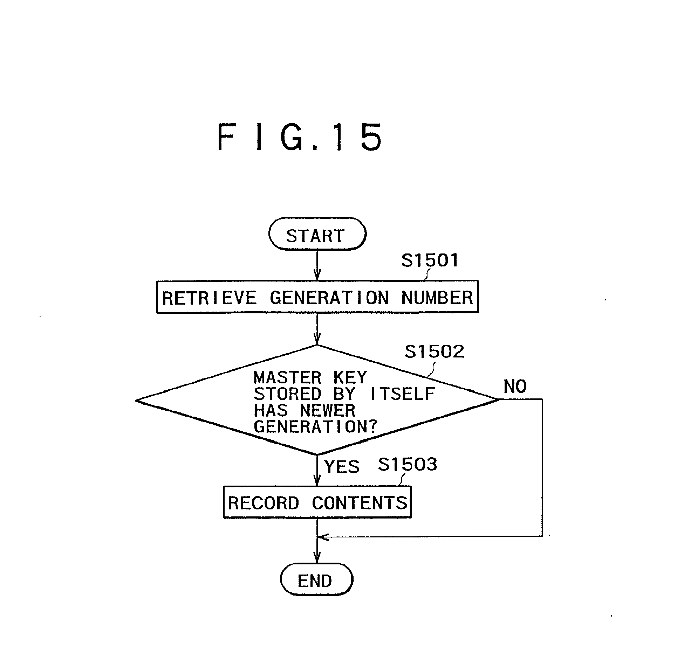

The following description explains recording and reproduction processing of contents, which are based on cryptographic processing using a master key. Processing carried out by the recording & reproduction apparatus is explained by referring to a flowchart shown in Fig. 15. In the processing, the recording & reproduction apparatus records contents onto its own recording medium. Data of the contents has been encrypted and is distributed by a contents provider to the other recording & reproduction apparatus by way of a network or by using a recording medium.

As shown in the figure, the flowchart begins with a step S1501 at which the recording & reproduction apparatus reads out generation #n of the pre-recording generation information from the recording medium and acquires generation c of encrypted master key C recorded on its own memory. Then, at the next step S1502, generation #n of the pre-recording generation information is compared with generation c of encrypted master key C to form a judgment as to whether generation #n of the pre-recording generation information is earlier or later than generation c of encrypted master key C.

If the outcome of the judgment formed at the step S1502 indicates that generation c of encrypted master key C recorded on the memory of the recording & reproduction apparatus is not later than generation #n of the pre-recording generation information, that is, if the outcome indicates that generation c of encrypted master key C is older than generation #n of the pre-recording generation information, the processing to record the contents data is not carried out by skipping a step S1503.

If the outcome of the judgment formed at the step S1502 indicates that generation c of encrypted master key C recorded on the memory of the recording & reproduction apparatus is later than generation #n of the pre-recording generation information, that is, if the outcome indicates that generation c of encrypted master key C is the same as or newer than generation #n of the pre-recording generation information, on the other hand, the flow of the program goes on to the step S1503 at which the processing to record the contents data is carried out.

The following description explains encryption of contents data by using a master key of a managed generation and an operation to record the encrypted data of contents onto the recording medium of the recording & reproduction apparatus. The data of contents is a transport stream explained earlier. Before being recorded onto the recording medium, the data of the contents is encrypted by using block keys generated on the basis of information using the master key of a managed generation.

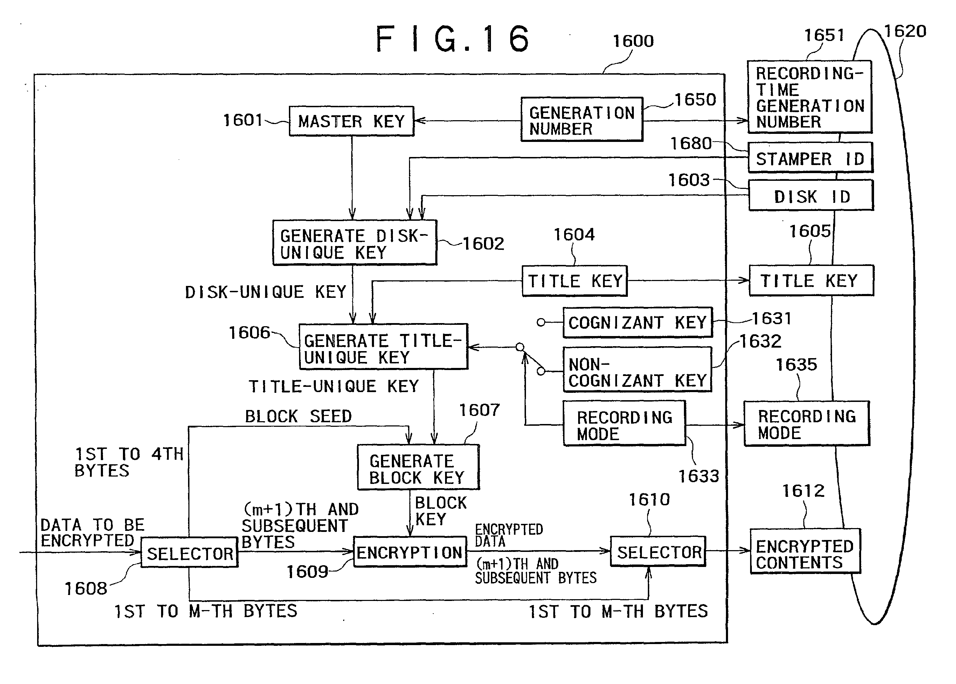

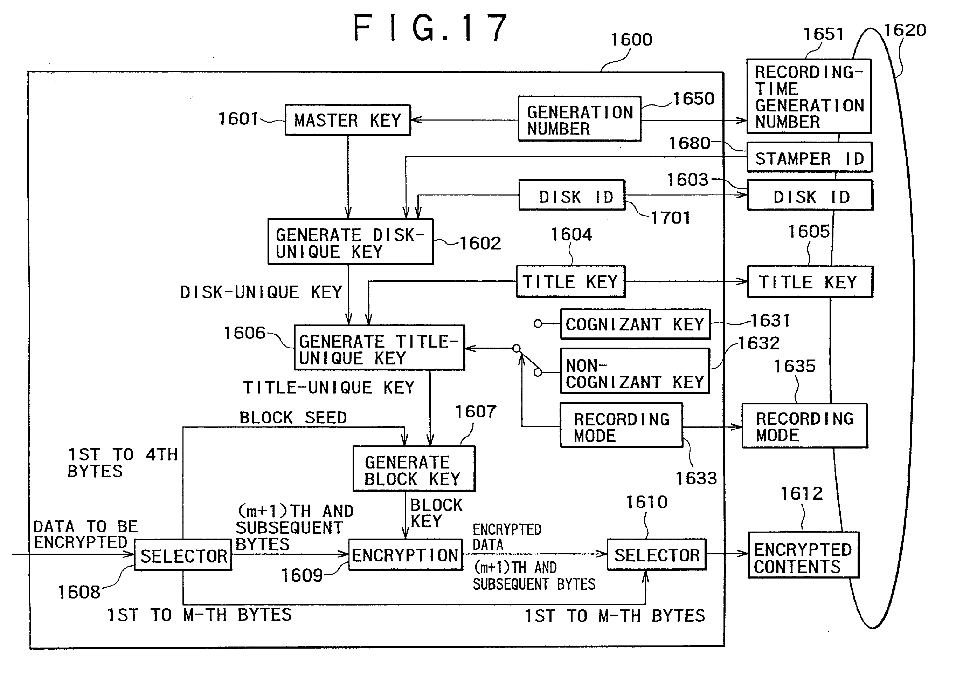

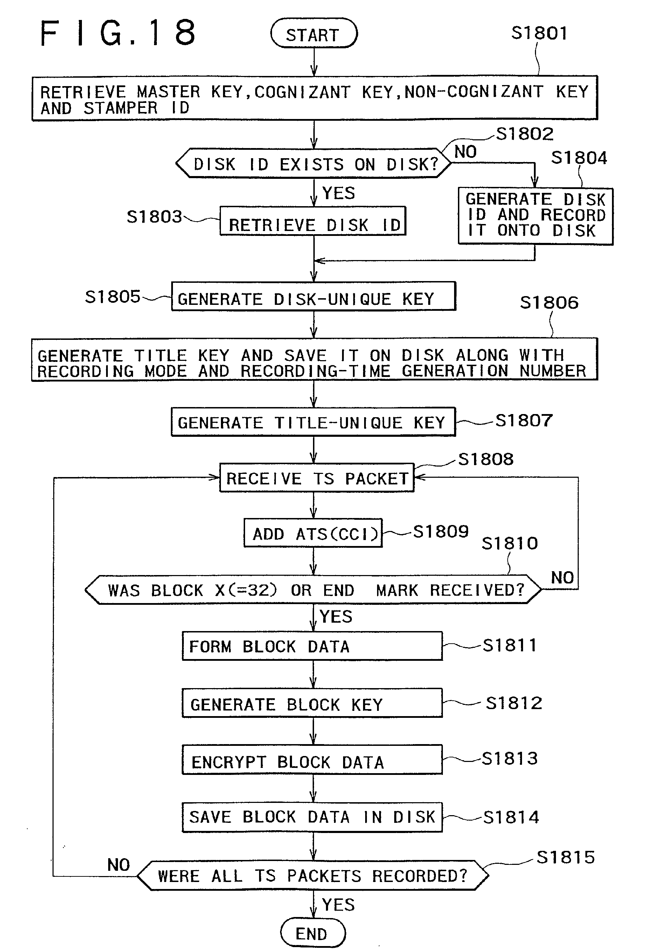

The processing is described by referring to block diagrams of Figs. 16 and 17 and a flowchart shown in Fig. 18. In the explanation, an optical disk is used as a recording medium. In this embodiment, in order to avoid a bit-by-bit copy operation of data on the recording medium, a disk ID is reflected on a key for encrypting the contents data to be recorded onto the recording medium. Used for identifying the recording medium, the disk ID is identification information peculiar to the recording medium.

By referring to the processing blocks of Figs. 16 and 17, the following description explains processing carried out by the cryptographic processing means 150 to encrypt contents data to be recorded onto the recording medium.

The recording & reproduction apparatus 1600 reads out a master key 1601, a cognizant key 1631 and a non-cognizant key 1632 from the memory 180 employed in the apparatus 1600 itself. For the position of the memory 180 in the configuration, refer to Fig. 1 or 2. The cognizant key 1631 and the non-cognizant key 1632 will be described later.

A master key 1601 is a private key, which has been stored in the memory 180 employed in the apparatus 1600 in the processing represented by the flowchart shown in Fig. 14. As described earlier, the master key 1601 is subjected to key management, and a generation number is assigned to the master key 1601. The master key 1601 can be a key common to a plurality of recording & reproduction apparatus. For example, the master key 1601 is a key common to devices pertaining to a group enclosed by a dashed line shown in Fig. 11. A device ID is an identifier assigned to the recording & reproduction apparatus 1600. An example of the device ID is a manufacturing number recorded in the recording & reproduction apparatus 1600 in advance. The device ID may be disclosed. The cognizant key 1631 and the non-cognizant key 1632 are keys for their respective recording modes, namely, a cognizant mode and a non-cognizant mode respectively. The cognizant key 1631 and the non-cognizant key 1632 are also keys common to a plurality of recording & reproduction apparatus. The cognizant key 1631 and the non-cognizant key 1632 are also stored in the memory 180 employed in the apparatus 1600 in advance.

The recording & reproduction apparatus 1600 examines the optical disk serving as the recording medium 1620 to determine whether the disk ID 1603 has been stored in the recording medium 1620. If the disk ID 1603 has been stored in the recording medium 1620, the recording & reproduction apparatus 1600 reads out the disk ID 1603 from the recording medium 1620 in processing of a configuration shown in Fig. 16. If the disk ID 1603 has not been stored on the recording medium 1620, on the other hand, the cryptographic processing means 150 employed in the recording & reproduction apparatus 1600 generates a disk ID 1701 and stores the disk ID 1701 onto the recording medium 1620 in processing of a configuration shown in Fig. 17. The recording & reproduction apparatus 1600 generates the disk ID 1701 at random or by adoption of a random-number generation technique, for example determined in advance. Since the disk ID 1603 is peculiar to the recording medium 1620, the disk ID 1603 may be recorded in a read-in area of the recording medium 1620.

Reference numeral 1602 denotes processing carried out by the recording & reproduction apparatus 1600 to generate a disk-unique key by using a master key, a stamper ID 1680 and the disk ID 1603. The stamper ID 1680 is secret information recorded on the recording medium 1620. The stamper ID 1680 can only be read out from the recording medium 1620 by using a special reading technique.

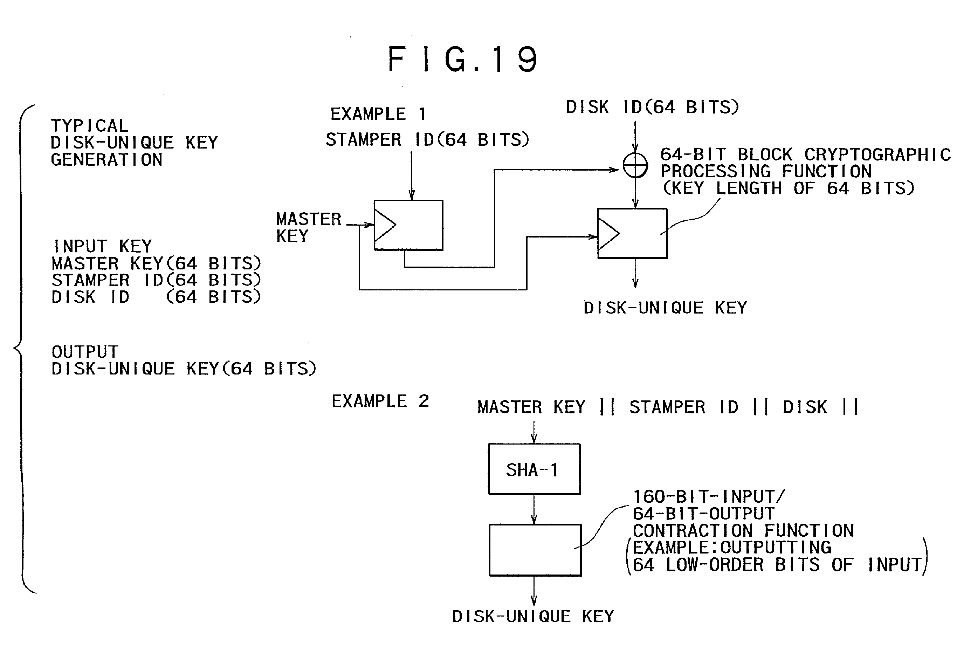

As a concrete technique to generate a disk-unique key by using a master key, the stamper ID 1680 serving as secret information and the disk ID 1603, it is possible to adopt a first or second typical method shown in Fig. 19. In accordance with the first typical method, a hash function serves as a block cryptographic processing function for inputting a master key, a stamper ID and a disk ID to produce a disk-unique key. In accordance with the second typical method, on the other hand, hash function SHA-1 prescribed by FIPS 180-1 specifications is supplied with data obtained as a result of bit concatenation of a master key, a stamper ID and a disk ID, producing output data. Only bits required for a disk-unique key are then extracted from 160 bits of the output data.

As described before, the stamper ID 1680 is highly confidential information recorded on the disk 1620 in advance. In order to protect the confidentiality, an encryption means carries out operations involving the stamper ID 1680 such as processing to read out the stamper ID 1680 from the disk 1620 and processing to generate a disk-unique key from the stamper ID 1680 read out from the disk 1620. That is to say, the secret information read out from the disk 1620 is protected in the encryption means with a high degree of security.

As described above, in accordance with an embodiment of the present invention, only an encryption unit employed by an authorized apparatus is capable of generating an encryption key to be used for encryption of contents under secured protection. Implemented typically as an LSI, the encryption unit generates an encryption key, the confidentiality of which is highly protected. As a result, it is possible to effectively avoid illegal processing to reproduce contents.

Reference numeral 1604 denotes processing carried out by the cryptographic processing means 150 employed in the recording & reproduction apparatus 1600 to generate a title key and record the key onto the recording medium 1620. A title key is a unique key that varies from recording to recording. For the position of the cryptographic processing means 150 in the recording & reproduction apparatus 1600, refer to Fig. 1 or 2. The cryptographic processing means 150 generates a title key at random or by adoption of a random-number generation technique determined in advance.

Reference numeral 1633 denotes processing to set a flag for indicating whether a recording mode 1635 adopted in a recording process is a cognizant mode or a non-cognizant mode. The recording mode 1635 is stored onto the recording medium 1620.

The cognizant mode and the non-cognizant mode are explained as follows.

A contents provider sets a condition for an operation to copy provided contents in advance. It is thus necessary to correctly inform an apparatus, which receives the contents, of the condition even if the apparatus is connected to the contents provider by a network. In the 5CDTCP (Digital Transmission Content Protection) system proposed jointly by the 5 companies, this problem is solved by adoption of a method using CCI (Copy Control Information). The method using CCI (Copy Control Information) prescribes 2 types of propagation technique in dependence of the capability of the recipient apparatus.

In accordance with one of the 2 types of propagation technique using an EMI (Encryption Mode Indicator), there is provided a mechanism in which CCI (Copy Control Information) is transmitted by using 2 high-order bits of Sy bits included in a packet header. In this way, the recipient apparatus is capable of making an access to the CCI with ease and, at the same time, since the value of the CCI affects a key used for encrypting the contents, the CCI can be transmitted with a high degree of security.

The EMI is used to indicate an encryption mode of the packet and a generation mode of a contents encryption and decryption key. An EMI placed in the header of each IEEE 1394 packet allows the recipient apparatus to identify an encryption mode of the contents with ease without, for example, fetching embedded CCI to be described later from the MPEG transport stream.

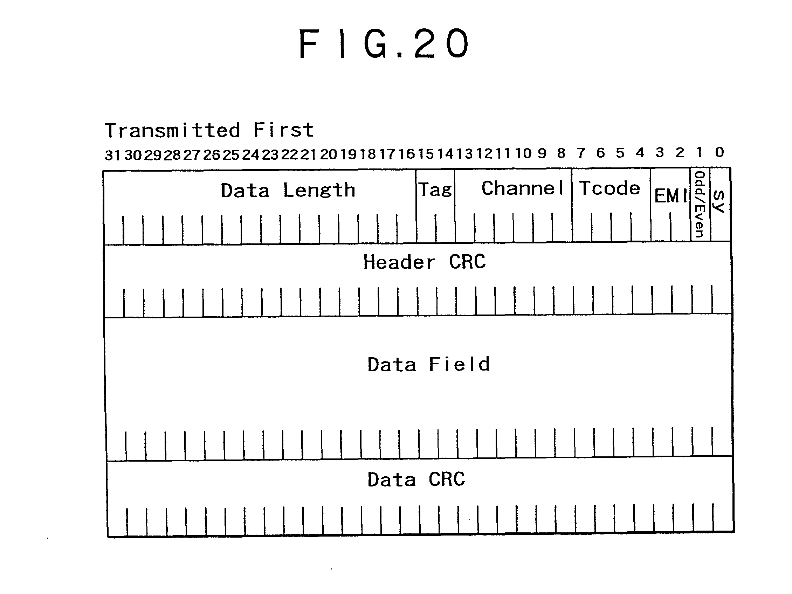

Fig. 20 is a diagram showing the format of an IEEE 1394 packet. A data field is used for storing a variety of contents such as musical data and picture data. An EMI (Encryption Mode Indicator) serving as CCI (Copy Control Information) is set as 2 high-order bits of Sy bits in the packet header.

The 2-bit information of the EMI prescribes contents handling, which varies in accordance with the value set in the information. To put it concretely, a value of 00 indicates that neither authentication nor encryption is required and indicates copy-free contents, which are contents that can be copied with a high degree of freedom. A value of 01 indicates a copy-one-generation meaning that only one generation of the contents can be copied. A value of 10 indicates no-more-copies meaning that generation of the contents obtained as a result of copying contents indicated by the copy-one-generation can no longer be copied. A value of 11 indicates never-copy that prohibits copy operations of contents from the beginning since the release of the contents.

A non-cognizant mode is a recording technique whereby it is necessary to merely update the EMI without updating the embedded CCI at a recording time so that a literary work can be treated correctly in a bit-stream recorder, which does not recognize the format of data such as data recorded on a D-VHS or a hard disk. An example of the operation to update the embedded CCI is processing to update the embedded CCI from the copy-one-generation to the no-more-copies.

In a format allocating an area to transmission of such CCI (copy control information) from the beginning, the CCI can be transmitted as a portion of contents. An example of such a format is a DV format. CCI (copy control information) embedded in contents as a portion of the contents is referred to as embedded CCI. Normally, in a transmission of encrypted contents, the embedded CCI is also encrypted in the same way as the contents are, and transmitted along with the encrypted contents. Thus, it is difficult to change the embedded CCI deliberately.

In the case of contents having both the 2-bit copy control information of the EMI described above and the embedded CCI, a recording apparatus implementing an operation to record the contents must update the copy control information of both the EMI and the embedded CCI. In the case of an apparatus having no capability of analyzing embedded CCI, even though the EMI is updated, the embedded CCI is not.

A cognizant mode is a recording technique whereby the recording apparatus updates the embedded CCI received as a portion of contents and records the updated embedded CCI along with the contents onto a recording medium in a contents-recording operation. In comparison with the cognizant mode, the non-cognizant mode provides a smaller processing load and is easy to implement in that the embedded CCI is not updated in the non-cognizant mode. However, a rule of the 5CDTCP standard requires that an apparatus for carrying out an MPEG decoding process on contents and displaying a video signal obtained as a result of the MPEG decoding process from an analog terminal be an apparatus adopting the cognizant mode. That is to say, an apparatus carrying out decoding and displaying operations must have a function for implementing the cognizant mode.

In order to implement the cognizant mode, however, it is necessary to completely know the position of the embedded CCI and the meaning of the embedded CCI, which is embedded as a portion of contents. In the case of a new or updated data format, which is controlled after an apparatus is sent to the market, it is very difficult to implement the cognizant mode in an old apparatus for the new data format.

Thus, one may conceive that an apparatus for recording contents has both the cognizant mode and the non-cognizant mode. That is, the apparatus operates in the cognizant mode for example when dealing with a special data format or implementing a special task, and on the other hand, the apparatus operates in the non-cognizant mode for example when recording contents having a different format.

There is also an apparatus that carries out only recording operations in the non-cognizant mode for all contents. On the contrary, there is also an apparatus that processes only contents each having a format including comprehensible embedded CCI, or an apparatus that implements only the cognizant mode.

In a situation where there are 2 kinds of copy control information, namely, the EMI and the embedded CCI, and there are 2 kinds of apparatus for recording contents, namely, an apparatus of the cognizant mode coexisting with an apparatus implementing the non-cognizant mode as described above, it is desirable to clearly distinguish contents recorded in the cognizant mode from contents recorded in the non-cognizant mode.

To put it in detail, in an operation to record contents in the cognizant mode, the copy control information of both the EMI and the embedded CCI is updated. In an operation to record contents in the non-cognizant mode, on the other hand, the copy control information of only the EMI is updated and that of the embedded CCI is not. As a result, on the recording medium, the EMI does not match the embedded CCI. Further, if contents recorded in the cognizant mode coexist with contents recorded in the non-cognizant mode, there will be confusions. Thus, in order to prevent the EMI from mismatching the embedded CCI, it is necessary to provide a configuration in which contents recorded in the cognizant mode are subjected to only recording and reproduction processing carried out in the cognizant mode whereas contents recorded in the non-cognizant mode are subjected to only recording and reproduction processing carried out in the non-cognizant mode.

For the above reason, there has been a proposal to completely separate the cognizant and non-cognizant modes from each other. In this case, however, in order to selectively implement both the modes in one apparatus, it is necessary to provide the apparatus with a processing configuration capable of executing both the modes. Nevertheless, such a configuration raises a problem of a high cost of the apparatus.

In a configuration provided by an embodiment of the present invention, a key for encryption of contents to be recorded in the cognizant mode is generated as a key different from a key for encryption of contents to be recorded in the non-cognizant mode. Thus, a recording technique for an apparatus adopting the cognizant mode is clearly distinguished from a recording technique for an apparatus adopting the non-cognizant mode in order to avoid a situation in which both the modes coexist in an uncontrollable manner and in order to realize a content-processing configuration based on a uniform recording technique conforming to the method adopted by the apparatus without increasing hardware of the apparatus and processing load.

To put it concretely, in the configuration provided by an embodiment of the present invention, an encrypted cognizant key serving as secret information used for recording (and also required in reproduction) in the cognizant mode is provided to only an apparatus having functions capable of carrying out recording or reproduction operations in the cognizant mode and is stored in the apparatus. On the other hand, an encrypted non-cognizant key serving as secret information used for recording (and also required in reproduction) in the non-cognizant mode is provided to only an apparatus having functions capable of carrying out recording and reproduction operations in the non-cognizant mode and is stored in the apparatus.

With the above configuration, for example, it is possible to prevent contents recorded in the cognizant mode from being mistakenly or illegally subjected to recording and reproduction operations carried out by an apparatus having only recording and reproduction functions for the non-cognizant mode due to a bug, falsification of data or illegal modification of a recording and reproduction program.

Refer back to Figs. 16 and 17. The explanation of the processing to record contents is continued as follows. The recording & reproduction apparatus 1600 further acquires the recoding-time generation number 1650 of a master key stored in the memory of the recording & reproduction apparatus 1600 and stores the recording-time generation number 1650 as a recoding-time generation number 1651 onto the recording medium 1620.

The disk 1620 includes a stored data management file containing information indicating what data composed each title on the disk 1620. The file can also be used for storing a title key 1605, a recording-mode flag 1635 and the recoding-time generation number 1651 of the master key.

It is to be noted that the recording medium 1620 also includes a pre-recording generation number recorded thereon in advance. The configuration allows reproduction of only recorded contents encrypted by using a master key of a generation, which is the same as or newer than the pre-recording generation number. This configuration will be explained in a paragraph describing reproduction processing.

Next, a title-unique key is generated from a combination of a disk-unique key, a title key and a cognizant key or a combination of a disk-unique key, a title key and a non-cognizant key.

That is to say, if the cognizant mode is adopted as the recording mode, a title-unique key is generated from a combination of a disk-unique key, a title key and a cognizant key. If the non-cognizant mode is adopted as the recording mode, on the other hand, a title-unique key is generated from a combination of a disk-unique key, a title key and a non-cognizant key.

As described above, an encrypted cognizant key serving as secret information used for recording and also required in reproduction in the cognizant mode is owned only by an apparatus having functions capable of carrying out recording or reproduction operations in the cognizant mode is stored in the apparatus. On the other hand, an encrypted non-cognizant key serving as secret information used for recording and also required in reproduction in the non-cognizant mode is owned only by an apparatus having functions capable of carrying out recording and reproduction operations in the non-cognizant mode is stored in the apparatus. Thus, in an apparatus dedicated for one mode, contents are recorded by selecting the mode. That is to say, contents are recorded by encrypting the contents by using either the cognizant or non-cognizant key.

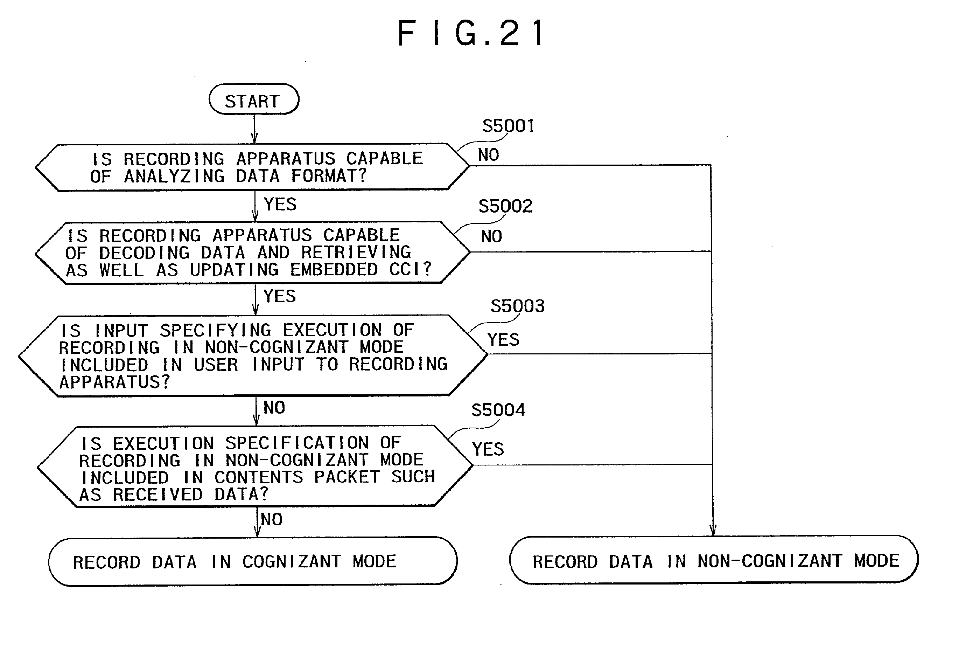

In an apparatus, which has both the cognizant and non-cognizant keys stored therein and is capable of recording contents in either of the cognizant and non-cognizant modes, it is necessary to carry out processing to determine which mode the contents are to be recorded in. The processing to determine whether contents are to be recorded in a cognizant or non-cognizant mode will be explained by referring to a flowchart shown in Fig. 21.

Basically, it is desirable to record contents in the cognizant mode if possible. This is because, by recording contents in the cognizant mode, the EMI can be prevented from mismatching the embedded CCI as described earlier. Also as explained earlier, however, it is quite within the bounds of possibility that a data analysis error is caused by appearance of a new data format or the like. In such a case, the contents are recorded in the non-cognizant mode.

Steps of the flowchart shown in Fig. 21 are explained as follows. As shown in the figure, the flowchart begins with a step S5001 to form a judgment as to whether or not the recording apparatus is capable of analyzing the format of the contents data. As explained earlier, if the recording apparatus is not capable of analyzing the format of the contents data, the apparatus is also incapable of reading out the embedded CCI since this CCI is embedded in the contents. In this case, the contents are recorded in the non-cognizant mode.

If the recording apparatus is capable of analyzing the format of the contents data, on the other hand, the flow of the program goes on to a step S5002 to form a judgment as to whether or not the apparatus is capable of carrying out processing to decode the data (or contents) as well as processing to read out and update the embedded CCI. Normally, the contents and the embedded CCI have been encoded. Thus, the processing to read out the embedded CCI must include a process to decode it. If the apparatus is not capable of carrying out the decoding process because its decoding circuit is being used for another purpose in simultaneous operations to record a plurality of channels or because of another reason, for example, the embedded CCI cannot be fetched. In this case, the contents are recorded in the non-cognizant mode.

If the outcome of the judgment formed at the step S5002 indicates that the apparatus is capable of carrying out processing to decode the data (or contents) as well as processing to read out and update the embedded CCI, the flow of the program goes on to a step S5003 to form a judgment as to whether or not the user has entered an input to the recording apparatus to request that the recording process be carried out in the non-cognizant mode. The processing of this step can be carried out only by an apparatus that allows the user to select a recording mode. An ordinary apparatus, that is, an apparatus that does not allow the user to select a recording mode, is not capable of carrying out the processing of this step. If the user has entered an input to the recording apparatus to request that the recording process be carried out in the non-cognizant mode, the contents are recorded onto the recording medium 1620 in the non-cognizant mode.

Then, the flow of the program goes on to a step S5004 to form a judgment as to whether or not the contents packet such as the received data includes a request to carry out the recording process in the non-cognizant mode. If the contents packet such as the received data includes a request to carry out the recording process in the non-cognizant mode, the contents are recorded onto the recording medium 1620 in the non-cognizant mode. If the contents packet of the received data does not include a request to carry out the recording process in the non-cognizant mode, on the other hand, the contents are recorded onto the recording medium 1620 in the cognizant mode.

An apparatus that allows the user to select either a recording process in a cognizant mode or a recording process in a non-cognizant mode is capable of carrying out a mode determination process for determining which recording mode contents are to be recorded in. As is obvious from the flowchart shown in Fig. 21, if the apparatus is capable of recording contents onto the disk 1620 in the cognizant mode, the recording process is carried out in the cognizant mode.

As described above, if the cognizant mode is set as the recording mode, a title-unique key is generated from a disk-unique key, a title key and a cognizant key. If the non-cognizant mode is set as the recording mode, on the other hand, a title-unique key is generated from a disk-unique key, a title key and a non-cognizant key.

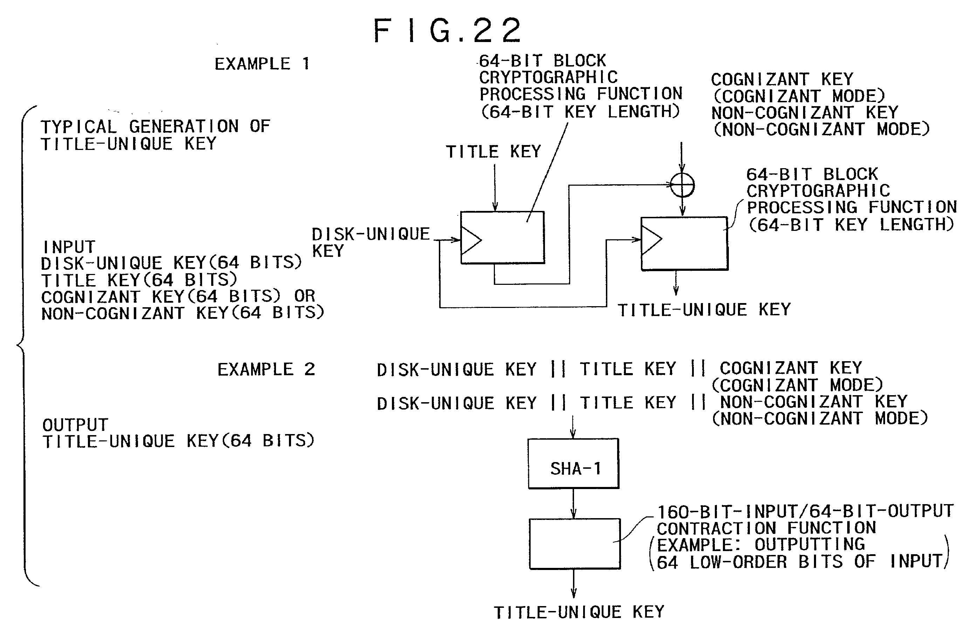

Fig. 22 is a diagram showing a concrete method to generate a title-unique key. As shown in Fig. 22, in example 1, in the case of the cognizant mode, a disk-unique key, a title key and a cognizant key are supplied to a hash function based on block cryptographic processing. In the case of the non-cognizant mode, on the other hand, a disk-unique key, a title key and a non-cognizant key are supplied to the hash function. The hash function outputs a title-unique key.

In example 2, in the case of the cognizant mode, data obtained as a result of bit concatenation of a master key, a disk ID and a cognizant key are supplied to hash function SHA-1 prescribed by the FIPS 180-1 specifications. In the case of the non-cognizant mode, on the other hand, a master key, a disk ID and a non-cognizant key are supplied to the hash function SHA-1. The hash function outputs data with a length of 160 bits including bits required as a title-unique key.

As described above, if the cognizant mode is set as the recording mode, a disk-unique key is generated from a master key, a stamper ID and a disk ID whereas a title-unique key is generated from the disk-unique key, a title key and a cognizant key. If the non-cognizant mode is set as the recording mode, on the other hand, a disk-unique key is generated from a master key, a stamper ID and a disk ID whereas a title-unique key is generated from the disk-unique key, a title key and a non-cognizant key. It is to be noted, however, that if no disk-unique key is required, a title-unique key can be generated directly from a master key, a disk ID, a title key and a cognizant key if the cognizant mode is set as the recording mode. If the non-cognizant mode is set as the recording mode, on the other hand, a title-unique key is generated directly from a master key, a disk ID, a title key and a non-cognizant key. As another alternative, a title key can be omitted. That is to say, a key equivalent to a title-unique key can be generated from a master key, a disk ID and a cognizant key if the cognizant mode is set as the recording mode. If the non-cognizant mode is set as the recording mode, on the other hand, a key equivalent to a title-unique key is generated from a master key, a disk ID and a non-cognizant key.

Assume for example that one of transmission formats conforming to the 5CDTCP standard is adopted. When such a transmission format is adopted, data may be transmitted as MPEG2 TS packets. Let an STB (Set Top Box) receiving a satellite broadcast transmit the broadcast to a recording apparatus in conformity with the 5CDTCP standard. In this case, it is desirable to have the STB transmit MPEG2 TS packets, which are received from a satellite broadcasting line, through the IEEE 1394 bus without the need for data conversion.

The recording & reproduction apparatus 1600 receives data of contents to be recorded onto the recording medium 1620 as TS packets. The transport-packet-processing means 300 described earlier adds an ATS to each of the TS packets. An ATS is information showing a time a TS packet, to which an ATS is added, is received. It is to be noted that, as described earlier, block seeds added to block data may each include a combination of a value of an ATS, a value of copy control information and a value of other information.

As described earlier by referring to Fig. 5, a block includes X TS packets each including an additional ATS where X is typically 32. Reference numeral 1607 shown at the lower portions of Figs. 16 and 17 denotes processing to generate a block key, which is a key for encrypting data of a block. A block key is generated from a title-unique key generated in an earlier process and a 32-bit block seed including an ATS. The block seed is 1 to 4 bytes extracted by a selector 1608 from the head of the block data received as data to be encrypted.

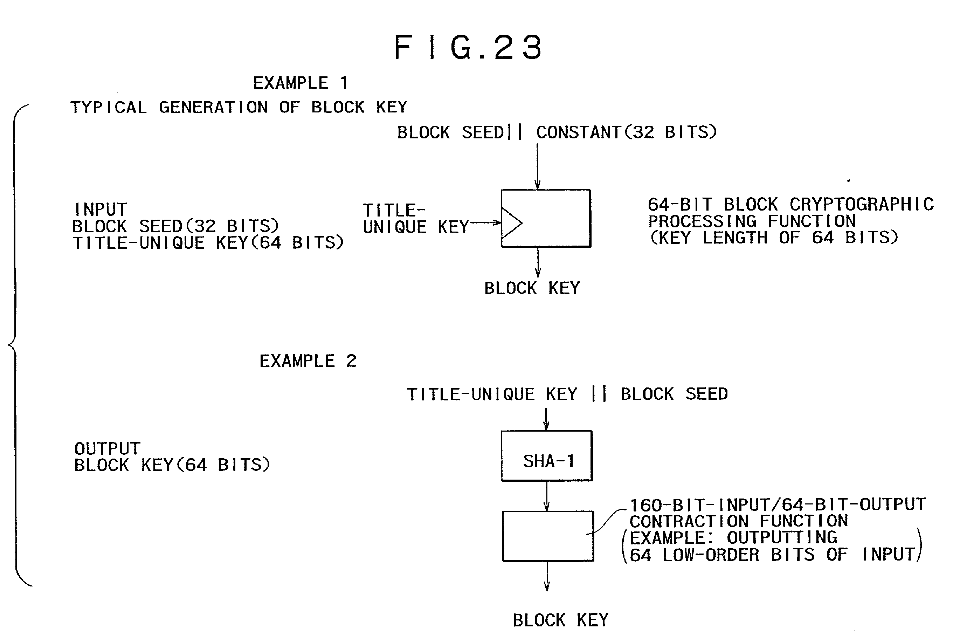

Fig. 23 is a diagram showing typical methods of generating a block key. Fig. 23 shows 2 examples to generate a block key having a length of 64 bits. As shown in the figure, in either of the examples, a block key is generated from a block seed with a length of 32 bits and a title-unique key having a length of 64 bits.

In example 1 shown on the upper part of the figure, the cryptographic processing function has an input with a length of 64 bits as well as an output with a length of 64 bits, and treats a title-unique key also having a length of 64 bits as its key. The input includes a 32-bit block seed concatenated with a constant also having a length of 32 bits. The output is the block key.

In example 2 shown on the lower part of the figure, on the other hand, hash function SHA-1 prescribed by the FIPS 180-1 specifications is used. A concatenation of a title-unique key with a block seed is supplied to hash function SHA-1, which produces an output having a length of 160 bits. A block key has a length of 64 bits condensed from the output having a length of 160 bits. Typically, the block key is the 64 low-order bits of the output.

Examples to generate a disk-unique key, a title-unique key and a block key have been explained so far. It is to be noted, however, that a block key can also be generated for each block for example without generation of a disk-unique key and a title-unique key. In this case, a block key is generated from a master key, a stamper ID, a disk ID, a title key, a block seed and a cognizant key in the case of the cognizant mode or a non-cognizant key in the case of the non-cognizant mode.

Data of a block is then encrypted by using a block key generated for the block. As shown in the lower part of Fig. 16 or 17, a selector 1608 separates the 1 to m bytes of the block data as a portion not subjected to encryption where m is typically 8. The separated bytes include the block seed. The rest of the block data starting with the (m+1)th byte and ending with the last byte is encrypted in encryption processing 1609. It is to be noted that the block seed included in the m unencrypted bytes has a length of 1 to 4 bytes. The rest of the block data including (m+1)th and subsequent bytes separated by the selector 1608 is subjected to the encryption processing 1609 based on an encryption algorithm set in advance in the cryptographic processing means 150. As a typical encryption algorithm, a DES (Data Encryption Standard) prescribed by FIPS 46-2 specifications can be adopted.

In addition, as described above, CCI (Copy Control Information) may be included in a block seed. In the case of a recording process carried out in the cognizant mode, the copy control information included in a block seed is embedded CCI embedded in contents data. In the case of a recording process carried out in the non-cognizant mode, on the other hand, the copy control information included in a block seed is an EMI (Encryption Mode Indicator) recorded in a packet header explained earlier by referring to Fig. 20.

That is to say, in the case of a recording process carried out in the cognizant mode, processing is carried out to generate recording information including a block seed, which includes copy control information based on embedded CCI embedded in the contents data and is added to block data including one or more packets. In the case of a recording process carried out in the non-cognizant mode, on the other hand, processing is carried out to generate recording information including a block seed, which includes copy control information based on an EMI (Encryption Mode Indicator) included in a packet header as copy control information and is added to block data including one or more packets.

If the block length of the encryption algorithm or the size of the input and output of the cryptographic processing function is 8 bytes as is the case with the DES, X denoting the number of TS packets in a block is set at typically 32 and m denoting the number of leading bytes separated from a block is set typically at a multiple of 8. In this way, it is possible to encrypt all the rest of the block, starting with the (m+1)th byte without producing a remainder.

As described above, the symbol X denotes the number of TS packets in a block. Let notation L denote the size of the input and the output of the encryption algorithm expressed in terms of bytes and notation n denote a natural number. In this case, such values of X, m and L are determined that the following equation holds true:

$$192 * X = m + n * L$$

The encrypted (m+1)th and subsequent bytes of the block data are concatenated by a selector 1610 with the unencrypted 1 to m-th bytes of the block data. A result of the concatenation is then recorded onto the recording medium 1620 as encrypted contents 1612.

In the processing described above, before being recorded onto a recording medium, contents are encrypted in block units by using block keys, which are each generated for a block on the basis of information including a master key subjected to generation management and a block seed including an ATS.

In this configuration, data of contents are encrypted by using a master key subjected to generation management before being recorded onto a recording medium as described above. Thus, as a condition for reproduction of the encrypted contents data from the recording medium by another recording & reproduction apparatus and decryption of the reproduced contents data in the other recording & reproduction apparatus, the other recording & reproduction apparatus shall have a decryption key of the same generation as the master key used in the recording process or a generation newer than the master key.

In addition, as described above, a block key is generated on the basis of a cognizant key in the case of a recording process carried out in the cognizant mode or a non-cognizant key in the case of a recording process carried out in the non-cognizant mode. Data recorded after encrypting the data by using such a block key can be reproduced only by an apparatus that has a cognizant key or a non-cognizant key for the mode set in the recording process.

A cognizant key is given to an apparatus that has a capability of recognizing embedded CCI embedded in a stream during a recording process and a capability of updating the embedded CCI if necessary. The cognizant key is also given to an apparatus allowing data recorded in the recording process to be reproduced. An apparatus that does not have such a cognizant key is thus incapable of reproducing contents recorded in the cognizant mode.

By the same token, a non-cognizant key is given to an apparatus that has a capability of the non-cognizant mode in which embedded CCI embedded in a stream during a recording process is not recognized. The cognizant key is also given to an apparatus allowing data recorded in the recording process to be reproduced. An apparatus that does not have such a non-cognizant key is thus incapable of reproducing contents recorded in the non-cognizant mode. Details of the reproduction process will be described later.

By referring to a flowchart shown in Fig. 18, the following description explains entire ATS addition processing and entire encryption processing carried out by the transport-packet-processing means 300 and the cryptographic processing means 150 respectively, which are combined into a part of a process to record data onto a disk. The flowchart shown in Fig. 18 begins with a step S1801 to read out a master key, a stamper ID and a cognizant key in the case of the cognizant mode or a non-cognizant key in the case of the non-cognizant mode from the memory 180 employed in the recording & reproduction apparatus.

Then, the flow of the program goes on to a step S1802 to form a judgment as to whether or not a disk ID has been recorded on the recording medium as identification information. If a disk ID has been recorded on the recording medium as identification information, the flow of the program goes on to a step S1803 at which the disk ID is read out from the recording medium. If a disk ID has not been recorded on the recording medium as identification information, on the other hand, the flow of the program goes on to a step S1804 at which a disk ID is generated at random or by using a predetermined method, and recorded onto the recording medium. Then, at the next step S1805, a disk-unique key is generated by using the master key and the stamper ID. As described earlier, the disk-unique key is found typically by adoption of a method using hash function SHA-1 prescribed by the FIPS 180-1 specifications or a method using a hash function based on block cryptographic processing.

Subsequently, at the next step S1806, a title key is generated and recorded on the disk along with a recording mode and the generation number of the master key. A title key is a key unique to this specific recording operation. The recorded recording mode indicates whether the information-recording mode is the cognizant or non-cognizant mode.

Subsequently, at the next step S1807, a title-unique key is generated from the disk-unique key, the title key and the cognizant key in the case of the cognizant mode or the non-cognizant key in the case of the non-cognizant mode.

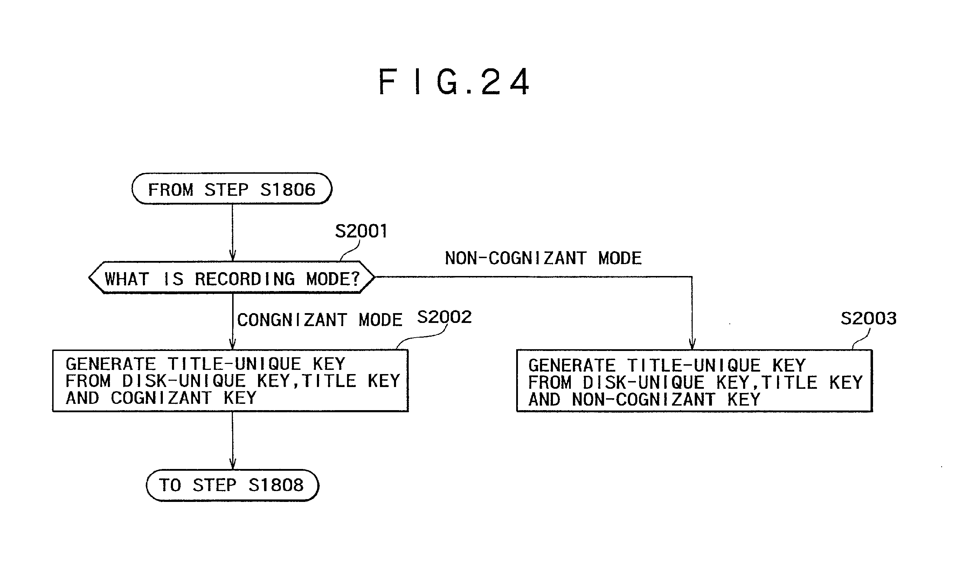

Fig. 24 shows a flowchart representing details of processing to generate a title-unique key. As shown in the figure, the flowchart begins with a step S2001 to form a judgment as to whether the recording mode is the cognizant mode or the non-cognizant mode. The cryptographic processing means 150 carries out processing in dependence of the recording mode. The judgment is based on a program of the recording & reproduction apparatus and data of a command entered by the user of the recording & reproduction apparatus.

If the outcome of the judgment formed at the step S2001 indicates that the recording mode is the cognizant mode, that is, if the outcome indicates a recording process carried out in the cognizant mode, the flow of the program goes on to a step S2002 at which a title-unique key is generated from the disk-unique key, the title key and the cognizant key.

If the outcome of the judgment formed at the step S2001 indicates that the recording mode is the non-cognizant mode, that is, if the outcome indicates a recording process carried out in the non-cognizant mode, on the other hand, the flow of the program goes on to a step S2003 at which a title-unique key is generated from the disk-unique key, the title key and the non-cognizant key by adoption of a method using hash function SHA-1 or by using a hash function based on block cryptographic processing.

Then, referring back to Fig. 18, at the step S1808, the recording & reproduction apparatus receives data of contents to be recorded onto the disk as TS packets. Subsequently, at the next step S1809, the transport-packet-processing means 300 adds an ATS to each of the TS packets. An ATS added to a TS packet is information on a time at which the TS packet is received. As an alternative, the transport-packet-processing means 300 adds a combination of CCI, an ATS and other information to each of the TS packets. Then, the flow of the program goes on to a step S1810 to form a judgment as to whether or not the number of received TS packets each including an additional ATS has reached X, which is the number of TS packets composing a block, or whether or not data indicating the last TS packet has been received. A typical value of X is 32. If the number of received TS packets each including an additional ATS has reached X, or the data indicating the last TS packet has been received, the flow of the program goes on to a step S1811 at which X TS packets or TS packets up to the last one are arranged to form a block.

At a step S1812, the cryptographic processing means 150 generates a block key, which is used for encrypting the block, from the block seed and the title-unique key generated at the step S1807. As described before, the bock seed is 32 bits at the head of the block data and includes an ATS.

Then, at the next step S1813, the data of the block created at the step S1811 is encrypted by using the block key. It is to be noted that, as described earlier, only the block data from the (m+1)th byte to the last byte is encrypted. A typical algorithm used in the encryption is the DES (Data Encryption Standard) prescribed by the FIPS 46-2 specifications.

Subsequently, at the next step S1814, the encrypted data of the block is recorded onto the recording medium. The flow of the program then goes on to a step S1815 to form a judgment as to whether or not all data has been recorded onto the recording medium. If all data has been recorded onto the recording medium, the recording process is ended. If data has not all been recorded onto the recording medium, on the other hand, the flow of the program goes back to the step S1808 to record the rest of the data onto the recording medium.

In the processing described above, contents are recorded in the cognizant or non-cognizant mode. If contents are recorded in the cognizant mode, a key for encrypting the contents are generated on the basis of a cognizant key. If contents are recorded in the non-cognizant mode, on the other hand, a key for encrypting the contents is generated on the basis of a non-cognizant key. Thus, reproduction of contents from a disk requires a decryption key generated by applying either the cognizant or non-cognizant key, which was used to encrypt the contents before the contents were recorded onto the disk. Thus, it is possible to prevent recording and reproduction processes from being carried out with mixed cognizant and non-cognizant modes.

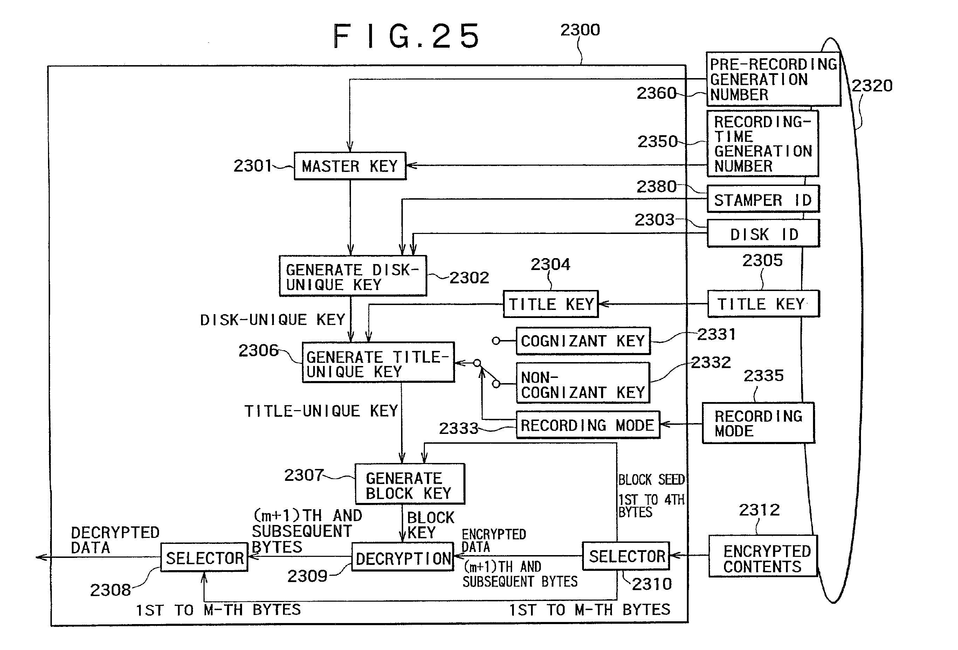

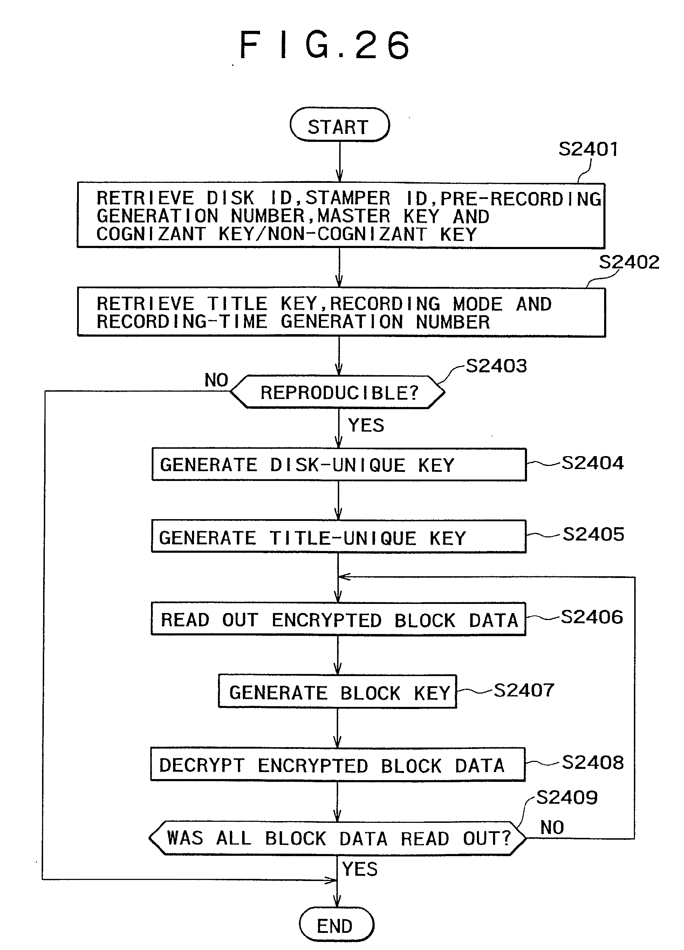

By referring to a processing block diagram of Fig. 25 and flowcharts shown in Figs. 26 to 28, the following description explains processing to decrypt encrypted contents recorded on a recording medium as described above in a process to reproduce the contents.

First of all, processing flows of decryption and reproduction processes are explained by referring to the processing block diagram of Fig. 25 and the flowchart shown in Fig. 26. The flowchart shown in Fig. 26 begins with a step S2401 at which a recording & reproduction apparatus 2300 shown in Fig. 25 reads out a disk ID 2303, a stamper ID 2380 from the disk 2320. A pre-recording generation number 2360, a master key 2301 and a cognizant key 2331 or a non-cognizant key 2332 are read out from the memory of the recording & reproduction apparatus 2300. As is obvious from the previous description of the recording process, a disk ID is an identifier peculiar to a disk. The disk ID has been recorded on the disk 2320. Otherwise, a disk ID is generated and recorded onto the disk 2320 by the recording & reproduction apparatus 2300.

Recorded on the disk 2320 in advance, the pre-recording generation number 2360 is information on a generation and peculiar to the disk 2320. The pre-recording generation number 2360 is compared with a generation number of a master key 2301 used in a data-recording process to determine whether or not the reproduction process is to be carried out. The generation number of a master key 2301 used in a data-recording process is referred to as a recording-time generation number 2350. Stored in a memory employed in the recording & reproduction apparatus 2300 in the processing represented by the flowchart shown in Fig. 14, the master key 2301 is a private key subjected to generation management. The cognizant and non-cognizant keys are a private keys common in a system for the cognizant and non-cognizant modes respectively.

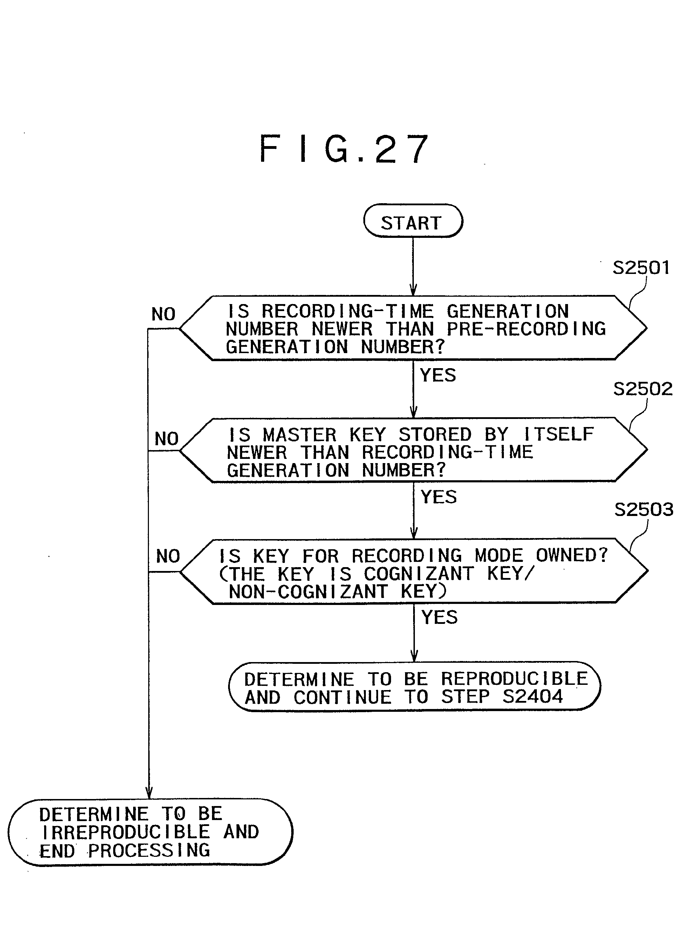

Then, at the next step S2402, the recording & reproduction apparatus 2300 reads out a title key of data to be read out from the disk, the recording mode of the data and the generation number of a master key used in processing to record the data onto the disk. The generation number of a master key used in processing to record the data onto the disk is the recording-time generation number 2350 cited above. Then, the flow of the program goes on to a step S2403 to form a judgment as to whether or not the data to be read out is reproducible. Details of the formation of the judgment are represented by a flowchart shown in Fig. 27.

The flowchart shown in Fig. 27 begins with a step S2501 to form a judgment as to whether or not the recording-time generation number 2350 read out at the step S2402 is newer than the pre-recording generation number read out at the step S2401. If the recording-time generation number 2350 is not newer than the pre-recording generation number, that is, if the recording-time generation number 2350 is older than the pre-recording generation number, the data is determined to be irreproducible. In this case, steps S2404 to S2409 of the flowchart shown in Fig. 26 are skipped and the execution of the program is ended without carrying out the reproduction processing. That is to say, if contents recorded on the recording medium have been recorded by using a master key of a generation older than the pre-recording generation, reproduction of the contents is not permitted and the contents are not reproduced.

The processing described above is carried out in the case where the contents were recorded onto the recording medium after being encrypted by using a master key of an old generation. A master key of the most recent generation is no longer given to such an illegal recording & reproduction apparatus due to a detected attempt to carry out an illegal operation. The contents cannot be reproduced from the recording medium storing data recorded by such an illegal apparatus. Thus, it is possible to prohibit the use of the recording & reproduction apparatus, which has become illegal.

If the outcome of the judgment formed at the step S2501 indicates that the recording-time generation number 2350 is the same as or newer than the pre-recording generation number n, that is, if the recording-time generation number 2350 is not older than the pre-recording generation number, on the other hand, the contents recorded on the recording medium are determined to have been encrypted by using a master key of a generation later than the pre-recording generation. In this case, the flow of the program goes on to a step S2502 at which the recording & reproduction apparatus acquires information on the generation of encrypted master key C stored in a memory employed in the recording & reproduction apparatus and compares the generation of the encrypted master key with the recording-time generation in order to form a judgment as to whether or not the generation of the encrypted master key is newer than the recording-time generation.

If the outcome of the judgment formed at the step S2502 indicates that the generation of encrypted master key C stored in a memory is not newer than the recording-time generation, that is, the generation of the master key is older than the recording-time generation, the contents recorded on the recording medium are determined to be irreproducible. In this case, the steps S2404 to S2409 are skipped and the execution of the program is ended without carrying out the reproduction processing.

If the outcome of the judgment formed at the step S2502 indicates that the generation of encrypted master key C stored in a memory is not older than the recording-time generation, that is, the generation of the master key is the same as or newer than the recording-time generation, on the other hand, the flow of the program goes on to a step S2503 to form a judgment as to whether or not the key for the recording mode is owned by the recording & reproduction apparatus itself. The key for the recording mode is a cognizant or non-cognizant key.

If the outcome of the judgment formed at the step S2503 indicates that the key for the recording mode, that is, the cognizant or non-cognizant key, is owned by the recording & reproduction apparatus itself, the contents recorded on the recording medium are determined to be reproducible. If the key for the recording mode, that is, the cognizant or non-cognizant key, is not owned by the recording & reproduction apparatus itself, on the other hand, the contents recorded on the recording medium are determined to be irreproducible.

If the contents recorded on the recording medium are determined to be reproducible, the flow of the program goes on to the step S2404. Reference numeral 2302 shown in Fig. 25 denotes a process carried out at the step S2404 to generate a disk-unique key by using the disk ID, the master key and the stamper ID. As a method of generating the disk-unique key, hash function SHA-1 prescribed by the FIPS 180-1 is used. Data obtained as a result of bit concatenation of the master key with the disk ID is input to hash function SHA-1 to produce an output with a length of 160 bits. Only bits required for forming the length of the disk-unique key are extracted from the output of hash function SHA-1. As another method of generating the disk-unique key, the master key and the disk ID are input to a hash function based on block cryptographic processing. The master key supplied to the hash function is the master key read out from the recording medium at the step S2402 of the flowchart shown in Fig. 26. The master key is a master key of a generation indicated by the recording-time generation number for the contents. If the recording & reproduction apparatus has a master key of a generation newer than the recording-time generation, the apparatus may generate a master key of a generation indicated by the recording-time generation number by adopting the method described earlier and generate a disk-unique key by using the generated master key.

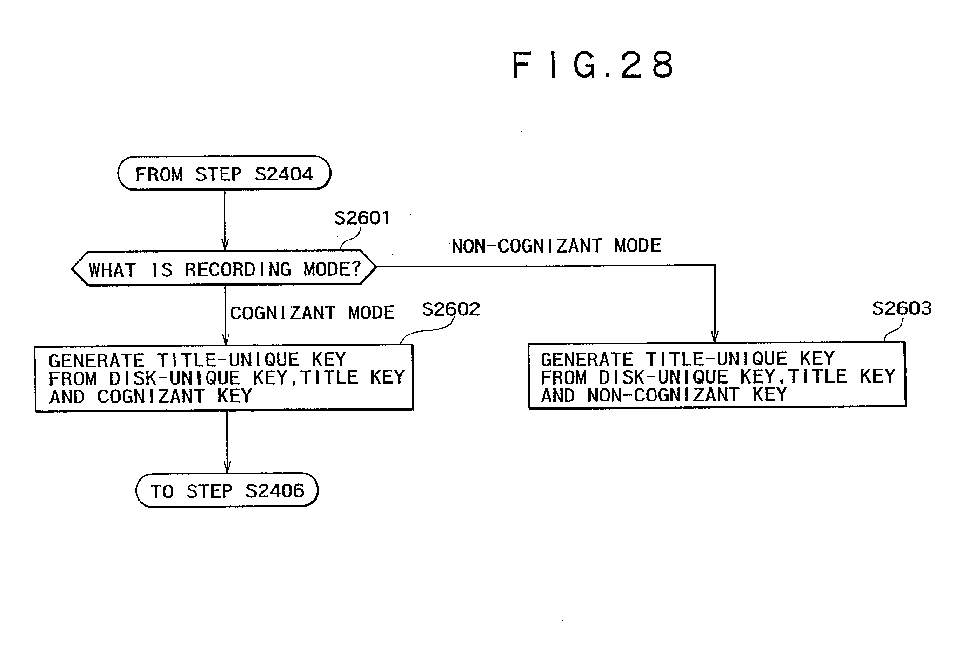

Then, at the next step S2405, a title-unique key is generated. The generation of a title-unique key is represented in detail by a flowchart shown in Fig. 28. As shown in the figure, the flowchart begins with a step S2601 at which the cryptographic processing means 150 forms a judgment as to which recording mode has been used to record the contents onto the disk. The formation of the judgment is based on the recording mode read out from the disk.

If the outcome of the judgment formed at the step S2601 indicates that the recording mode is the cognizant mode, the flow of the program goes on to a step S2602 at which a title-unique key is generated from the disk-unique key, the title key and the cognizant key.

If the outcome of the judgment formed at the step S2601 indicates that the recording mode is the non-cognizant mode, on the other hand, the flow of the program goes on to a step S2603 at which a title-unique key is generated from the disk-unique key, the title key and the non-cognizant key. In the key generation, hash function SHA-1 or a hash function based on block cryptographic processing may be used.

As described above, if the cognizant mode is set as the recording mode, a disk-unique key is generated from a master key, a stamper ID and a disk ID whereas a title-unique key is generated from the disk-unique key, a title key and a cognizant key. If the non-cognizant mode is set as the recording mode, on the other hand, a disk-unique key is generated from a master key, a stamper ID and a disk ID whereas a title-unique key is generated from the disk-unique key, a title key and a non-cognizant key. It is to be noted, however, that if no disk-unique key is required, a title-unique key can be generated directly from a master key, a stamper ID, a disk ID, a title key and a cognizant key if the cognizant mode is set as the recording mode. If the non-cognizant mode is set as the recording mode, on the other hand, a title-unique key is generated directly from a master key, a stamper ID, a disk ID, a title key and a non-cognizant key. As another alternative, a title key can be omitted. That is to say, a key equivalent to a title-unique key can be generated from a master key, a stamper ID, a disk ID and a cognizant key if the cognizant mode is set as the recording mode. If the non-cognizant mode is set as the recording mode, on the other hand, a key equivalent to a title-unique key is generated from a master key, a stamper ID, a disk ID and a non-cognizant key.

Then, at the next step S2406, block data of the encrypted contents 2312 is read out from the disk. Subsequently, at the next step S2407, a selector 2310 separates a block seed having a length of 4 bytes from the block data. The block seed has been placed at the beginning of the block data. A block key is then generated by using the block seed and the title-unique key generated at the step S2405.

The scheme explained earlier by referring to Fig. 23 may be applied to a method of generating a block key. That is to say, it is possible to apply a scheme in which a block key with a length of 64 bits is generated from a block seed with a length of 32 bits and a title-unique key with a length of 64 bits.

The above description explains typical generations of a disk-unique key, a title-unique key and a block key. It is to be noted that, as an alternative, neither the disk-unique key nor the title-unique key is generated. That is to say, a block key is generated for each block from a master key, a stamper ID, a disk ID, a title key, a block seed and a cognizant key in the case of the cognizant mode or a non-cognizant key in the case of the non-cognizant mode.

After a block key is generated, the flow of the routine goes on to the next step S2408 at which the encrypted block data is decrypted by using the block key in a decryption process denoted by reference numeral 2309 in Fig. 25 and data obtained as a result of the decryption process 2309 is output by way of a selector 2308. It is to be noted that the decrypted data includes an ATS added to each of transport packets composing the transport stream. The decrypted data is subjected to stream processing based on the ATS in the transport-packet-processing means 300 explained earlier. Then, the data is used in processing such as operations to display a picture and to generate a sound.

As described above, the contents recorded on the recording medium has been encrypted in block units and it is possible to decrypt the encrypted contents also in block units by using block keys each generated on the basis of a block seed including an ATS in a reproduction process to reproduce the contents from the recording medium. The flow of the program then goes on to a step S2409 to form a judgment as to whether or not all encrypted blocks of the contents have been read out from the recording medium and decrypted by using block keys. If all encrypted blocks of the contents have been read out from the recording medium and decrypted, the execution of the program is ended. If encrypted blocks of the contents have not all been read out from the recording medium and decrypted, on the other hand, the flow of the program goes back to the step S2406.

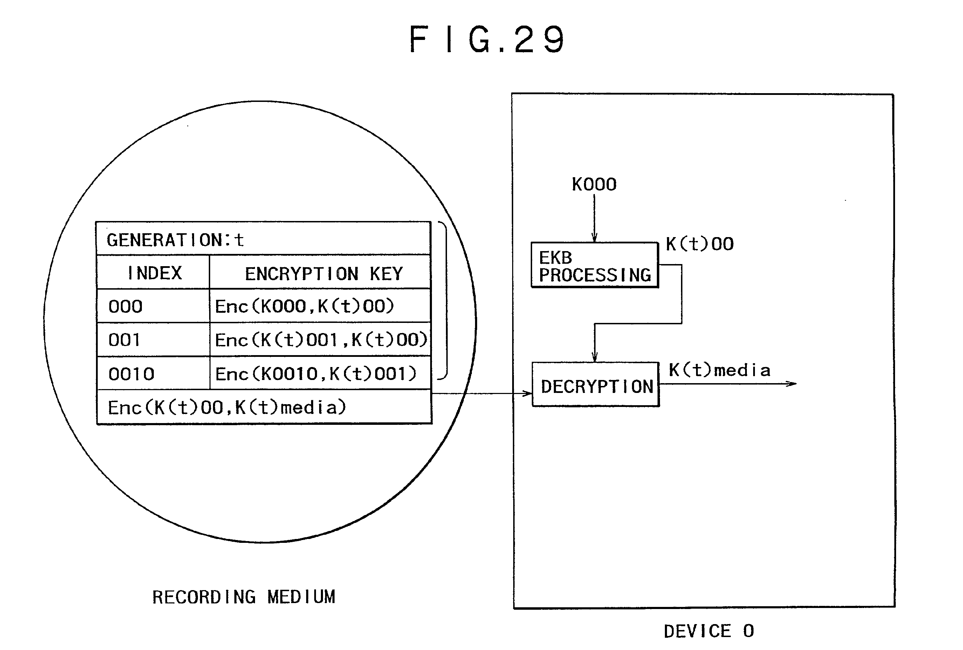

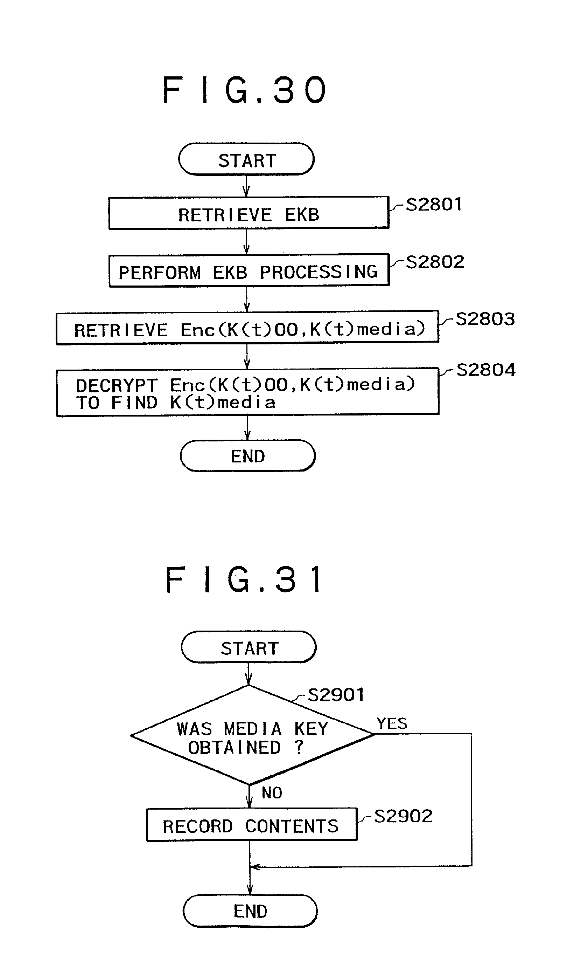

As described above, the recording & reproduction apparatus has a typical configuration in which it is possible to selectively implement encryption in the cognizant mode and use a cognizant key or implement encryption in the non-cognizant mode and use a non-cognizant key as shown in Fig. 25. It is to be noted, however, that in an apparatus storing only a cognizant or non-cognizant key, only an encryption process for the stored key can be carried out and a block key for decrypting encrypted contents are generated on the basis of the stored key as explained earlier by referring to Figs. 29 and 30.

5: Recording and Reproduction of Contents Based on Cryptographic Processing Using a Media Key

By the way, in the embodiment described above, a master key is distributed to recording & reproduction apparatus by using an EKB (Enabling Key Block) and used in operations to record and reproduce data.

A master key is a key effective for all operations to record data in the same generation as the master key. A recording & reproduction apparatus capable of obtaining a master key of a certain generation is capable of decrypting data recorded in this system in the same generation as the master key or in a generation preceding the generation of the master key. Since the master key is effective throughout the whole system, however, there is raised a problem that a master key exposed to a hacker will have an effect on the whole system.

If an EKB (Enabling Key Block) is used for transmitting a media key effective only for a specific recording medium instead of transmitting a master key effective for the whole system, on the other hand, it is possible to reduce the effect of exposure of a key to a hacker. A second embodiment described below implements a system using a media key in place of a master key. However, only differences from the first embodiment are explained.

Fig. 29 is a diagram showing how a media key is obtained. Much like the typical key generation shown in Fig. 13, device 0 generates updated node key K(t)00 by using a t-generation EKB stored in a recording medium, leaf key K0000 as well as node keys K000 and K00, which are stored in advance in a memory of device 0. Device 0 then obtains updated media key K(t)media by using updated node key K(t)00. Media key K(t)media is used in operations to record data onto the recording medium and reproduce data from the recording medium.

It is to be noted that, unlike the master key, since the concept of later and earlier generations does not apply to the pre-recording generation number (generation #n) shown in Fig. 29, pre-recording generation number is not absolutely required but is set as an option.

When a recording medium is mounted on the recording & reproduction apparatus in a recording or reproduction process, the apparatus computes media key K(t)media for the recording medium in accordance with a procedure represented by a flowchart shown in Fig. 30. Media key K(t)media is used to make an access to the recording medium later.

As shown in Fig. 30, the flowchart begins with a step S2801 at which an EKB is read out. Then, at the next step S2802, the EKB is processed. The operation to read out the EKB and the processing of the EKB are carried out in the same say as the steps 1403 and 1404 of the flowchart shown in Fig. 14.

Subsequently, at the next step S2803, the recording & reproduction apparatus reads out encrypted value ENC (K(t)00, K(t)media) from the recording medium. As described earlier, encrypted value ENC (K(t)00, K(t)media) is a value obtained as a result of encryption of media key K(t)media by using node key K(t)00. Then, at the next step S2804, encrypted value ENC (K(t)00, K(t)media) is encrypted to result in media key K(t)media. If this recording & reproduction apparatus is revoked from a group in the tree structure shown in Fig. 11, the apparatus will not be able to obtain the media key. As a result, the recording & reproduction apparatus will be incapable of carrying out recording and reproduction processing.

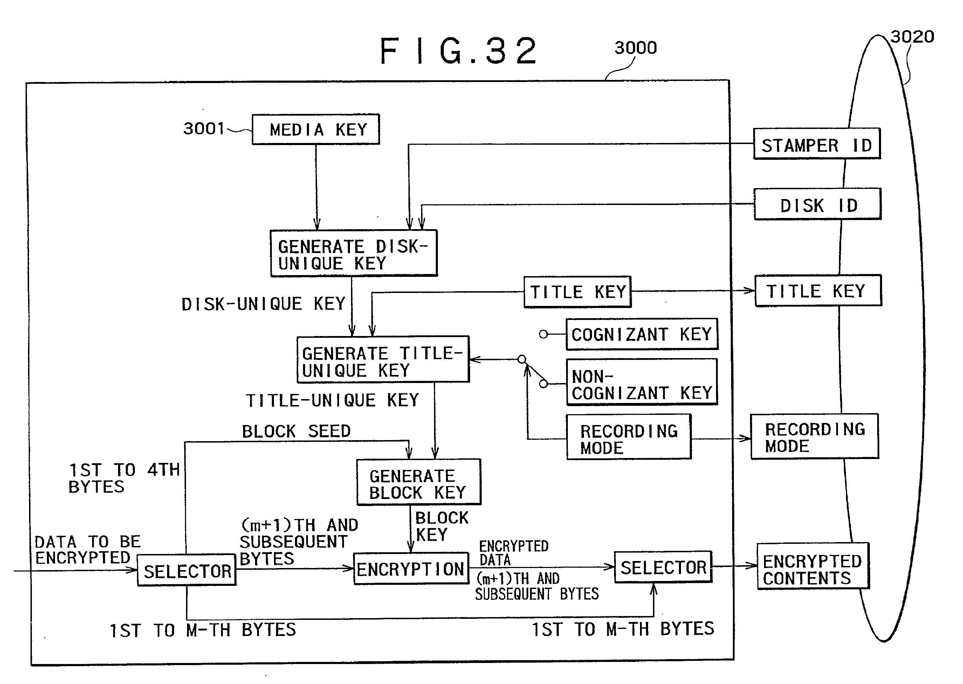

The following description explains processing to generate a key by using a media key, encrypt data by using the generated key and record the encrypted data onto a recording medium. As described above, unlike a master key, the concept of earlier and later generations is not applicable to a media key. Thus, there is no need to form a judgment as to whether pre-recording generation information is earlier or later than the generation of a master key stored in a memory of the recording & reproduction apparatus as is the case with the first embodiment's processing shown in Fig. 15. A recording process is determined to be possible if a media key can be obtained in the processing represented by the flowchart shown in Fig. 30. In other words, a judgment as to whether or not contents can be recorded is formed in accordance with a procedure represented by a flowchart shown in Fig. 31. As shown in the figure, the flowchart begins with a step S2901 to form a judgment as to whether or not a media key can be obtained. If a media key can be obtained, the flow of the procedure goes on to a step S2902 at which contents are recorded.

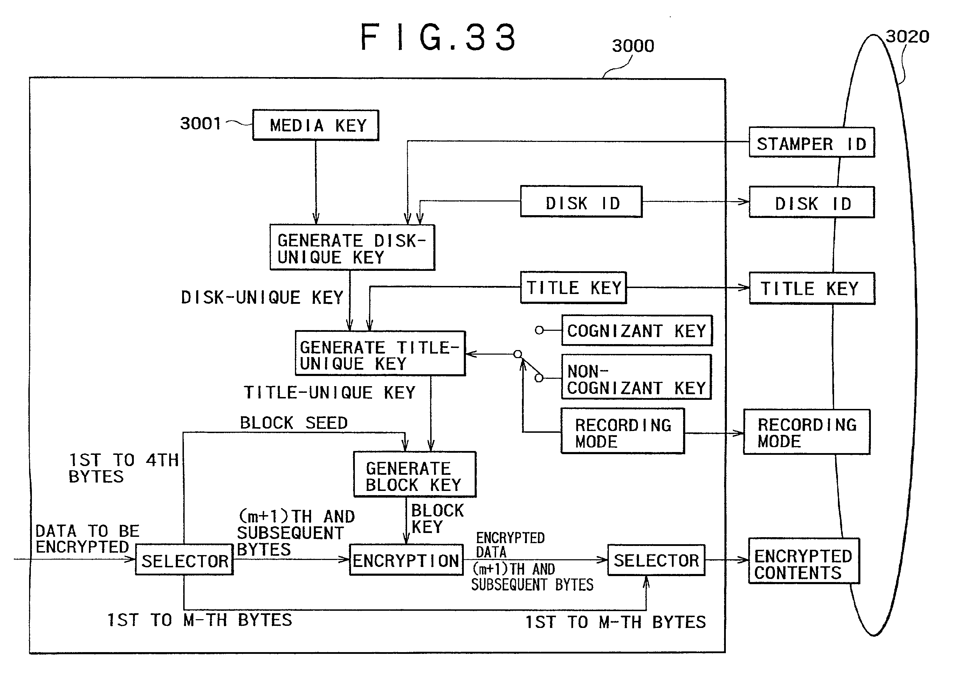

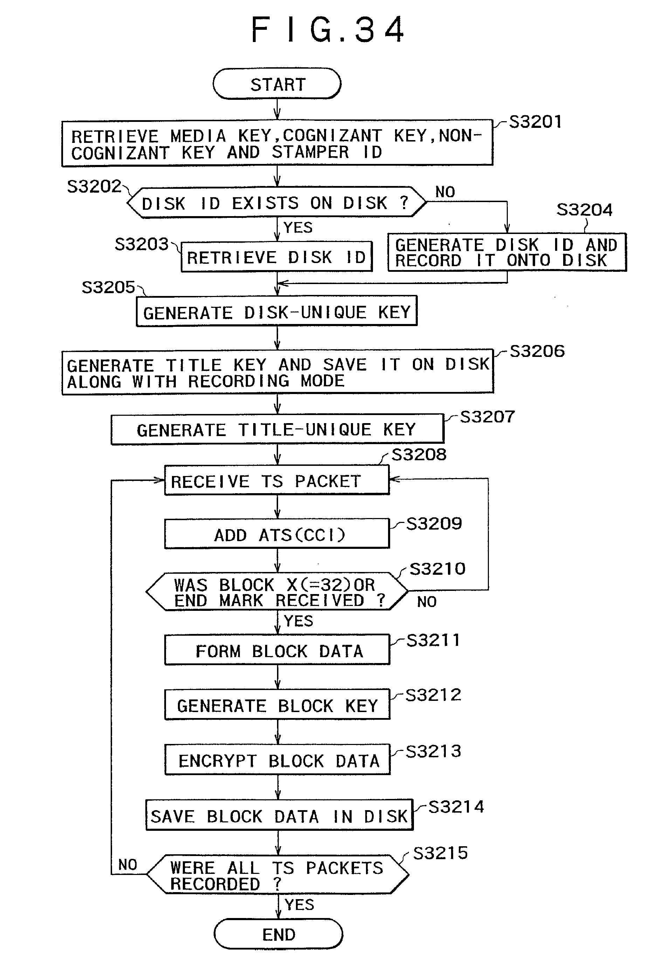

By referring to block diagrams of Figs. 32 and 33 as well as a flowchart shown in Fig. 34, the following description explains processing to record contents onto a recording medium by encrypting the contents by using a media key.

Much like the first embodiment, this embodiment employs an optical disk as the recording medium. This embodiment is also similar to the first embodiment in that, in order to avoid bit-to-bit copy operations of the recording medium, a disk ID is reflected in a key for encrypting data as identification information peculiar to the recording medium.

Figs. 32 and 33 correspond to respectively Figs. 16 and 17 of the first embodiment. Figs. 32 and 33 are different from respectively Figs. 16 and 17 in that, in the processing shown in Figs. 32 and 33, a media key is used as a substitute for the master key. In addition, Figs. 32 and 33 are different from respectively Figs. 16 and 17 in that, in the processing shown in Figs. 32 and 33, a recording-time generation number of generation # indicating a generation of the master key is not used. Much like the difference between Figs. 16 and 17, the difference between Figs. 32 and 33 lies on whether or not a disk ID is newly recorded.

Fig. 34 shows a flowchart representing a process carried out by this embodiment to record data by using a media key. This flowchart is a counterpart of the first embodiment's flowchart described earlier by referring to Fig. 18. Differences of the flowchart shown in Fig. 34 from the first embodiment are explained as follows.

At a step S3201 of the flowchart shown in Fig. 34, the recording & reproduction apparatus 3000 reads out a cognizant key and/or a non-cognizant key and media key K(t)media from a memory employed in the recording & reproduction apparatus 3000. Media key K(t) media has been found at the step S2804 of the flowchart shown in Fig. 30 and temporarily stored in the memory. The recording & reproduction apparatus 3000 also reads out a stamper ID from the disk.

Then, at the next step S3202, the recording & reproduction apparatus 3000 forms a judgment as to whether or not a disk ID has already been recorded on the optical disk 3020 serving as a recording medium. If a disk ID has already been recorded on the optical disk 3020, the flow of the program goes on to a step S3203 at which the disk ID is read out from the optical disk 3020 in processing shown in Fig. 32. If a disk ID has not been recorded on the optical disk 3020, on the other hand, the flow of the program goes on to a step S3204 at which a disk ID is generated at random or by adoption of a method determined in advance and recorded onto the optical disk 3020. The processing carried out at the step S3204 corresponds to processing shown in the block diagram of Fig. 33. Since the disk ID is peculiar to the optical disk 3020, the disk ID may be recorded in a read-in area of the optical disk 3020. The flow of the program then goes on from the step S3203 or S3204 to the next step S3205.

At the step S3205, a disk-unique key is generated by using the media key and the stamper ID, which have been read out from the memory at the step S3201, as well as the disk ID. As a concrete method of generating a disk-unique key, the same method as the first embodiment is adopted. In this case, however, a media key is used as a substitute for a master key.

Then, at the next step S3206, a title key is generated at random or by adoption of a method determined in advance as a key unique to this particular recording operation, and recorded onto the disk 3020. That is to say, a title key is generated for each recording operation. At the same time, a recording mode in which the title (data) was recorded onto the disk 3020, is also recorded onto the disk 3020 as well.

The disk 3020 also includes a data management file containing information showing what data composes each title on the disk 3020. The title key and the recording mode can be stored in this file.

Since steps S3207 to S3215 are the same as respectively the steps S1807 to S1815 of the flowchart shown in Fig. 18, their explanation is not repeated.

As described above, if the cognizant mode is set as the recording mode, a disk-unique key is generated from a media key, a stamper ID and a disk ID whereas a title-unique key is generated from the disk-unique key, a title key and a cognizant key. If the non-cognizant mode is set as the recording mode, on the other hand, a disk-unique key is generated from a media key, a stamper ID and a disk ID whereas a title-unique key is generated from the disk-unique key, a title key and a non-cognizant key. It is to be noted, however, that if no disk-unique key is required, a title-unique key can be generated directly from a media key, a stamper ID, a disk ID, a title key and a cognizant key if the cognizant mode is set as the recording mode. If the non-cognizant mode is set as the recording mode, on the other hand, a title-unique key is generated directly from a media key, a stamper ID, a disk ID, a title key and a non-cognizant key. As another alternative, a title key can be omitted. That is to say, a key equivalent to a title-unique key can be generated from a media key, a stamper ID, a disk ID and a cognizant key if the cognizant mode is set as the recording mode. If the non-cognizant mode is set as the recording mode, on the other hand, a key equivalent to a title-unique key is generated from a media key, a stamper ID, a disk ID and a non-cognizant key.

As described above, data can be recorded onto a recording medium by using a media key.

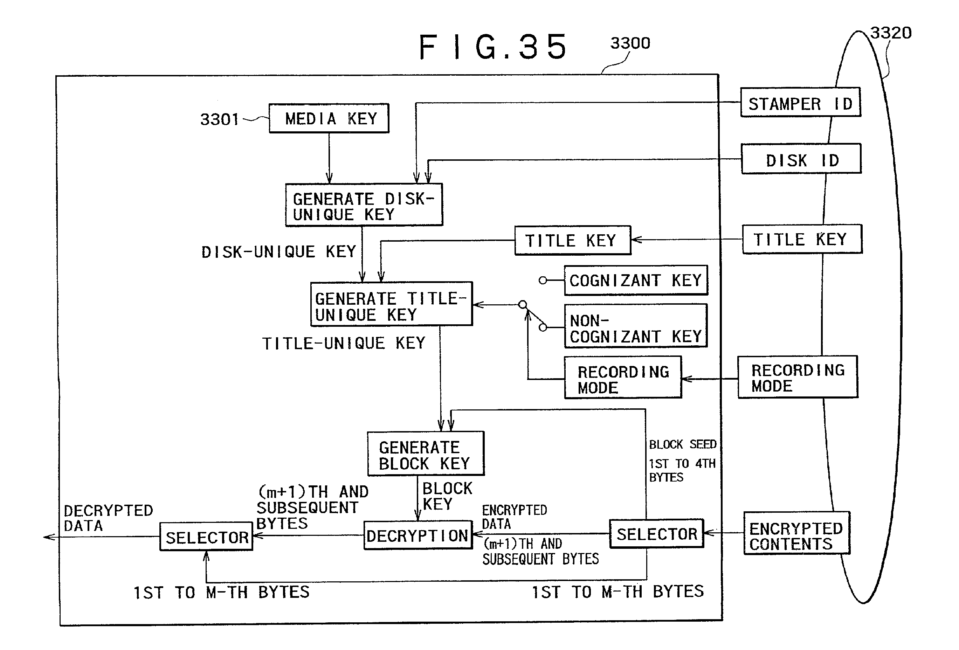

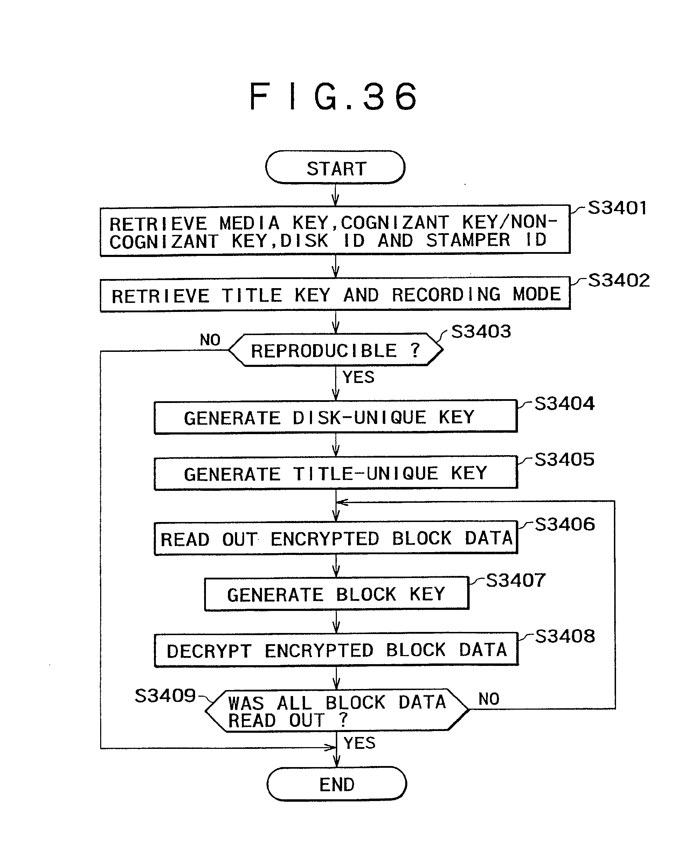

By referring to a block diagram of Fig. 35 and a flowchart shown in Fig. 36, the following description explains processing to reproduce data recorded on a recording medium as described above.

Fig. 35 is a counterpart of the first embodiment's diagram of Fig. 25. In the case of the processing shown in the block diagram of Fig. 35, however, a media key is used as a substitute for the master key. Thus, the processing shown in the block diagram of Fig. 35 is different from that shown in Fig. 25 in that a recording-time generation number (generation #) is omitted.

At a step S3401 of the flowchart shown in Fig. 36, the recording & reproduction apparatus 3300 reads out a cognizant key and/or a non-cognizant key and media key K(t)media from a memory employed in the recording & reproduction apparatus 3300. Media key K(t) media has been found at the step S2804 of the flowchart shown in Fig. 30 and temporarily stored in the memory. The recording & reproduction apparatus 3300 also reads out a stamper ID and a disk ID from the disk 3320.

It is to be noted that, when the recording medium 3320 is mounted on the recording & reproduction apparatus 3300, the processing represented by the flowchart shown in Fig. 30 is carried out. If a media key cannot be obtained, the execution of the program is ended without carrying out reproduction processing as will be described later.

Then, the flow of the program goes on to the next step S3402 to read out a title key of data to be reproduced from the disk 3320 and the recording mode in which the data was recorded onto the disk 3320.

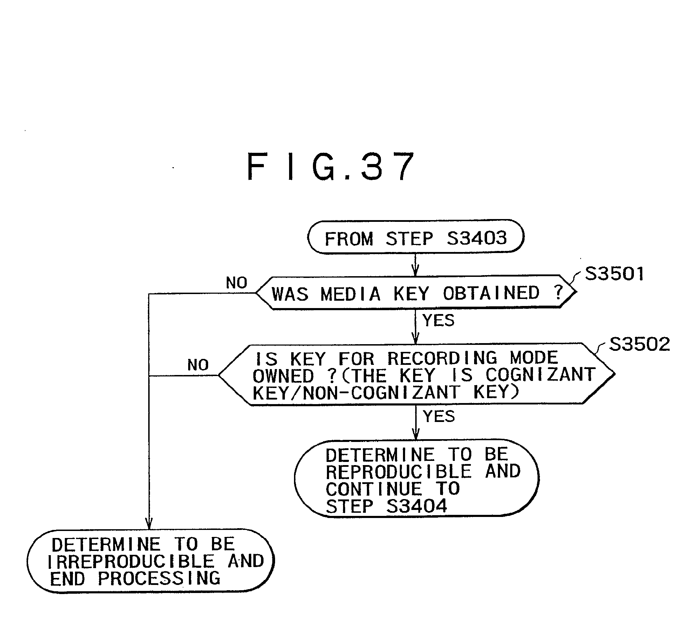

The flow of the program then goes on to a step S3403 to form a judgment as to whether or not this data is reproducible. Details of this judgment formation at the step S3403 are represented by a flowchart shown in Fig. 37

As shown in Fig. 37, the flowchart begins with a step S3501 to form a judgment as to whether or not a media key has been obtained. If a media key was not obtained, the data to be reproduced is determined to be irreproducible. If a media key was obtained, the flow of the program goes on to a step S3502. The processing carried out at the step S3502 is the same as the step S2503. That is to say, if the data has been recorded in the cognizant mode used as a recording mode and the recording & reproduction apparatus 3300 has the cognizant key or the data has been recorded in the non-cognizant mode used as a recording mode and the recording & reproduction apparatus 3300 has the non-cognizant key, the data to be reproduced is determined to be reproducible. In this case, the flow of the program goes on to a step S3404. Otherwise, the data to be reproduced is determined to be irreproducible. In this case, steps S3404 to S3409 are skipped and the execution of the program is terminated without carrying out the reproduction processing.

Since pieces of processing carried out at the steps S3404 to S3409 are the same as those carried out at respectively the steps S2404 to S2409 of the flowchart shown in Fig. 26, their explanation is not repeated.

As described above, if the cognizant mode is set as the recording mode, a disk-unique key is generated from a media key, a stamper ID and a disk ID whereas a title-unique key is generated from the disk-unique key, a title key and a cognizant key. If the non-cognizant mode is set as the recording mode, on the other hand, a disk-unique key is generated from a media key, a stamper ID and a disk ID whereas a title-unique key is generated from the disk-unique key, a title key and a non-cognizant key. It is to be noted, however, that if no disk-unique key is required, a title-unique key can be generated directly from a media key, a stamper ID, a disk ID, a title key and a cognizant key if the cognizant mode is set as the recording mode. If the non-cognizant mode is set as the recording mode, on the other hand, a title-unique key is generated directly from a media key, a stamper ID, a disk ID, a title key and a non-cognizant key. As another alternative, a title key can be omitted. That is to say, a key equivalent to a title-unique key can be generated from a media key, a stamper ID, a disk ID and a cognizant key if the cognizant mode is set as the recording mode. If the non-cognizant mode is set as the recording mode, on the other hand, a key equivalent to a title-unique key is generated from a media key, a stamper ID, a disk ID and a non-cognizant key.

As described above, data can be recorded onto a recording medium and reproduced from a recording medium by using a media key.

6: Recording and Reproduction of Contents Based on Cryptographic Processing Using an LSI Key

The following description explains a recording & reproduction apparatus for recording and reproducing contents based on cryptographic processing by using an LSI key and explains a processing configuration for such a recording & reproduction apparatus. An LSI key is set for an encryption/decryption LSI, which functions as the cryptographic-processing means for carrying out encryption and/or decryption processes in a recording & reproduction apparatus shown in Figs. 1 and 2. An LSI key is stored in an LSI for which the LSI key is set. For example, an LSI key is set as a key common to LSIs having the same specifications. As an alternative, an LSI key is set as a key common to only LSIs fabricated in a predetermined LSI manufacturing unit (lot unit).

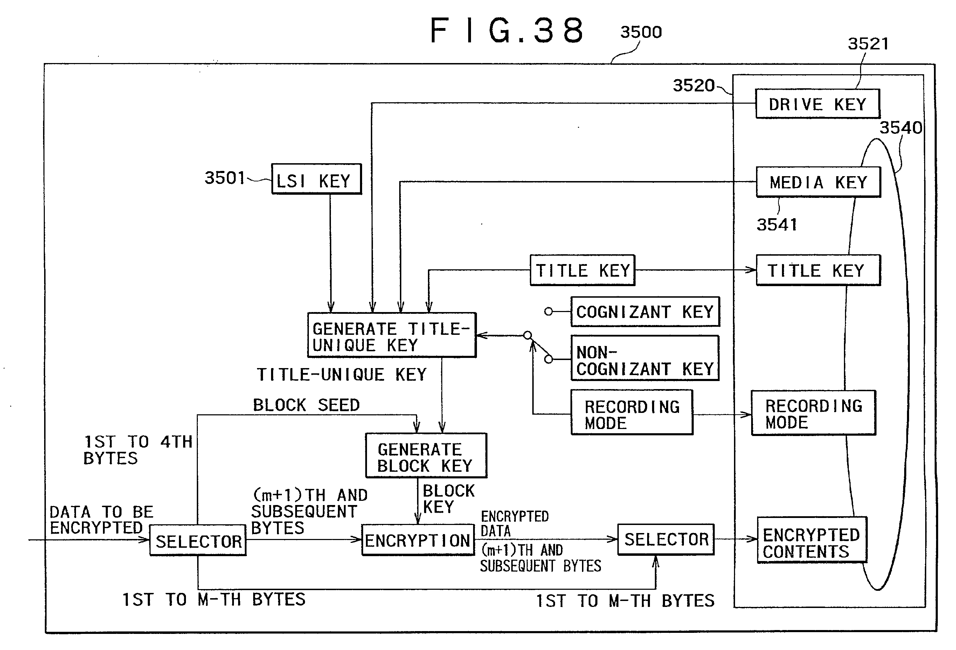

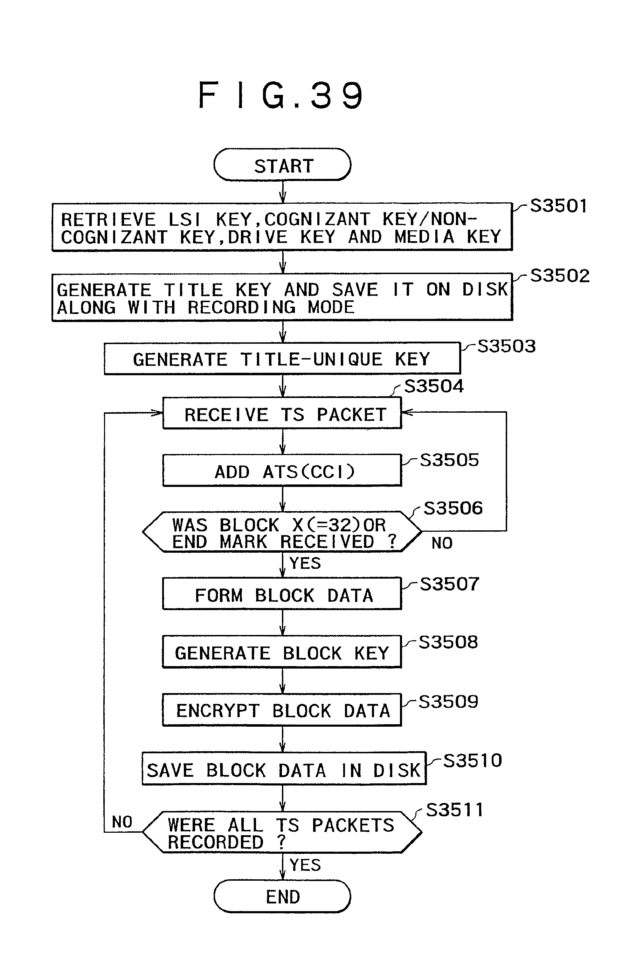

An HDR (Hard Disk Recorder) is explained below as an example of a recording & reproduction apparatus for carrying out recording and reproduction processes using an LSI key. First of all, by referring to a block diagram of Fig. 38 and a flowchart shown in Fig. 39, processing to record data of contents by using an LSI key for cryptographic processing the data is explained.

An HDR (Hard Disk Recorder) 3500 employs an HD (hard disk) 3540 as data recording and reproduction media or a recording medium. The following description explains an embodiment implementing an apparatus having a configuration in which an HDD (Hard Disk Drive) 3520 is incorporated in the HDR (Hard Disk Recorder) 3500 and data is recorded onto an HD (hard disk) 3540 employed in the HDD (Hard Disk Drive) 3520 and reproduced from the HD 3540 as shown in Fig. 38. The HDR (Hard Disk Recorder) 3500 employs an encryption/decryption LSI including an embedded LSI key 3501. In the HDD (Hard Disk Drive) 3520, a drive key 3521 has been stored. The drive key 3521 is a key set for the HDD (Hard Disk Drive) 3520. On the HD (Hard Disk) 3540, a media key 3541 has been recorded. The media key 3541 is a key unique to the HD (Hard Disk) 3540. The media key 3541 is not a key distributed by using an EKB described earlier, but a key recorded on the HD (Hard Disk) 3540 when the HD (Hard Disk) 3540 is manufactured at a factory.

Fig. 39 shows a flowchart representing a data-recording process using an LSI key in accordance with this embodiment. This flowchart corresponds to the flowchart shown in Fig. 18. The flowchart shown in Fig. 39 is explained as follows.

As shown in Fig. 39, the flowchart begins with a step S3501 at which a cognizant key and/or a non-cognizant key are read out from the memory employed in the HDR (recording & reproduction apparatus) 3500. At the same step, an LSI key 3501 is also read out from the encryption/decryption LSI serving as a cryptographic-processing means. In addition, a drive key 3521 and a media key 3541 are also read out from the HD (Hard Disk) 3540. The drive key 3521 is a key set for the HDD (Hard Disk Drive) 3520 and the media key 3541 is set as a key unique to the HD (Hard Disk) 3540.

Then, at the next step S3502, a title key is generated at random or by adoption of a method determined in advance as a key unique to this particular recording operation, and recorded onto the HD (Hard Disk) 3540. That is to say, a title key is generated for each recording operation. At the same time, a recording mode, in which the title (data) was recorded, is recorded onto the HD (Hard Disk) 3540.

The HD 3540 also includes a data management file containing information showing what data composes each title on the HD 3540. The title key and the recording mode can be stored in this file.

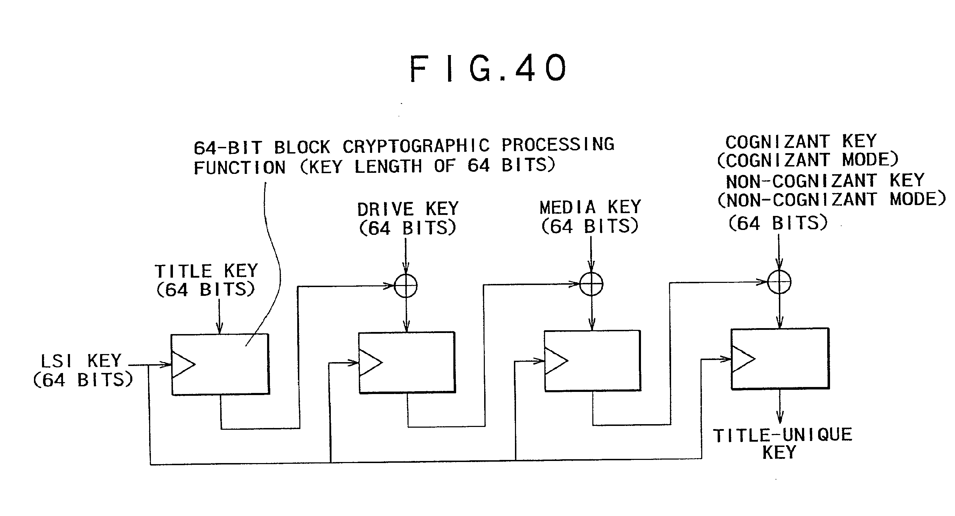

Processing carried out at the next step S3503 to generate a title-unique key is explained by referring to Fig. 40. As shown in Fig. 40, in a typical configuration, the LSI key, the title key, the drive key, the media key and the cognizant key in the case of the cognizant mode or the non-cognizant key in the case of the non-cognizant mode are supplied to hash functions based on block cryptographic processing sequentially. To put it in detail, first of all, the title key is supplied to the hash function along with the LSI key. Then, the exclusive logical sum of the output of the hash function and the drive key is supplied to the hash function along with the LSI key. Subsequently, the exclusive logical sum of the output of the hash function and the media key is supplied to the hash function along with the LSI key. Finally, the exclusive logical sum of the output of the third-stage hash function and the cognizant or non-cognizant key is supplied to the hash function along with the LSI key to generate a title-unique key.

Since steps S3504 to S3511 are the same as respectively the steps S1808 to S1815 of the flowchart shown in Fig. 18, their explanation is not repeated.

As described above, data can be recorded onto a recording medium by using an LSI key.

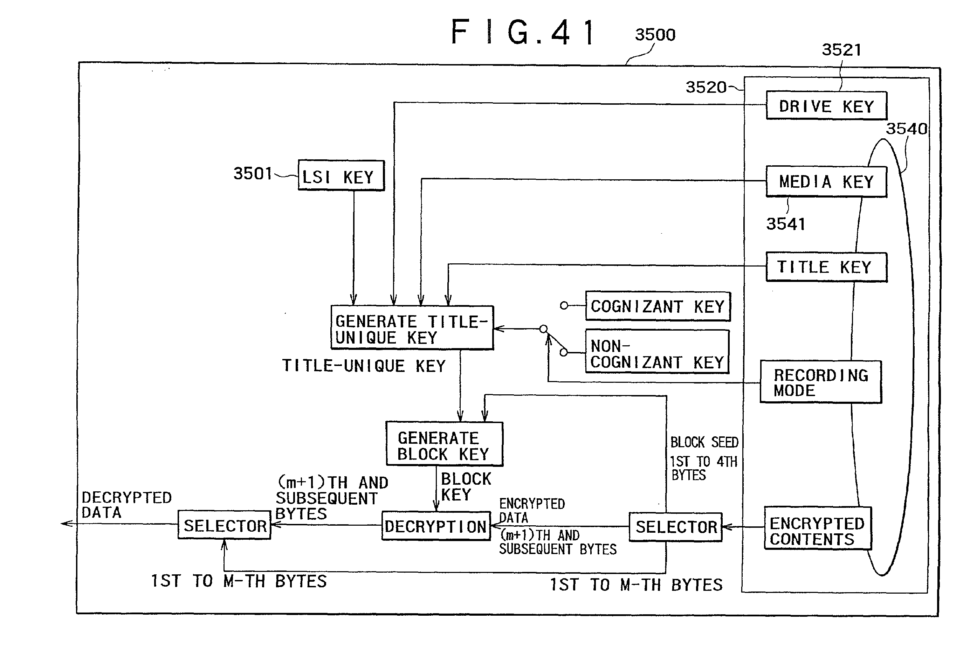

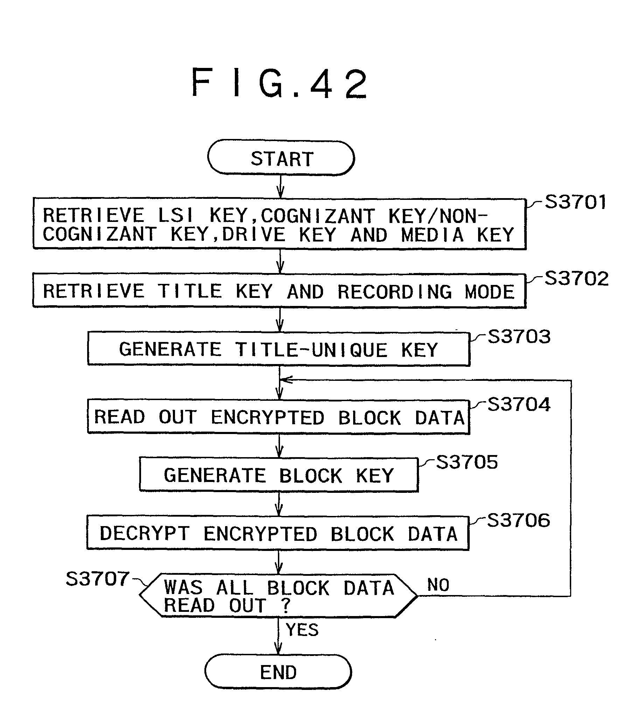

Next, processing to reproduce data recorded as described above is explained by referring to a block diagram of Fig. 41 and a flowchart shown in Fig. 42.

As shown in Fig. 42, the flowchart begins with a step S3701 at which a cognizant key and/or a non-cognizant key are read out from the memory employed in the HDR (recording & reproduction apparatus) 3500. At the same step, an LSI key 3501 is also read out from the encryption/decryption LSI serving as a cryptographic-processing means. In addition, a drive key 3521 and a media key 3541 are also read out from the HD (Hard Disk) 3540. The drive key 3521 is a key set for the HDD (Hard Disk Drive) 3520 and the media key 3541 is set as a key unique to the HD (Hard Disk) 3540.

Then, the flow of the program goes on to the next step S3702 to read out a title key of data to be reproduced from the disk and a recording mode, in which the data was recorded onto the disk.

Subsequently, at the next step S3703, a title-unique key is generated. The processing to generate a title-unique key is the same as the processing described above by referring to Fig. 40. Since steps S3704 to S3707 are the same as respectively the steps S2406 to S2409 of the flowchart shown in Fig. 26, their explanation is not repeated.

As described above, data can be recorded onto a recording medium and data can be reproduced from a recording medium by using an LSI key.

7: Copy Control

[Copy control in a recording process]

In order to protect interests such as a copyright of contents, it is necessary to control copies of contents in an apparatus granted a license.

In an operation to record contents onto a recording medium, the contents are examined to determine whether the contents are copy-free contents, that is, contents that can be copied. If the contents are contents that can be copied, the contents need to be copied as copy-free contents. In addition, in an operation to reproduce contents from a recording medium and output the reproduced contents, it is necessary to prevent the output contents from being illegally copied later.

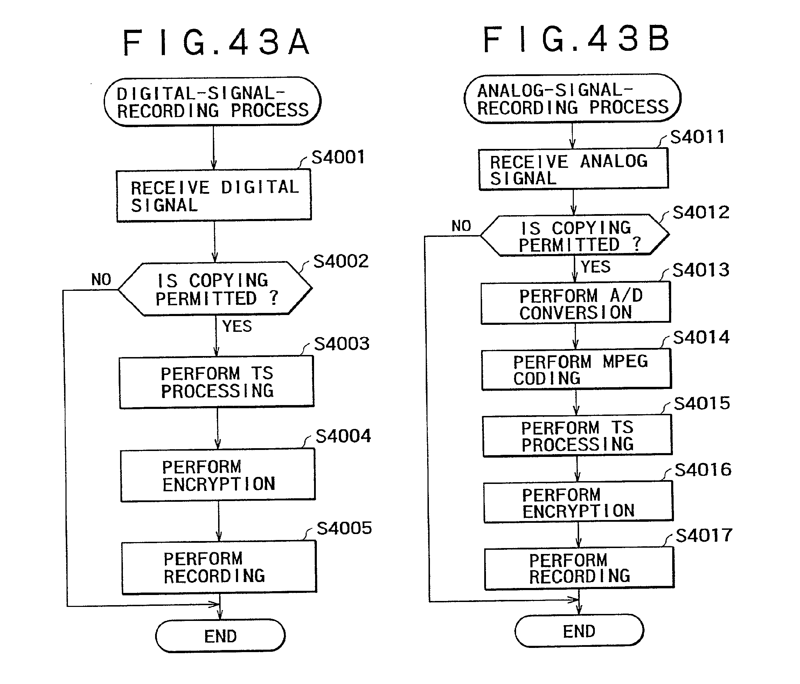

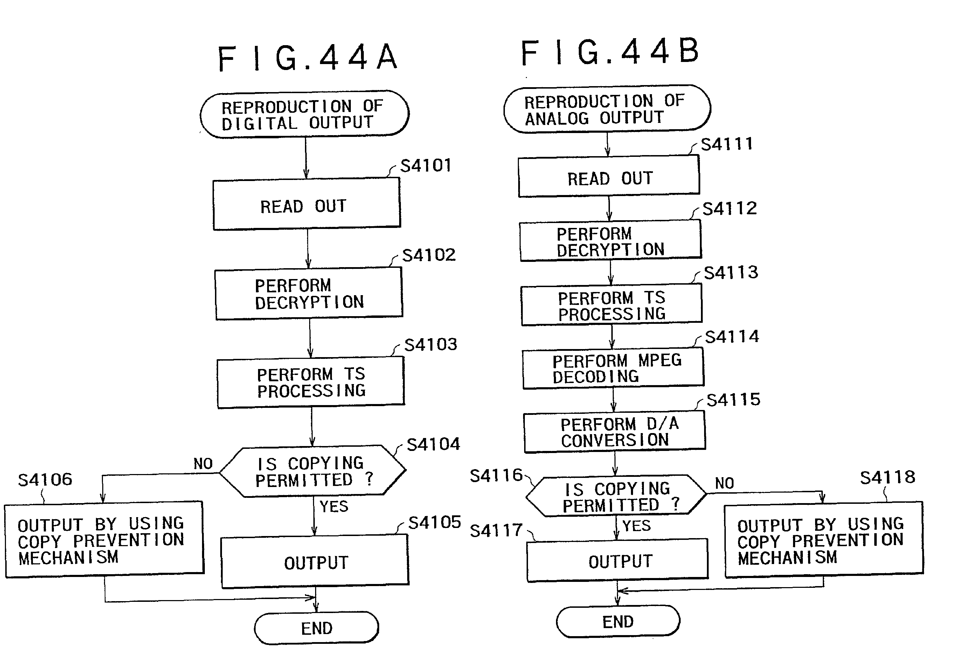

By referring flowcharts shown in Figs. 43A and 43B, and 44A and 44B, the following description explains processing carried out by the recording & reproduction apparatus shown in Fig. 1 or 2 to record and reproduce contents while executing copy control of the contents.

First of all, by referring to the flowchart shown in Fig. 43A, the following description explains processing to record contents represented by a digital signal received from an external source onto a recording medium. The recording & reproduction apparatus 100 shown in Fig. 1 is taken as an example in the description. Contents represented by a digital signal are also referred to as digital contents. As shown in the figure, the flowchart begins with a step S4001 when a digital signal is supplied from an IEEE 1394 serial bus or the like to the input/output I/F 120. Thus, at this step, the input/output I/F 120 receives the digital contents. The flow of the program then goes on to a step S4002.

At the step S4002, the input/output I/F 120 forms a judgment as to whether or not the received digital contents can be copied. The input/output I/F 120 determines that the received digital contents can be copied if, for example, the received digital contents are unencrypted contents. That is to say, unencrypted contents are supplied to the input/output I/F 120 without being subjected to processing conforming to the DTCP standard described above.

Assume that the recording & reproduction apparatus 100 is an apparatus conforming to the DTCP standard and thus carries out processing in accordance with the DTCP standard. The DTCP standard prescribes an EMI (Encryption Mode Indicator) with a length of 2 bits as copy control information for controlling copy operations. An EMI value of 00B indicates that the contents are "copy-freely" contents. The character B appended to a number as a suffix indicates that the number is expressed in the binary format. An EMI value of 01B indicates that the contents are "no-more-copies" contents that can no longer be copied. An EMI value of 10B indicates that the contents are "copy-one-generation" contents that can be copied only once. An EMI value of 11B indicates that the contents are "copy-never" contents that cannot be copied at all.

If an EMI is included in a signal supplied to the input/output I/F 120 employed in the recording & reproduction apparatus 100 and the EMI indicates that the contents are copy-freely contents or copy-one-generation contents, the contents are determined to be contents that can be copied. If the EMI indicates that the contents are no-more-copies contents or copy-never contents, on the other hand, the contents are determined to be contents that cannot be copied.

Then, the flow of the program goes on to a step S4002 to form a judgment as to whether or not the contents can be copied. If the contents are determined to be contents that cannot be copied, the recording process is ended by skipping steps S4003 to S4005. Thus, in this case, the contents are not recorded onto the recording medium 195.

If the outcome of the judgment formed at the step S4002 indicates that the contents can be copied, on the other hand, the flow of the program goes on to a step S4003. The steps S4003 to S4005 are the same as respectively the steps S302 to S304 of the flowchart shown in Fig. 3A. That is to say, processing is carried out by the transport-stream-processing means 300 to add an ATS to each transport packet and encryption processing is carried out by the cryptographic-processing means 150. Encrypted contents obtained as a result of these pieces of processing are recorded onto the recording medium 195 before the recording process is terminated.

It is to be noted that an EMI is included in the digital signal supplied to the input/output I/F 120 and, when the digital contents are recorded on to the recording medium, the EMI or information indicating copy control status like the EMI is recorded onto the recording medium along with the digital contents. An example of such information is embedded CCI prescribed by the DTCP standard.

In the EMI-recording process, in general, a copy-one-generation EMI is converted into a no-more-copies EMI so that the digital contents can no longer be copied.

In an embodiment of the recording & reproduction apparatus provided by the present invention, copy control information such as an EMI or embedded CCI is recorded onto the recording medium by being added to a TS packet. To put it concretely, as shown in examples 2 and 3 of Fig. 10, a 32-bit block seed including an ATS with a length in the range 24 to 30 bits and copy control information is added to each TS packet as shown in Fig 5.

Next, by referring to the flowchart shown in Fig. 43B, the following description explains processing to record contents represented by an analog signal received from an external source onto a recording medium. In other words, processing represented by the flowchart shown in Fig. 43B is explained. Contents represented by an analog signal are referred to as analog contents. As shown in the figure, the flowchart begins with a step S4011 when an analog signal is supplied to the input/output I/F 140. The flow of the program then goes on to a step S4012. At the step S4012, the input/output I/F 140 forms a judgment as to whether or not the received analog contents can be copied.

The judgment of the step S4012 is formed by, for example, determining whether or not the signal received by the input/output I/F 140 includes a macrovision signal or a CGMS-A (Copy Generation Management System-Analog) signal. A macrovision signal is a signal that becomes a noise when recorded onto a video cassette tape of the VHS system. An analog signal including a macrovision signal is determined to be a signal conveying analog contents that cannot be copied.

A CGMS-A signal is a CGMS signal applied to copy control of an analog signal. A CGMS signal is a signal used in copy control of a digital signal. A CGMS-A signal indicates that the analog contents are copy-freely, copy-one-generation or copy-never contents. As described earlier, copy-one-generation contents are contents that can be copied once. On the other hand, copy-never contents are contents that cannot be copied at all.

Thus, if the CGMS-A signal is included in the signal received by the input/output I/F 140 and the CGMS-A signal indicates copy-freely or copy-one-generation analog contents, the analog contents are determined to be contents that can be copied. If the CGMS-A signal indicates copy-never analog contents, the analog contents are determined to be contents that cannot be copied at all.

In addition, if the signal received by the input/output I/F 140 includes neither the macrovision signal nor the CGMS-A signal, the analog contents are determined to be contents that can be copied.

If the outcome of the judgment formed at the step S4012 indicates that the analog contents are contents that cannot be copied, the execution of the program is terminated by skipping steps S4013 to S4017 without carrying out the recording process. Thus, in this case, the analog contents are not recorded onto the recording medium 195.

If the outcome of the judgment formed at the step S4012 indicates that the analog contents are contents that can be copied, on the other hand, the flow of the program goes on to a step S4013. The steps S4013 to S4017 are the same as respectively the steps S322 to S326 of the flowchart shown in Fig. 3B. In the processing carried out at those steps, the analog contents are subjected to an analog-to-digital conversion process, an MPEG encoding process, TS processing and an encryption process before being recorded onto the recording medium at the end of the recording process.

It is to be noted that, if a CGMS-A signal is included in the analog signal received by the input/output I/F 140, the CGMS-A signal is also recorded onto the recording medium along with the analog contents in the processing to record the analog contents onto the recording medium. That is to say, the CGMS-A signal is recorded in an area allocated to CCI or other information shown in Fig. 10. In this case, a copy-one-generation CGMS-A signal is generally converted into a no-more-copies CGMS-A signal so that the analog contents can no longer be copied unless this system sets a rule specially prescribing that, "even though copy-one-generation copy control information is recorded onto the recording medium without being converted into no-more-copies copy control information, the recorded copy-one-generation copy control information is treated like no-more-copies copy control information."

[Copy control in a reproduction process]

A flowchart shown in Fig. 44A represents a reproduction process to reproduce contents from a recording medium and output the reproduced contents to an external destination as digital contents. Next, the processing represented by the flowchart shown in Fig. 44A is explained. First of all, pieces of processing are carried out at steps S4101, S4102 and S4103 in the same way as respectively the steps S401, S402 and S403 of the flowchart shown in Fig. 4A. During these pieces of processing, encrypted contents read out from the recording medium is subjected to a decryption process and a TS process in the cryptographic-processing means 150. Digital contents completing these pieces of processing is supplied to the input/output I/F 120 by way of the bus 110.

Then, at the next step S4104, the input/output I/F 120 forms a judgment as to whether or not digital contents supplied to the input/output I/F 120 can be copied at a later time. If neither EMI nor information such as copy control information indicating copy control status in the same way as an EMI is included in the digital contents supplied to the input/output I/F 120, for example, the digital contents are determined to be contents that can be copied at a later time.

If copy control information such as an EMI is included in the digital contents supplied to the input/output I/F 120, that is, if the copy control information such as an EMI has been recorded onto the recording medium in conformity with the DTCP standard in the content-recording operation, the copy control information such as an EMI, which is referred to as a recorded EMI, is examined. If the copy control information such as an EMI indicates that the digital contents are copy-freely contents, the contents are determined to be contents that can be copied at a later time. If the copy control information such as an EMI indicates that the digital contents are no-more-copies contents, on the other hand, the contents are determined to be contents that cannot be copied any more.

It is to be noted that the copy control information such as an EMI usually indicates neither copy-one-generation contents nor copy-never contents. This is because a copy-one-generation EMI is converted into a no-more-copies EMI at a recording time and digital contents including a copy-never EMI is not recorded onto the recording medium except that this system sets a rule specially prescribing that, "even though copy-one-generation copy control information is recorded onto the recording medium without being converted into no-more-copies copy control information, the recorded copy-one-generation copy control information is treated like no-more-copies copy control information."

If the outcome of the judgment formed at the step S4104 indicates that digital contents supplied to the input/output I/F 120 can be copied at a later time, the flow of the program goes on to a step S4105 at which the input/output I/F 120 outputs the digital contents to an external destination and ends the reproduction processing.

If the outcome of the judgment formed at the step S4104 indicates that digital contents supplied to the input/output I/F 120 are not contents that can be copied at a later time, on the other hand, the flow of the program goes on to a step S4106 at which the input/output I/F 120 outputs the digital contents to an external destination in a form preventing the contents from being copied in accordance with the DTCP standard or the like, and ends the reproduction processing.

Assume for example that the copy control information such as an EMI indicates no-more-copies contents, or copy-one-generation contents in a system that sets a rule specially prescribing that, "even though copy-one-generation copy control information is recorded onto the recording medium without being converted into no-more-copies copy control information, the recorded copy-one-generation copy control information is treated like no-more-copies copy control information." In this case, the digital contents can no longer be copied.

For the above reason, the input/output I/F 120 authenticates the partner apparatus in accordance with the DTCP standard. If a result of the authentication indicates that the partner apparatus is a valid apparatus, that is, an apparatus conforming to the DTCP standard, the digital contents are encrypted before being transmitted to the partner apparatus.

A flowchart shown in Fig. 44B represents a reproduction process to reproduce contents from a recording medium and output the reproduced contents to an external destination as analog contents. Next, the processing represented by the flowchart shown in Fig. 44B is explained. First of all, pieces of processing are carried out at steps S4111 to S4115 in the same way as respectively the steps S421 to S425 of the flowchart shown in Fig. 4B. During these pieces of processing, encrypted contents read out from the recording medium is subjected to a decryption process, a TS process, an MPEG decoding process and a D/A conversion process. Analog contents completing these pieces of processing is supplied to the input/output I/F 140.

Then, at the next step S4116, the input/output I/F 140 forms a judgment as to whether or not analog contents supplied to the input/output I/F 140 can be copied at a later time. If neither EMI nor information such as copy control information indicating copy control status in the same way as an EMI is included in the analog contents supplied to the input/output I/F 140, for example, the analog contents are determined to be contents that can be copied at a later time.

If copy control information such as an EMI is included in the analog contents supplied to the input/output I/F 140, that is, if the copy control information such as an EMI has been recorded onto the recording medium in conformity with the DTCP standard in the content-recording operation, the copy control information such as an EMI is examined. If the copy control information such as an EMI indicates that the analog contents are copy-freely contents, the contents are determined to be contents that can be copied at a later time.

If the copy control information such as an EMI indicates that the analog contents are no-more-copies contents, or copy-one-generation contents in a system that sets a rule specially prescribing that, "even though copy-one-generation copy control information is recorded onto the recording medium without being converted into no-more-copies copy control information, the recorded copy-one-generation copy control information is treated like no-more-copies copy control information," on the other hand, the contents are determined to be contents that cannot be copied at a later time.

If a CGMS-A signal is included in the analog contents supplied to the input/output I/F 140, that is, if the CGMS-A signal has been recorded onto the recording medium in the content-recording operation, the CGMS-A signal is examined. If CGMS-A signal indicates that the analog contents are copy-freely contents, the contents are determined to be contents that can be copied at a later time. If CGMS-A signal indicates that the analog contents are copy-never contents, on the other hand, the contents are determined to be contents that cannot be copied at a later.

If the outcome of the judgment formed at the step S4116 indicates that analog contents supplied to the input/output I/F 140 can be copied at a later time, the flow of the program goes on to a step S4117 at which the input/output I/F 140 outputs the analog signal to an external destination and ends the reproduction processing.

If the outcome of the judgment formed at the step S4116 indicates that analog contents supplied to the input/output I/F 140 are not contents that can be copied at a later time, on the other hand, the flow of the program goes on to a step S4118 at which the input/output I/F 140 outputs the analog contents to an external destination in a form preventing the contents from being copied, and ends the reproduction processing.

Assume for example that the copy control information such as an EMI indicates no-more-copies contents, or copy-one-generation contents in a system that sets a rule specially prescribing that, "even though copy-one-generation copy control information is recorded onto the recording medium without being converted into no-more-copies copy control information, the recorded copy-one-generation copy control information is treated like no-more-copies copy control information." In this case, the analog contents can no longer be copied.

If the analog contents can no longer be copied, the input/output I/F 140 adds typically a macrovision signal or a CGMS-A signal indicating copy-never copy control status to the analog contents being output. If a recorded CGMS-A signal indicates copy-never copy control status, the analog contents cannot be copied at all. In this case, the input/output I/F 140 outputs the CGMS-A signal as it is along with the analog contents.

By recording or reproducing contents while executing copy control of the contents as described above, it is possible to prevent contents from being copied illegally, that is, from being copied by violation of a permitted-copy control rule.

8: Copying or Storing Process of Contents Requiring No Re-Encryption

The data-recording process adopting the copy-control technique described above has been explained by focusing on processing to record basically unencrypted data received from an external source. If the data received from an external source is encrypted contents, the input encrypted data is decrypted before being again encrypted by using block keys, which are each based on a title-unique key, to be finally recorded onto a recording medium. The title-unique key is generated on the basis of a master key, a media key, an LSI key and other keys.

When data of typically contents are copied from an apparatus to another or the data is stored onto a recording & reproduction apparatus from the Internet or data distribution means such as a satellite, the data is encrypted prior to transmission so that the data can be transmitted with a higher degree of security. However, the processing carried out by the recording & reproduction apparatus to decrypt input encrypted contents and re-encrypt the contents lower the degree of efficiency with which the data-copying and data-storing processes are carried out.

If the two recording & reproduction apparatus on the transmission and reception sides are each an apparatus granted a license for allowing the apparatus to legally utilize contents, in a process to copy or transfer encrypted contents from the apparatus on the transmission side to the apparatus on the reception side, the encrypted contents can be copied or transferred right away from a recording medium employed in the apparatus on the transmission side to a recording medium employed in the apparatus employed in the reception side without decrypting the encrypted contents and re-encrypting the decrypted contents in order to increase the degree of efficiency with which the content-copying operation is carried out. In addition, in a process to receive encrypted contents from the Internet or data distribution means such as a satellite and store the contents into a recording & reproduction apparatus granted a license for allowing the apparatus to legally utilize the contents, the contents can be stored right away without decrypting the encrypted contents and re-encrypting the decrypted contents in order to increase the degree of efficiency with which the content-storing operation is carried out.

The following description explains a configuration in which, in a process to copy or transfer encrypted contents from the apparatus on the transmission side to the apparatus on the reception side and in a process to receive encrypted contents from the Internet or data distribution means such as a satellite and store the contents into the apparatus on the reception side, the contents can be stored right away into the apparatus on the reception side without decrypting the encrypted contents and re-encrypting the decrypted contents in order to increase efficiency and, in addition, the apparatus on the reception side is capable of obtaining a usable decryption key by itself.

8-1: Processing to Copy Contents from an Apparatus to Another

First of all, processing to copy contents from an apparatus to another is explained. In the following typical processing to copy or transfer contents from a recording & reproduction apparatus to another, an HDR (Hard Disk Recorder) system and a DVR system serve as the data-transmitting apparatus and the data-receiving apparatus respectively. The HDR carries out processing to generate a title-unique key by using an LSI key and stores encrypted contents onto a hard disk. On the other hand, the DVR carries out processing to generate a title-unique key by using a master key and stores encrypted contents onto a recording medium.

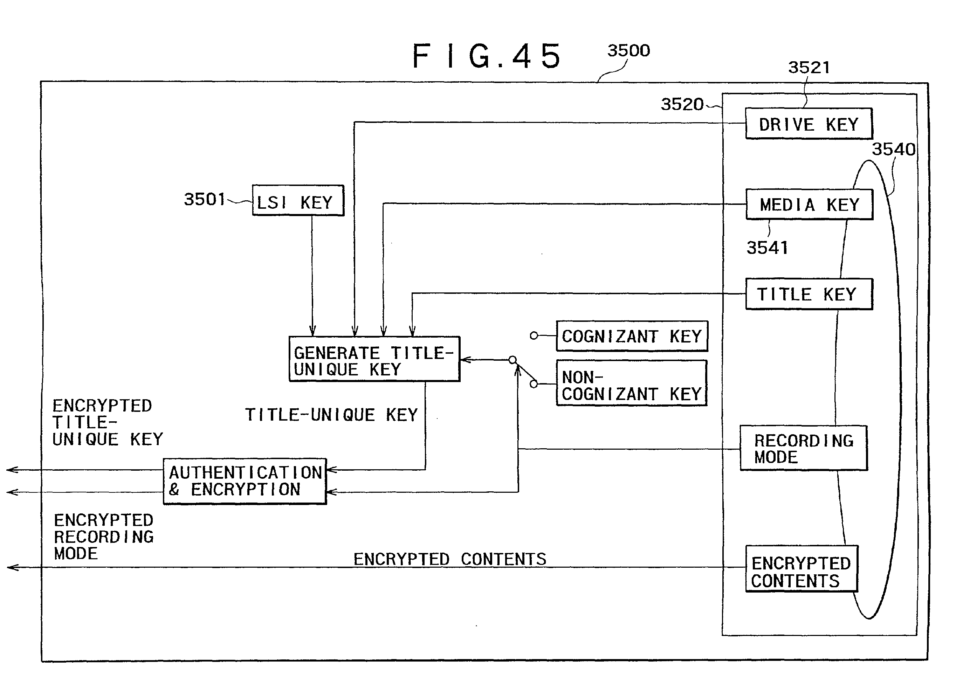

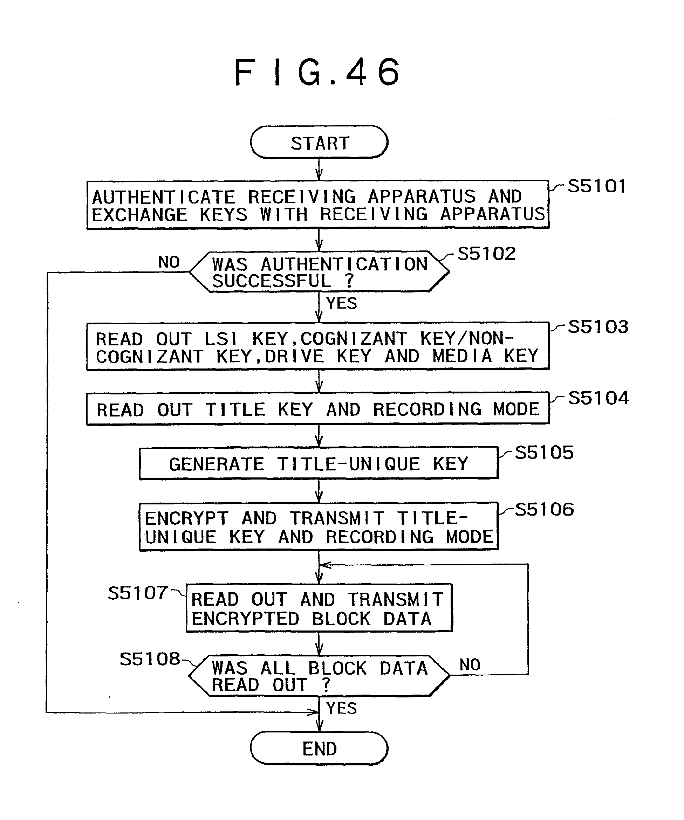

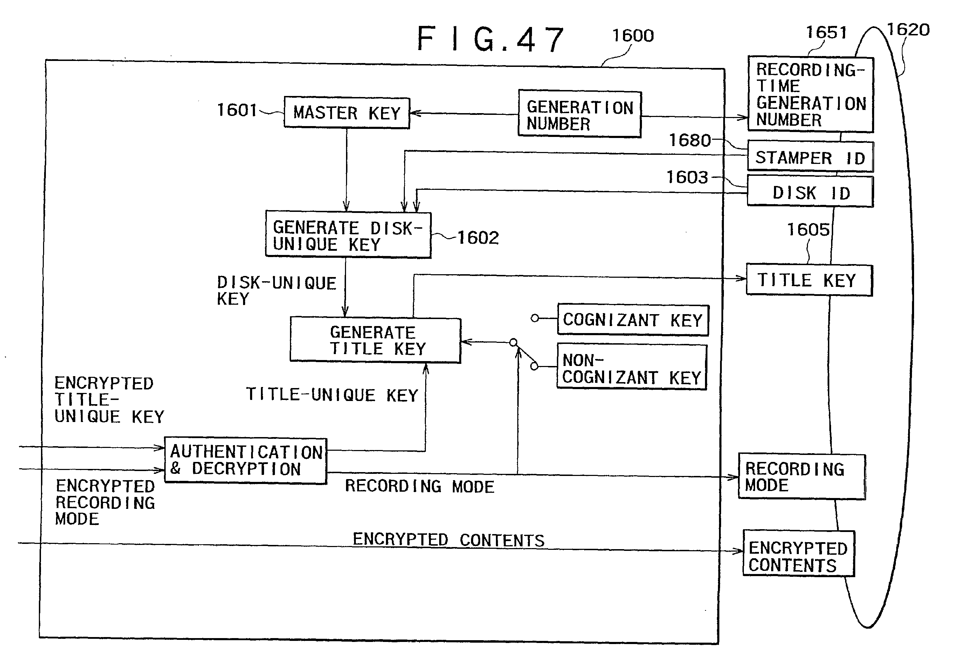

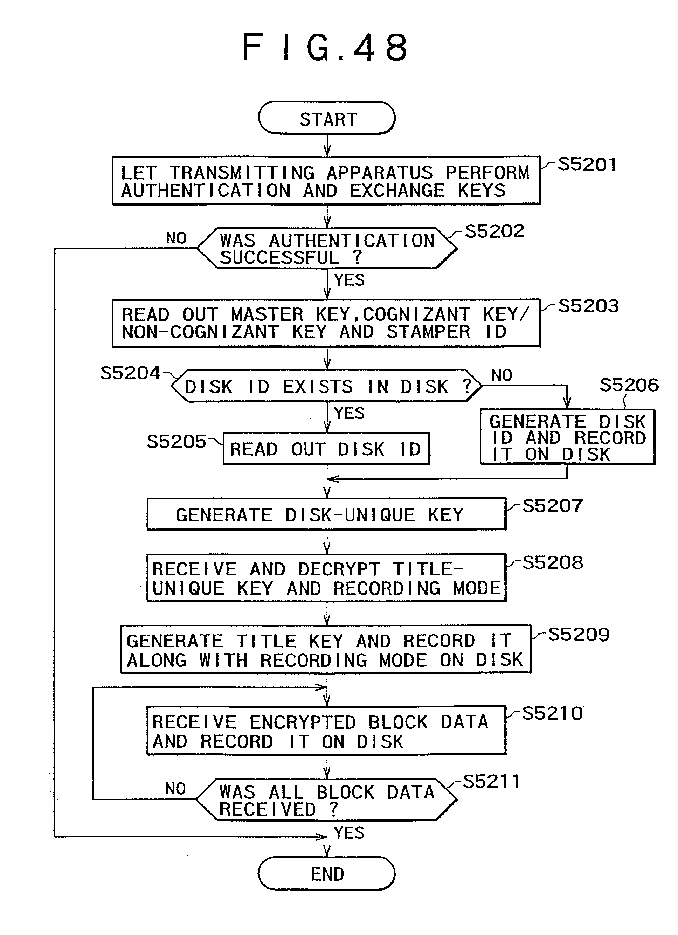

Fig. 45 is a diagram showing processing carried out by the HDR system serving as the transmitting apparatus to output contents. On the contrary, Fig. 47 is a diagram showing processing carried out by the DVR system serving as the receiving apparatus to input contents. Fig. 46 shows a flowchart representing the processing carried out by the HDR system to output contents. On the other hand, Fig. 48 shows a flowchart representing the processing carried out by the DVR system to input contents. First of all, the processing carried out by the HDR system to output contents are explained by referring to the flowchart shown in Fig. 46.

As shown in the figure, the flowchart begins with a step S5101 at which the content-transmitting apparatus and the content-receiving apparatus authenticate each other and exchange keys in order to confirm that both the apparatus are valid apparatus. Typical protocols of the mutual authentication processing include a protocol based on common-key cryptographic processing in conformity with the ISO/IEC 9798-2 specifications, a protocol based on public-key cryptographic processing in conformity with the ISO/IEC 9798-3 specifications and a protocol based on a cryptography check function (MAC) in conformity with the ISO/IEC 9798-4 specifications.

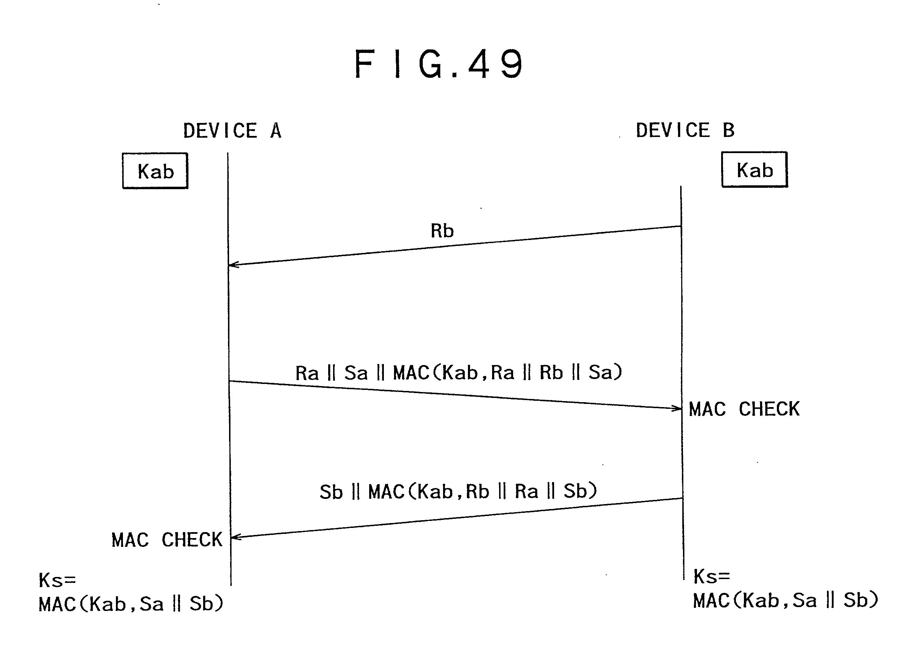

Fig. 49 is an explanatory diagram showing a typical method adopted by the embodiment to implement the mutual authentication using the cryptography check function (MAC) and implement the cryptographic-processing-key sharing.

In the typical method shown in Fig. 49, devices A and B serve as a content-transmitting apparatus and a content-receiving apparatus respectively and have common key Kab. First of all, device B generates random number Rb and transmits it to device A. It is to be noted that notation "||" shown in Fig. 49 denotes a concatenation operator.

Next, device A generates random numbers Ra and Sa and transmits value MAC (Kab, Ra || Rb || Sa) to device B along with random numbers Ra and Sa. Value MAC (Kab, Ra || Rb || Sa) is obtained as a result of supplying common key Kab as a key and Ra || Rb || Sa as data to the cryptography check function. As indicated by ISO/IEC 9797 specifications, the cryptography check function can be configured by using the DES (Data Encryption Standard) prescribed by FIPS 46-2 specifications.

On the other hand, device B also computes value MAC (Kab, Ra || Rb || Sa) from common key Kab, random number Rb as well as random numbers Ra and Sa, which were received from device A, and compares the computed value with value MAC (Kab, Ra || Rb || Sa) received from device A. If the values match each other, device A is recognized as a valid partner device, and the processing is continued. If the values do not match each other, on the other hand, device A is not recognized as a valid partner device, and the processing is discontinued.

Then, device B generates random number Sb and transmits value MAC (Kab, Rb || Ra || Sb) to device A along with random number Sb. On the other hand, device A also computes value MAC (Kab, Rb || Ra || Sb) from common key Kab, random number Ra as well as random numbers Rb and Sb, which were received from device B, and compares the computed value with value MAC (Kab, Rb || Ra || Sb) received from device B. If the values match each other, device B is recognized as a valid partner device, and the processing is continued. If the values do not match each other, on the other hand, device B is not recognized as a valid partner device, and the processing is discontinued.

Finally, devices A and B each compute value MAC (Kab, Sa || Sb) to be used as a session key of this session.

As described above, the two recording & reproduction apparatus serving as a content-transmitting apparatus and a content-receiving apparatus respectively are capable of checking their mutual validity and sharing a session key with a high degree of security.

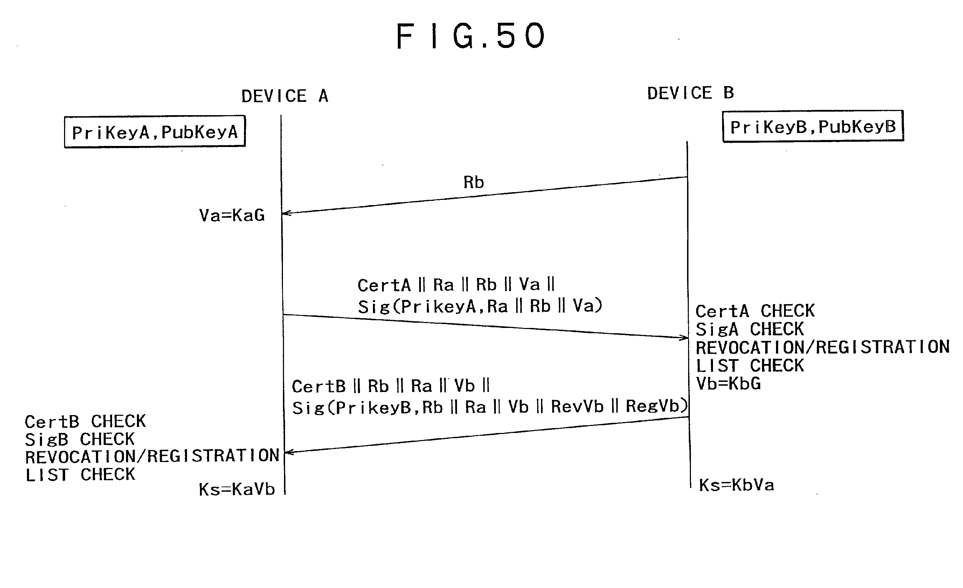

Fig. 50 is a diagram showing the embodiment's authentication technique based on public-key cryptography. Devices A and B each have its own public key PubKey and a private key Prikey. In addition, devices A and B each have a revocation list Rev and a registration list Reg. The revocation list is also referred to as an illegal-user list or a blacklist. The revocation list is typically a list of IDs of apparatus each having its private key exposed to a hacker. The revocation list has a version number, which is incremented monotonously. A digital signature of a key-issuing center is put on the revocation list. On the other hand, the registration list is also referred to as a legal-user list. The registration list is typically a list of IDs of presently reliable apparatus each having its private key unexposed to any hackers. The registration list has a version number, which is incremented monotonously. A digital signature of a key-issuing center is put on the registration list.

In the typical method shown in Fig. 50, first of all, device B generates random number Rb and transmits it to device A. On the other hand, device A generates random number Ka, and multiplies random number Ka by base point G to result in product Va. Base point G is a system common point on an elliptical curve line E. Device A then transmits a signature put on data Ra || Rb || Va || RevVa || RegVa by using its own private key PriKeyA to device B along with public-key certificate other data CertA || Ra || Rb || Va.

Device B checks the validity of public-key certificate CertA of device A and the validity of the signature of device A. If its own revocation list is stored in a memory of its own, device B verifies that the ID of device A is not included on the revocation list. In addition, if its own registration list is stored in a memory of its own, device B verifies that the ID of device A is included on the registration list. If the above verifications end in a failure, device B determines that device A is not a valid device and ends the processing. If the above verifications are completed successfully, device B generates random number Kb and carries out a calculation similar to that of the key-issuing center. Device B then transmits signature data put on data Rb || Ra || Vb || RevVb || RegVb by using its own private key PriKeyb to device A along with public-key certificate other data CertB || Rb || Ra || Vb.

Then, device A multiplies Ka by Vb on the elliptical curve line E to obtain session key Ks. By the same token, device B multiplies Kb by Va on the elliptical curve line E to obtain session key Ks.

By carrying out the processing described above, the content-transmitting apparatus and the content-receiving apparatus are capable of authenticating each other and obtaining session key Ks. Refer back to the flowchart shown in Fig. 46. The explanation of the processing represented by the flowchart is continued as follows. The flow of the program goes on to a step S5102 to form a judgment as to whether or not the mutual authentication process carried out at the step S5101 has been completed successfully. If the mutual authentication process was not completed successfully, the execution of the program is ended without carrying out the following processes. If the mutual authentication process has been completed successfully, on the other hand, the flow of the program goes on to a step S5103 at which the recording apparatus (HDR) 3500 shown in Fig. 45 reads out a cognizant key in the case of the cognizant mode or a non-cognizant key in the case of the non-cognizant mode from its own memory and an LSI key 3501 from an LSI serving as cryptographic-processing means. In addition, the HDR 3500 also reads out a drive key 3521, which is a key set for the HDD (Hard Disk Drive) 3520, and a media key 3541 set as a key unique to the HD (Hard Disk) 3540.

Then, the flow of the program goes on to the next step S5104 to read out a title key of data to be read out from the disk 3540 and a recording mode in which the data was recorded onto the disk 3540.

Subsequently, at the next step S5105, a title-unique key is generated by carrying out the same processing as that explained earlier by referring to Fig. 40.

Then, at the next step S5106, a title-unique key and a recording mode are encrypted by using the session key obtained at the step S5101, and transmitted to the content-receiving apparatus. Subsequently, at the next step S5107, a block of encrypted contents are read out from the recording medium, which is the hard disk 3540 in this case, and transmitted to the content-receiving apparatus. The encrypted contents have been encrypted in the recording & reproduction apparatus (HDR) 3500 serving as the content-transmitting apparatus by using a title-unique key generated on the basis of, among others, the LSI key of the HDR 3500. Then, the flow of the program goes on to the next step S5108 to form a judgment as to whether or not all blocks of the encrypted contents have been read out from the hard disk 3540. If all blocks of the encrypted contents have been read out from the hard disk 3540, the processing is ended.

By referring to Figs. 47 and 48, the following description explains processing carried out by the content-receiving apparatus to receive encrypted contents and store the contents onto a recording medium. In the description, a DVR system is assumed to serve as the content-receiving apparatus. Each step of the flowchart shown in Fig. 48 is explained. As shown in the figure, the flowchart begins with a step S5201 at which the content-transmitting apparatus and the content-receiving apparatus authenticate each other and exchange keys in the same way as the flowchart shown in Fig. 46. By the same token, the flow of the program then goes on to a step S5202 to form a judgment as to whether or not the mutual authentication process has been completed successfully.

If the mutual authentication process has been completed successfully, the flow of the program goes on to a step S5203 at which the DVR system serving as the content-receiving apparatus reads out a master key and a cognizant key in the case of the cognizant mode or a non-cognizant key in the case of the non-cognizant mode from the content-receiving apparatus's own memory as well as a stamper ID from the disk.

Then, the flow of the program goes on to a step S5204 to form a judgment as to whether or not a disk ID has been recorded on the recording medium as identification information. If a disk ID has been recorded on the recording medium, the flow of the program goes on to a step S5205 at which the disk ID is read out from the recording medium. If a disk ID has not been recorded on the recording medium, on the other hand, the flow of the program goes on to a step S5206 at which a disk ID is generated as a random number or by adoption of a method determined in advance, and recorded onto the recording medium. Subsequently, at the next step S5207, a disk-unique key is generated by using the master key, the stamper ID and the disk ID. As described earlier, a disk-unique key is generated by typically adoption of a method using hash function SHA-1 prescribed by the FIPS 180-1 specifications or adoption of a method using a hash function based on block cryptographic processing.

Then, at the next step S5208, an encrypted title-unique key as well as an encrypted recording mode are received from the content-transmitting apparatus, and then decrypted by using the session key obtained during the authentication processing described above.

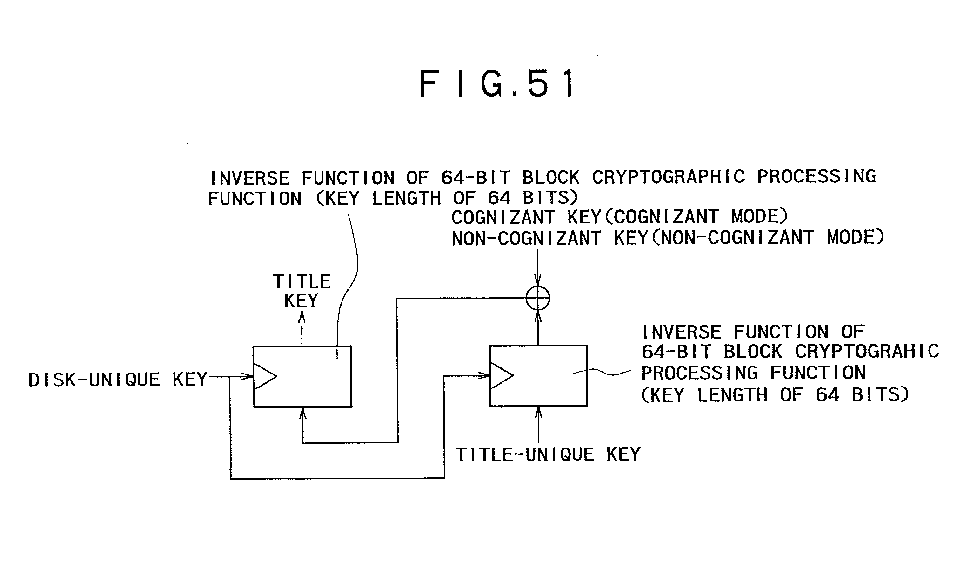

Subsequently, at the next step S5209, a title key is generated and stored onto the disk 1620 along with the recording mode as shown in Fig. 47. Processing to generate the title key is explained by referring to Fig. 51 as follows.

As shown in Fig. 51, the processing to generate a title key is a reversed process of the processing to generate a title-unique key as explained earlier by referring to example 1 shown in Fig. 22. To put it in detail, a processing sequence to generate a title-unique key, which is part of a cryptographic processing sequence corresponding to the block-key generation processing described earlier, is reversed into decryption processing. To put it concretely, a title-unique key received from the content-transmitting apparatus is decrypted by adoption of the inverse function of a 64-bit block cryptographic processing function using the disk-unique key. Then, an exclusive logical sum of the decryption result and the cognizant key in the case of the cognizant mode or the non-cognizant key in the case of the non-cognizant mode is computed. Finally, the exclusive logical sum is decrypted by adoption of the inverse function of a 64-bit block cryptographic processing function using the disk-unique key to generate a title key.

At a step S5209, the title key generated in the processing described above is recorded onto the disk along with the recording mode. Then, at the next step S5210, a block of encrypted contents received from the content-transmitting apparatus is stored onto the disk as it is. It is to be noted that the encrypted contents are contents encrypted by using block keys generated on the basis of a title-unique key generated in the content-transmitting apparatus. The encrypted contents are not subjected to decryption and re-encryption processes in the content-receiving apparatus. Then, the flow of the program goes on to the next step S5211 to form a judgment as to whether or not all blocks of the encrypted contents have been recorded onto the disk. If all blocks of the encrypted contents have been recorded onto the disk, the execution of the program is ended.

In the processing described above, the DVR system serving as a data-receiving apparatus stores contents encrypted by using block keys generated on the basis of a title-unique key generated in the HDR system serving as the content-transmitting apparatus.

However, the DVR system receiving and storing encrypted contents also receives a title-unique key from the HDR system serving as the content-transmitting apparatus, and generates a title key on the basis of the received title-unique key. The DVR system then stores the generated title key onto its own disk. Thus, by carrying out the processing to generate a title-unique key as described earlier by referring to Fig. 22, the DVR system is capable of generating the same title-unique key as that generated by the HDR system and thus capable of decrypting the encrypted contents stored on the disk.

It is to be noted that, in the above description, the 64-bit block cryptographic processing function is explained as a function used in encryption and decryption processes. In the description of the processing to generate a title-unique key by referring to Fig. 22, the title-unique key is assumed to have a size of 64 bits, which is the same as the size of the output of the block cryptographic processing function used in example 1 shown in Fig. 22. When it is desired to use the DES (Data Encryption Standard) prescribed by the FIPS 46-2 specifications as a cryptographic processing function, the title-unique key is used as a key of the cryptographic processing function for generating a block key as shown in example 1 of Fig. 23. In this case, since the key length is 56 bits, it is necessary to contract the 64-bit title-unique key generated in example 1 shown in Fig. 22 to 56 bits.

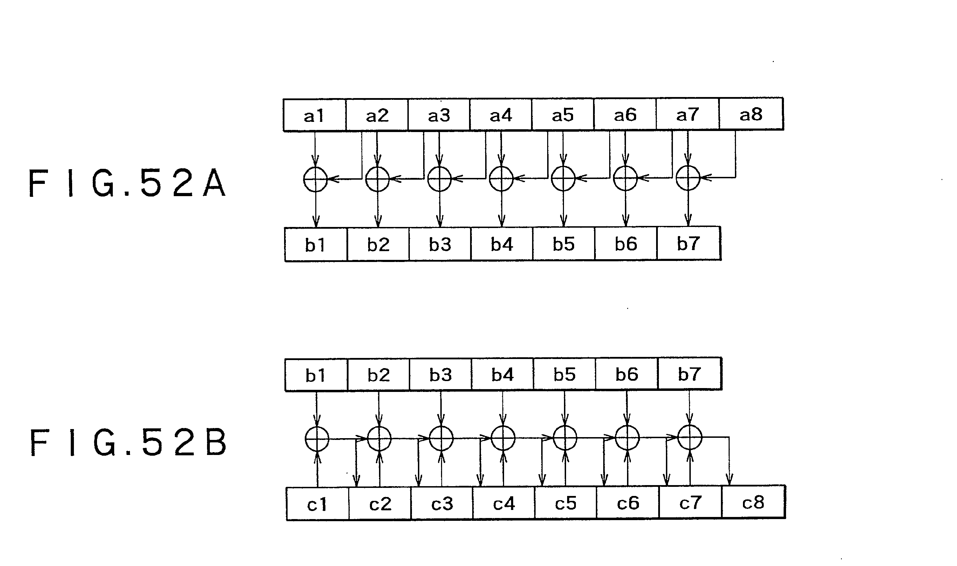

Typical contraction processing is explained by referring to Figs. 52A and 52B. As shown in Fig. 52A, a title-unique key having a length of 64 bits is split into blocks a1, a2, a3, ..., and a8, which each have a length of 8 bits. Then, blocks ai and a(i+1) are subjected to exclusive-or logic processing (XOR) to produce an i-th 8-bit block bi of a contracted title-unique key where i = 1 to 7. In this way, the 64-bit title-unique key generated in the example shown in Fig. 22 can be contracted to 56 bits.

With the title-unique key contracted as described above, first of all, the receiving-side device such as the DVR system needs to carry out de-contraction processing to eliminate the contracted state of the title-unique key. This is because an input with a length of 64 bits is supplied to the inverse function of the cryptographic function used in derivation of a title key as explained earlier by referring to Fig. 51. The de-contraction processing can be carried out by adoption of a method shown in Fig. 52B.

As shown in Fig. 52B, initially, a first 8-bit block c1 of a post-de-contraction title-unique key is set at any arbitrary value. The first 8-bit block c1 and the first 8-bit block b1 of the pre-de-contraction title-unique key are subjected to exclusive-or logic processing (XOR) to produce a second 8-bit block c2 of the post-de-contraction title-unique key. By the same token, the second 8-bit block c2 and the second 8-bit block b2 of the pre-de-contraction title-unique key are subjected to exclusive-or logic processing (XOR) to produce a third 8-bit block c3 of the post-de-contraction title-unique key. Thereafter, in the same way, an 8-bit block ci of the post-de-contraction title-unique key and an 8-bit block bi of the pre-de-contraction title-unique key are subjected to exclusive-or logic processing (XOR) to produce an 8-bit block c(i+1) of the post-de-contraction title-unique key where i = 3 to 7. In this way, blocks c1, c2, ..., and c8 are obtained even though there is no guarantee that the blocks c1, c2, ..., and c8 have the same values as the blocks a1, a2, ..., and a8 respectively. Nevertheless, equations c1 XOR c2 = a1 XOR a2 = b1 hold true or, more generally, equations ci XOR c(i+1) = ai XOR a(i+1) = bi hold true where i = 1 to 7. These equations indicate that application of the contraction processing shown in Fig. 52A to a1, a2, ..., and a8 will produce the same results as application of the contraction processing to c1, c2, ..., and c8.

It is to be noted that the contraction technique is not limited to that shown in Fig. 52A. For example, one can conceive a contraction method of using only the 56 high-order bits of the title-unique key having a length of 64 bits. In the de-contraction method for this contraction method, the pre-contraction state is restored for example by concatenation of any 8 bits with the 56 high-order bits of the contracted title-unique key on the lower-order end of the 56 high-order bits.

In the following description, a DVR system and an HDR system serve as the content-transmitting apparatus and the content-receiving apparatus respectively. In the DVR system, a title-unique key is generated by using a master key and encrypted contents are stored in a recording medium. In the HDR, on the other hand, a title-unique key is generated by using an LSI key and encrypted contents are stored in an HDD. A transfer or a copy operation of encrypted contents from the HDR to the DVR is described.

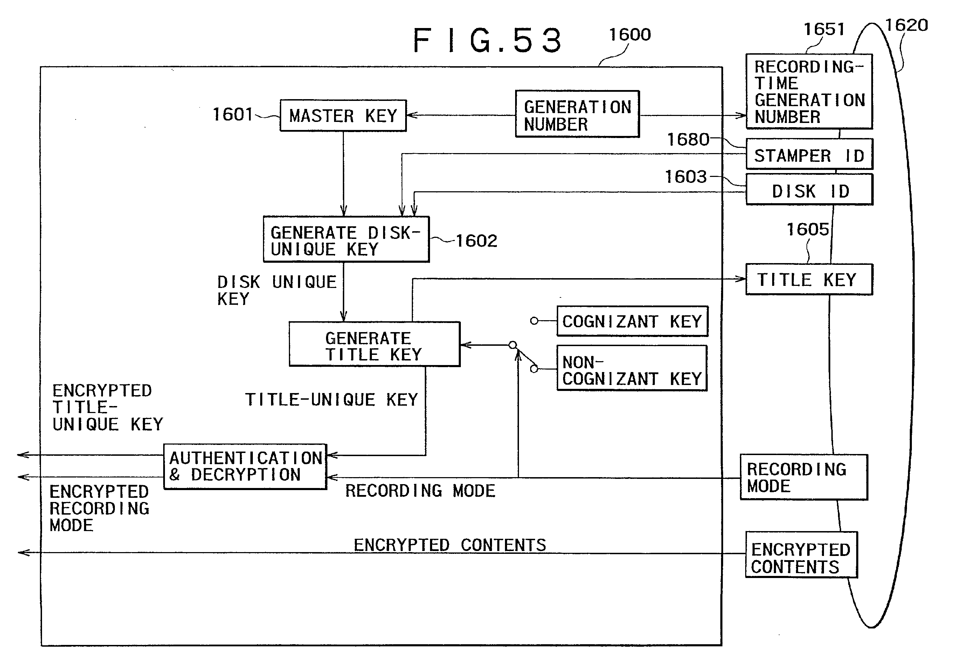

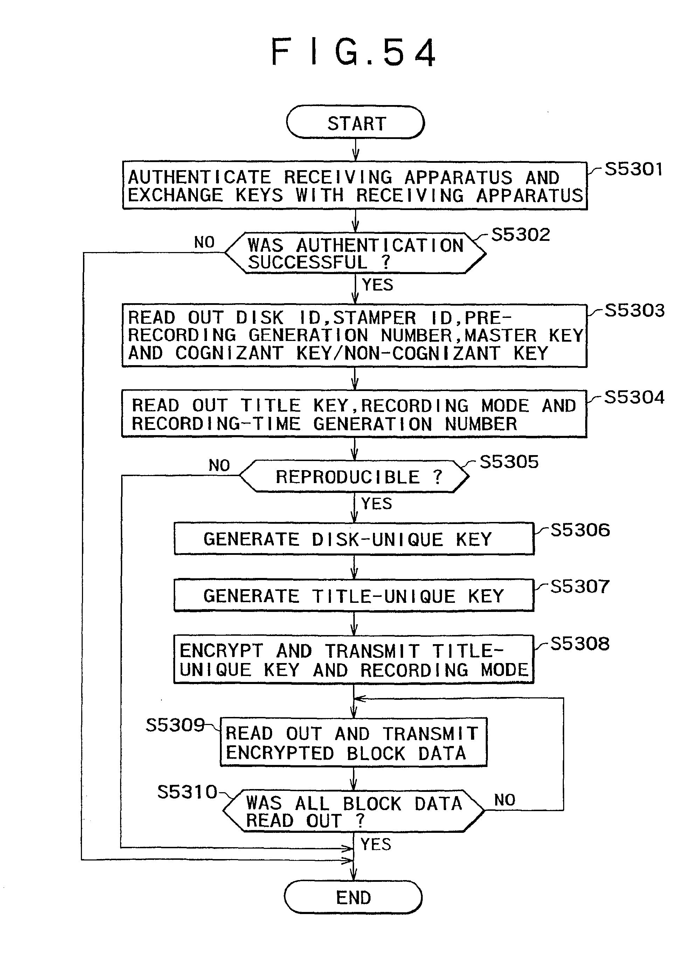

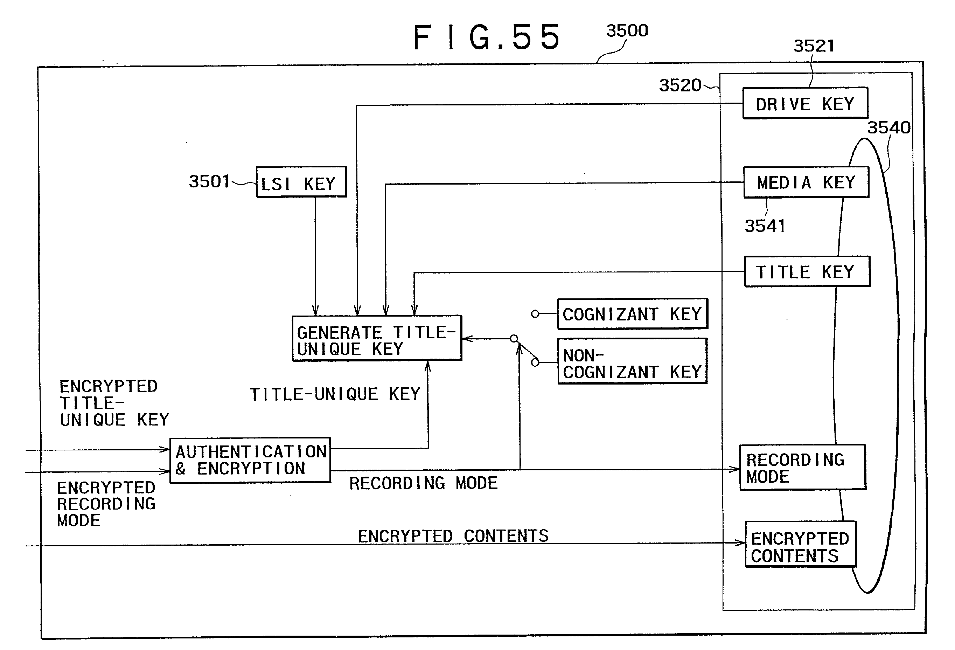

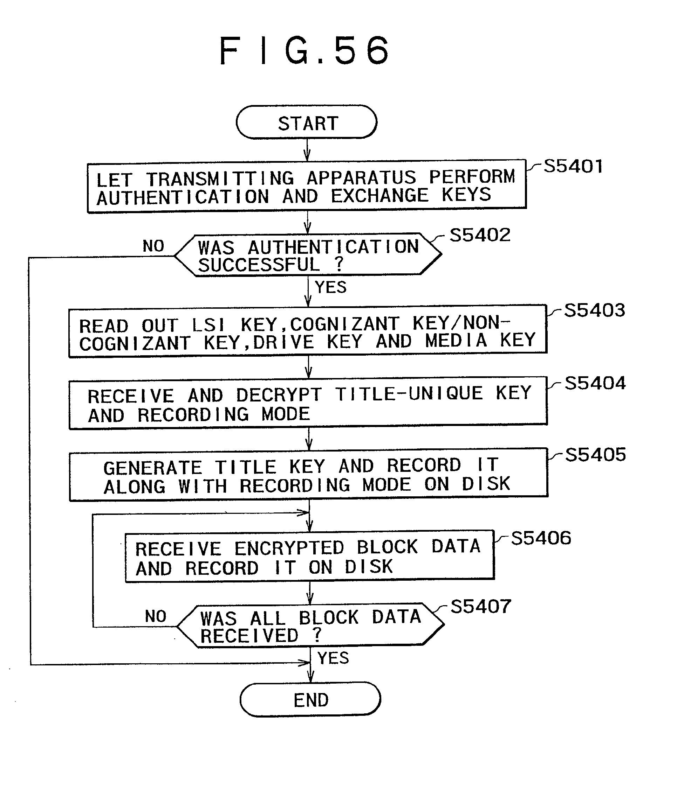

Fig. 53 is a diagram showing processing carried out by the DVR system serving as the content-transmitting apparatus to transmit contents. On the other hand, Fig. 55 is a diagram showing processing carried out by the HDR system serving as the content-receiving apparatus to receive contents. Fig. 54 is a flowchart representing the processing carried out by the DVR system to transmit contents. On the other hand, Fig. 56 is a flowchart representing the processing carried out by the HDR system to receive contents.

The flowchart shown in Fig. 54 begins with a step S5301 at which the content-transmitting apparatus and the content-receiving apparatus authenticate each other and exchange keys in order to confirm that both the apparatus are valid apparatus. Typical protocols of the mutual authentication include a protocol based on common-key cryptographic processing in conformity with the ISO/ICE 9798-2 specifications, a protocol based on public-key cryptographic processing in conformity with the ISO/ICE 9798-3 specifications and a protocol based on a cryptography check function (MAC) in conformity with the ISO/ICE 9798-4 specifications as described above.

By adopting any of the above protocols, the content-transmitting apparatus and the content-receiving apparatus authenticate each other and each obtain a session key Ks. Then, the flow of the program then goes on to a step S5302 to form a judgment as to whether or not the mutual authentication process has been completed successfully. If the mutual authentication process was not completed successfully, the execution of the program is ended without carrying out the following processes. If the mutual authentication process has been completed successfully, on the other hand, the flow of the program goes on to a step S5303 at which the DVR system 1600 shown in Fig. 53 reads out a disk ID, a pre-recording generation number and a stamper ID from the disk. In addition, the DVR system 1600 reads out a master key, a cognizant or non-cognizant key from its own memory.

Then, at the next step S5304, the DVR system 1600 reads out a title key of data to be reproduced from the disk, the recording mode of the data and the generation number (generation #) of a master key used for recording the data. The generation number (generation #) of a master key used for recording the data is also referred to as a recording-time generation number. Subsequently, the flow of the program goes on to a step S5305 to form a judgment as to whether or not the data to be reproduced from the disk is reproducible. For details of the formation of the judgment, refer to the flowchart shown in Fig. 27.

If the data to be reproduced from the disk is determined to be irreproducible, steps following the step S5305 are skipped and the execution of the program is ended without carrying out a reproduction process. If the data to be reproduced from the disk is determined to be reproducible, on the other hand, the flow of the program goes on to a step S5306. At the step S5306, a disk-unique key is generated by using the disk ID, the master ID and the stamper ID. As a technique for generating a disk-unique key, for example, it is possible to adopt a method whereby data obtained as a result of bit concatenation of a master key with a disk ID is supplied to hash function SHA-1 prescribed by the FIPS 180-1 specifications, and only bits required for formation of the disk-unique key are then extracted from 160 bits of an output produced by the hash function. As an alternative, it is also possible to adopt a method whereby a master key and a disk ID are supplied to a hash function based on block cryptographic processing function, and an output generated by the hash function is taken as a disk-unique key.

Then, at the next step S5307, a title-unique key is generated. A title-unique key is generated for example by carrying out the processing explained earlier by referring to Fig. 22. Subsequently, at the next step S5308, the title-unique key and the recording mode are encrypted by using the session key obtained at the step S5301 and then transmitted to the content-receiving apparatus. Then, at the next step S5309, a block of encrypted contents is read out from the recording medium, which is a DVD-RAM disk 1620 in the case of this example, and then transmitted to the content-receiving apparatus. It is to be noted that the encrypted contents are contents encrypted by using a title-unique key generated on the basis of, among others, the master key of the DVR 1600 serving as the content-transmitting apparatus. Then, the flow of the program goes on to the next step S5310 to form a judgment as to whether or not all blocks of the encrypted contents have been read out from the DVD-RAM disk 1620. If all blocks of the encrypted contents have been read out from the DVD-RAM disk 1620, the execution of the program is ended.

Next, processing carried out by the content-receiving apparatus to receive and store encrypted contents is explained by referring to Figs. 55 and 56. In the following description, an HDR system is assumed to serve as a content-receiving apparatus. Each step of the flowchart shown in Fig. 56 is explained. As shown in the figure, the flowchart begins with a step S5401 at which the content-transmitting apparatus and the content-receiving apparatus authenticate each other and exchange keys in the same way as the flowchart shown in Fig. 54. By the same token, the flow of the program then goes on to a step S5402 to form a judgment as to whether or not the mutual authentication has been completed successfully.

If the mutual authentication has been completed successfully, the flow of the program goes on to a step S5403 at which the HDR system (or the recording & reproduction apparatus 3500 shown in Fig. 55) serving as the content-receiving apparatus reads out a cognizant key in the case of the cognizant mode or a non-cognizant key in the case of the non-cognizant mode from the content-receiving apparatus's own memory as well as an LSI key 3501 from the LSI serving as cryptographic-processing means. In addition, the HDR system also reads out a drive key 3521 set for the HDD (Hard Disk Drive) 3520 and a media key 3541 set as a key unique to the HD (Hard Disk) 3540.

Then, at the next step S5404, an encrypted title-unique key as well as an encrypted recording mode are received from the content-transmitting apparatus, and then decrypted by using the session key obtained during the authentication processing described above.

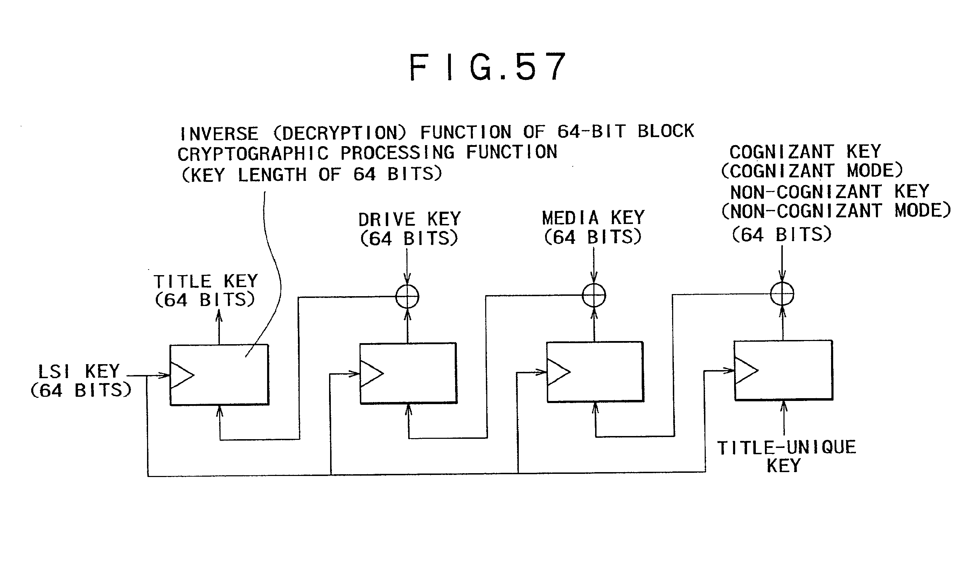

Subsequently, at the next step S5405, a title key is generated and stored onto the disk 3540 along with the recording mode as shown in Fig. 55. Processing to generate the title key is explained by referring to Fig. 57 as follows.

As shown in Fig. 57, the processing to generate a title key is a reversed process of the processing to generate a title-unique key as explained earlier by referring to Fig. 40. To put it in detail, a processing sequence to generate a title-unique key, which is part of a cryptographic processing sequence corresponding to the block-key generation processing described earlier, is reversed into decryption processing. To put it concretely, a title-unique key received from the content-transmitting apparatus is decrypted by adoption of the inverse function of a 64-bit block cryptographic processing function using the LSI key. Then, an exclusive logical sum of the decryption result and the cognizant key in the case of the cognizant mode or the non-cognizant key in the case of the non-cognizant mode is computed. Subsequently, the exclusive logical sum is decrypted by adoption of the inverse function of the 64-bit block cryptographic processing function using the LSI key. Then, an exclusive logical sum of the decryption result and the media key is computed. Subsequently, the exclusive logical sum is decrypted by adoption of the inverse function of the 64-bit block cryptographic processing function using the LSI key. Then, an exclusive logical sum of the decryption result and the drive key is computed. Finally, the exclusive logical sum is decrypted by adoption of the inverse function of a 64-bit block cryptographic processing function using the LSI key to generate a title key.

At a step S5405, the title key generated in the processing described above is recorded onto the disk along with the recording mode. Then, at the next step S5406, a block of encrypted contents received from the content-transmitting apparatus is stored onto the disk as it is. It is to be noted that the encrypted contents are contents encrypted by using block keys generated on the basis of a title-unique key generated in the content-transmitting apparatus. The encrypted contents are not subjected to decryption and re-encryption processes in the content-receiving apparatus. Then, the flow of the program goes on to the next step S5407 to form a judgment as to whether or not all blocks of the encrypted contents have been recorded onto the disk. If all blocks of the encrypted contents have been recorded onto the disk, the execution of the program is ended.

In the processing described above, the HDR system serving as a data-receiving apparatus stores contents encrypted by using block keys generated on the basis of a title-unique key generated in the DVR system serving as the content-transmitting apparatus.

However, the HDR system receiving and storing encrypted contents also receives a title-unique key from the DVR system serving as the content-transmitting apparatus, and generates a title key on the basis of the received title-unique key. The HDR system then stores the generated title key onto its own disk. Thus, by carrying out the processing to generate a title-unique key as described earlier by referring to Fig. 40, the HDR system is capable of generating the same title-unique key as that generated by the DVR system and thus capable of decrypting the encrypted contents stored on the disk. [361]

In the examples described above, processing is carried out to copy contents from an HDR to a DVR and from a DVR to an HDR. It is to be noted, however, that processing to copy contents among other apparatus can also be carried out by adoption of the same concept. In either case, a content-transmitting apparatus also supplies a title-unique key for encrypted contents to a content-receiving apparatus. The content-receiving apparatus generates a title key on the basis of the title-unique key and stores the tile key onto a recording medium by associating the title key with the entitled contents also stored on the recording medium.

To put it in detail, assume that a title-unique key set for contents represented by encrypted input data received from an external source is a first cryptographic processing key and a title key obtainable by decryption of the title-unique key is a second cryptographic processing key. In this case, the title-unique key used as the first cryptographic processing key is used as a base of a decryption process carried out to generate the title key used as the second cryptographic processing key. The generated title key is stored in a recording medium. The decryption process is an inverse process of at least a portion of a decryption-key generation processing sequence set in advance for data stored in the recording medium in the recording & reproduction apparatus. In a process to decrypt encrypted contents, in accordance with the decryption-key generation processing sequence set in advance in the recording & reproduction apparatus, by using the title key and either one of a master key, a media key and an LSI key, a title-unique key is generated and a block key is further generated to carry out the decryption process.

There has been explained a typical configuration wherein the processing to generate a disk-unique key is carried out separately from the processing to generate a title-unique key in the information-processing apparatus such as the DVR described above as shown in Fig 16. It is to be noted, however, that the processing to generate a disk-unique key and the processing to generate a title-unique key can be implemented as one function in a configuration for generating a title-unique key in accordance with the same processing as the processing configuration shown in Fig. 40 from a master or media key, a stamper ID, a disk ID, a title key and a cognizant or non-cognizant key. Even with such a configuration, a title key can be derived from a known value in accordance with the technique shown in Fig. 51.

It is to be noted that, when contents are copied from an apparatus to another, there is raised a problem as to whether the CCI (copy control information) needs to be updated or not. In order to solve this problem, it is possible to provide for example a configuration in which contents can be copied without updating the CCI stored in the block seed by permitting the decryption and re-encryption processes for only a copy operation to be carried out under a specific condition such as a copy operation between apparatus owned by specific individuals. As an alternative solution, there is provided a configuration in which the CCI is stored as additional data outside the block seed and the CCI stored as additional data is updated. By providing such a configuration in which the CCI is stored as additional data, the CCI can be updated without carrying out processing to decrypt and re-encrypt contents on a temporary basis during an operation to copy contents from an apparatus to another.

8-2: Processing to Store Distributed Contents

The following description explains the configuration of processing to store encrypted contents distributed by way of communication media such as the Internet or a satellite onto a recording medium employed in a recording & reproduction apparatus.

To be more specific, the following description explains the configuration of processing to store contents encrypted by a content-providing server and distributed by way of communication media such as the Internet or a satellite onto a recording medium employed in a DVR system. It is to be noted that the content-providing server has the same configuration as the data recording & reproduction apparatus explained earlier by referring to Figs. 1 and 2. In addition, the configuration newly includes a communication I/F capable of distributing data by way of communication media such as the Internet or a satellite, a database for storing IDs of apparatus located at data distribution destinations and a database for storing contents to be distributed. It is to be noted that the hardware configuration of the content-providing server will be explained later.

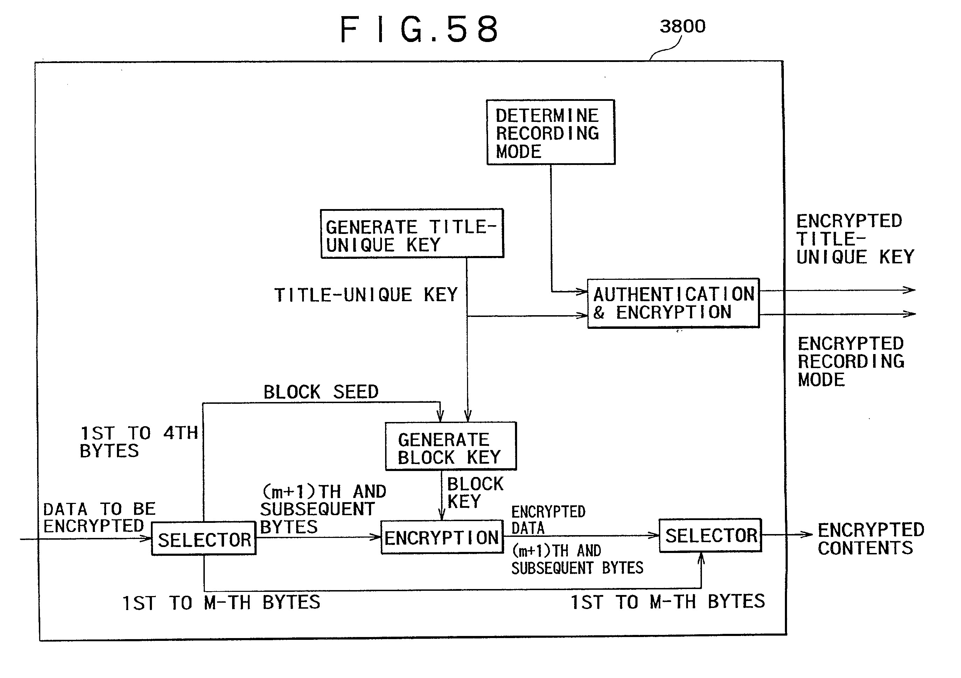

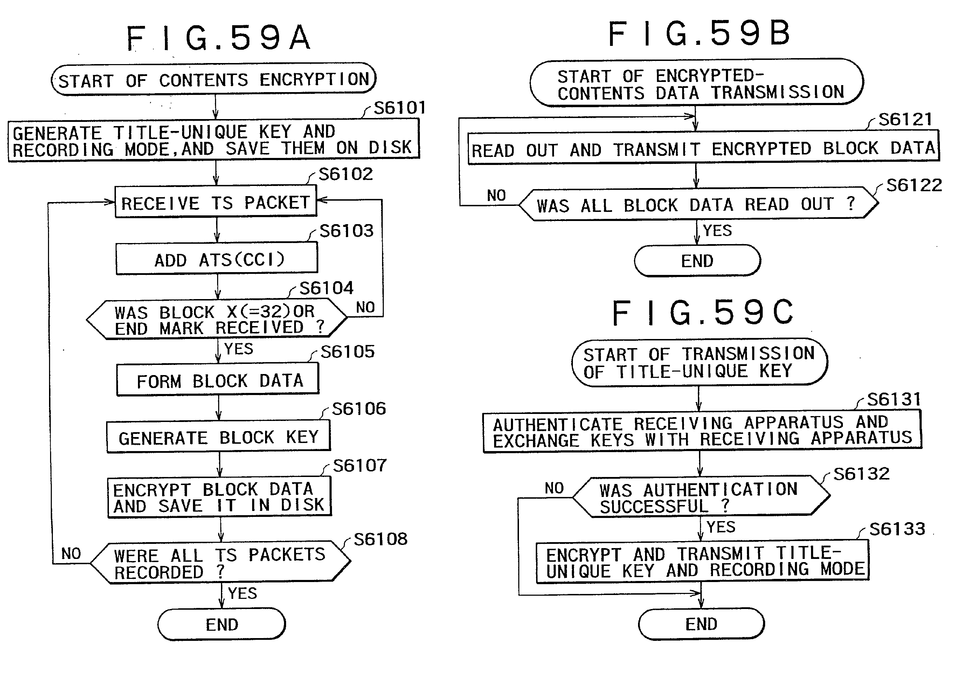

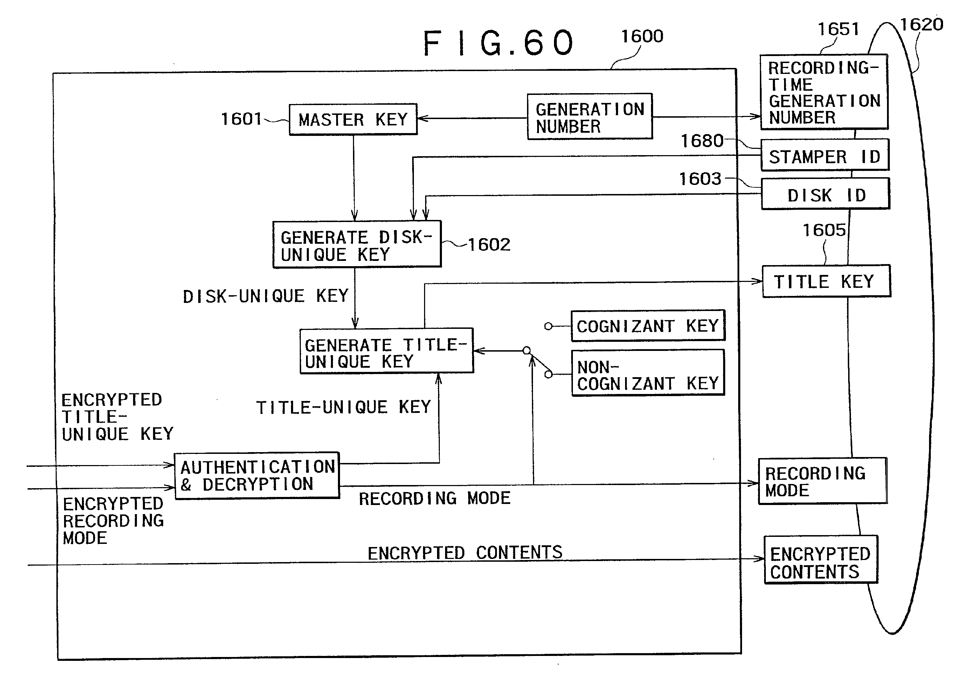

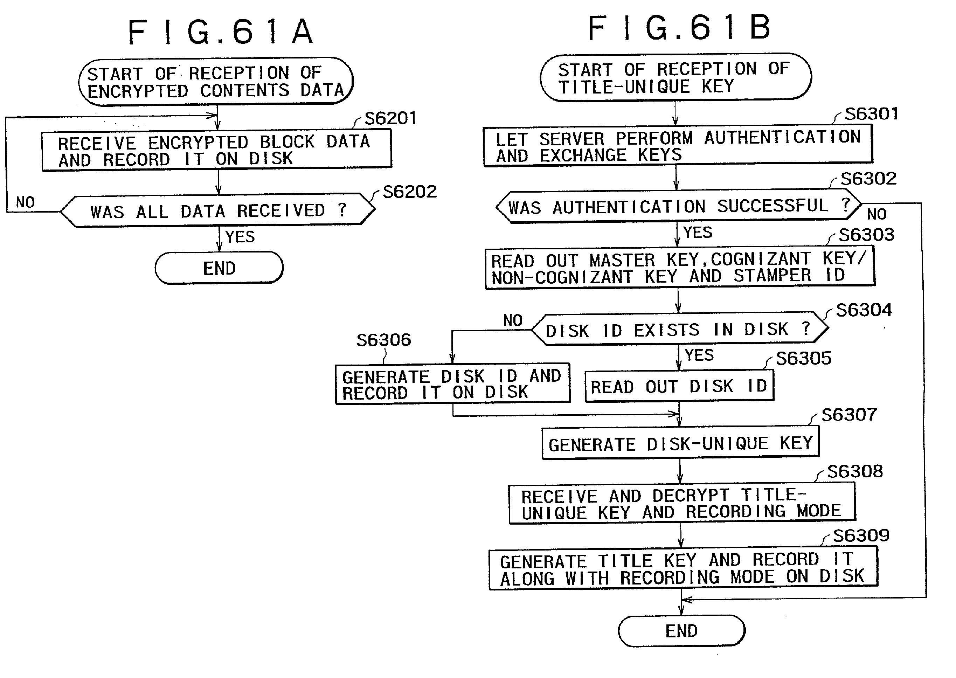

Fig. 58 is a diagram showing processing carried out by the content-providing server, which is located at a data transmission site, to output contents. Fig. 60 is a diagram showing processing carried out by a DVR system, which serves as a data-receiving apparatus, to receive contents. Figs. 59A through 59C show flowcharts representing the processing carried out by the content-providing server to output contents. Figs. 61A and 61B show flowcharts representing the processing carried out by the DVR system to receive contents. First of all, by referring to the flowcharts shown in Figs. 59A through 59C, the processing carried out by the content-providing server to output contents are explained.

As shown in the flowcharts of Figs. 59A through 59C, the processing carried out by the content-providing server includes a process of encrypting contents shown in Fig. 59A, a process of transmitting encrypted contents shown in Fig. 59B and a process of transmitting a title-unique key shown in Fig. 59C. First of all, the process of encrypting contents shown in Fig. 59A is explained.

As shown in Fig. 59A, the flowchart representing the process of encrypting contents begins with a step S6101 at which the content-providing server 3800 shown in Fig. 58 generates a title-unique key and determines a recording mode. A title-unique key is typically generated as a random number or a pseudo-random number. Either a cognizant mode or a non-cognizant mode is taken as the recording mode. As for CCI (Copy Control Information) included in the data of contents, the content-providing server updates the status of the CCI, for example, from the copy-one-generation status to the no-more-copy status, prior to the encryption of the contents data. If an updated value of CCI is used as a DVR-EMI in a generated block seed during a process to generate a block key, in the DVR receiving the contents, contents can be recorded without updating the CCI. In this case, since the DVR-EMI matches the CCI embedded in the contents, the cognizant mode is taken as the recording mode. In other cases, the non-cognizant mode is taken as the recording mode. The other cases include a case in which the CCI embedded in the contents are not updated but the DVR-EMI represents copy control status after data recording onto the recording medium.

Then, at the next step S6102, the data (to be encrypted) of the contents to be distributed is received from a contents source as TS packets. It is to be noted that the contents source can be a database for storing contents from the beginning or another content-providing server. Subsequently, at the next step S6103, an ATS and CCI are added to each of the TS packets. An ATS is information on a time the TS packet, to which the ATS is added, is received. The CCI is copy control information. Then, the flow of the program goes on to the next step S6104 to form a judgment as to whether or not the number of sequentially received TS packets has reached X or whether or not identification data indicating a last TS packet has been received, where notation X is the number of TS packets composing a block. A typical value of X is 32. If the number of sequentially received TS packets has reached X or identification data indicating a last TS packet has been received, the flow of the program goes on to a step S6105 at which X pieces of TS packets ending with the last one are arranged to form data of 1 block.

Then, at the next step S6106, a block key for encrypting the data of the block is generated from a 32-bits block seed placed at the beginning of the block data and a title-unique key generated at the step S6101. As described earlier, the block seed includes an ATS.

Subsequently, at the next step S6107, the data of the block is encrypted by using the block key and stored into storage means. It is to be noted that, as described earlier, the block's portion to be encrypted consists of the (m+1)th byte to the last byte of the block. The encryption process typically adopts an algorithm called a DES (Data Encryption Standard) prescribed by FIPS 46-2 specifications.

Subsequently, the flow of the program goes on to a step S6108 to form a judgment as to whether or not all blocks of contents have been recorded into the storage means. If all blocks of contents have been recorded into the storage means, the recording process is ended. If blocks of contents have not all been recorded into the storage means, the flow of the program goes back to the step S6102.

Next, the processing to transmitted encrypted data of contents are explained by referring to the flowchart shown in Fig. 59B. As shown in the figure, the flowchart begins with a step S6121 at which a block of encrypted contents is read out from the storage means. Then, the flow of the program goes on to a step S6122 to form a judgment as to whether or not all blocks of the contents have been read out. The data of the contents is the data encrypted by using block keys generated on the basis of the title-unique key, which is generated at the step S6101 of the flowchart shown in Fig. 59A.

Next, the processing to transmitted a title-unique key is explained by referring to the flowchart shown in Fig. 59C. As shown in the figure, the flowchart begins with a step S6131 at which the DVR system serving as the content-transmitting apparatus carries out mutual authentication processing with the content-receiving apparatus in accordance with a clear authentication and key-exchange protocol. As this protocol, it is possible to adopt one of the common-key cryptographic processing technique or the public-key cryptographic processing technique, which have been explained earlier by referring to Figs. 49 and 50 in the paragraph describing the process to copy contents from an apparatus to another. It is to be noted that, in the authentication method, which is based on a common key and uses common-key cryptographic processing or a hash function based on the common-key cryptographic processing, it is necessary to verify that the two devices, namely, the content-providing server and the content-receiving apparatus have, the same secrecy. In order to provide the two devices with the same secrecy, the following techniques can be adopted. In the first place, there is adopted a method of providing all devices in the entire system with a common secrecy (global secret) in advance. In the second place, there is adopted a method of taking a root key of the tree structure described earlier as the common secrecy. In this case, a device key is given in advance to each device in accordance with a key distribution configuration based on the tree structure. Then, the device key is used for finding a root key by carrying out EKB processing. In the third place, there is provided a configuration in which the content-providing server manages what value of a private key is to be assigned and which device is to be given such a private key.

If this method is used, for example, before the mutual authentication protocol shown in Fig. 49 is started, the DVR system transmits an EKB stored in its memory or in any internal component to a device. The EKB is used by the server and the device as a base for finding a root key to be used as a common key. Then, the protocol is started.

In a mutual authentication process based on the public-key cryptographic processing technique, a pair of public and private keys is given to each device before authentication and an exchange of keys. A system adopting the public-key cryptographic processing technique may be provided with a CRL (Certificate Revocation List) showing public-key certificates of devices, which have each been revoked from the system because its device key has been exposed to a hacker. If the key distribution configuration based on the tree structure described earlier is adopted, the EKB can be used as a CRL. In general, the EKB has a merit of a size smaller than the CRL showing IDs of devices, which have each been revoked from the system because its device key has been exposed to a hacker.

The flow of the program then goes on from the step S6131 to a step S6132 to form a judgment as to whether or not the mutual authentication process has been completed successfully. If the mutual authentication process was not completed successfully, the processing to generate a title-unique key is terminated. If the outcome of the judgment formed at the step S6132 indicates that the mutual authentication process has been completed successfully, on the other hand, the flow of the program goes on to a step S6133 to encrypt the title-unique key, which has been generated at the step S6101 of the flowchart representing the processing to encrypt contents as shown in Fig. 59A, by using a session key obtained in the mutual authentication process carried out at the step S6131 of the flowchart representing the processing to transmit a title-unique key as shown in Fig. 59C.

By referring to Figs. 60 and 61A and 61B, the following description explains processing carried out by the recording & reproduction apparatus serving as the content-receiving apparatus to receive and store encrypted contents. In the following description, a DVR system is assumed to serve as the content-receiving apparatus. Each step of the flowchart shown in Figs. 61A and 61B is explained. The processing carried out by the recording & reproduction apparatus serving as the content-receiving apparatus includes a process of receiving encrypted contents shown in Fig. 61A and a process of receiving a title-unique key shown in Fig. 61B. The process of receiving encrypted contents is the counterpart of the process carried out by the content-providing server to transmit encrypted contents in accordance with the flowchart shown in Fig. 59B. On the other hand, the process of receiving a title-unique key is the counterpart of the process carried out by the content-providing server to transmit a title-unique key in accordance with the flowchart shown in Fig. 59C.

The flowchart representing the process of receiving encrypted contents as shown in Fig. 61A begins with a step S6201 at which an encrypted block data is received and stored onto a disk. Then, the flow of the program goes on to a step S6202 to form a judgment as to whether or not data of all blocks has been received. If data of all blocks has been received, the process of receiving encrypted contents is terminated. The data stored on the disk is data encrypted by block keys generated on the basis of the title-unique key generated at the step S6101 of the flowchart representing the processing to encrypt contents as shown in Fig. 59A. The data has not been subjected to decryption and re-encryption processes.

The process of receiving a title-unique key is explained by referring to the flowchart shown in Fig. 61B as follows. As shown in the figure, the flowchart begins with a step S6301 at which the content-transmitting apparatus and the content-receiving apparatus authenticate each other and exchange keys in the same way as the flowchart shown in Fig. 59B. By the same token, the flow of the program then goes on to a step S6302 to form a judgment as to whether or not the mutual authentication process has been completed successfully.

If the mutual authentication process has been completed successfully, the flow of the program goes on to a step S6303 at which the DVR system serving as the content-receiving apparatus reads out a master key, a cognizant key in the case of the cognizant mode or a non-cognizant key in the case of the non-cognizant mode from the content-receiving apparatus's own memory. In addition, the content-receiving apparatus also reads out a stamper ID from the disk.

Then, the flow of the program goes on to a step S6304 to form a judgment as to whether or not a disk ID has been recorded on the recording medium as identification information. If a disk ID has been recorded on the recording medium, the flow of the program goes on to a step S6305 at which the disk ID is read out from the recording medium. If a disk ID has not been recorded on the recording medium, on the other hand, the flow of the program goes on to a step S6306 at which a disk ID is generated as a random number or by adoption of a method determined in advance, and recorded onto the disk. Subsequently, at the next step S6307, a disk-unique key is generated by using the master key, the stamper ID and the disk ID. As described earlier, a disk-unique key is generated by typically adoption of a method using hash function SHA-1 prescribed by the FIPS 180-1 specifications or adoption of a method using a hash function based on block cryptographic processing.

Then, at the next step S6308, an encrypted title-unique key as well as an encrypted recording mode are received from the content-transmitting apparatus, and then decrypted by using the session key obtained during the authentication processing described above.

Subsequently, at the next step S6309, a title key is generated and stored onto the disk 1620 along with the recording mode as shown in Fig. 60. Processing to generate the title key is carried out in the same way as that explained by referring to Fig. 51 in the paragraph explaining an operation to copy contents from an apparatus to another one. As shown in Fig. 51, the processing to generate a title key is a reversed process of the processing to generate a title-unique key as explained earlier by referring to example 1 of Fig. 22. To put it concretely, a title-unique key received from the content-transmitting apparatus is decrypted by adoption of the inverse function of a 64-bit block cryptographic processing function using the disk-unique key. Then, an exclusive logical sum of the decryption result and the cognizant key in the case of the cognizant mode or the non-cognizant key in the case of the non-cognizant mode is computed. Finally, the exclusive logical sum is decrypted by adoption of the inverse function of a 64-bit block cryptographic processing function using the disk-unique key to generate a title key.

At a step S6309, the title key generated in the processing described above is recorded onto the disk along with the recording mode. The processing to receive a title-unique key is ended.

In the processing described above, the DVR system serving as a data-receiving apparatus stores contents encrypted by using block keys each generated on the basis of a title-unique key generated in the server serving as the content-providing apparatus.

However, the DVR system receiving and storing encrypted contents also receives a title-unique key from the content-providing server, and generates a title key on the basis of the received title-unique key. The DVR system then stores the generated title key onto its own disk. Thus, by carrying out the processing to generate a title-unique key as described earlier by referring to Fig. 22, the DVR system is capable of generating the same title-unique key as that generated by the content-providing server and thus capable of decrypting the encrypted contents stored on the disk.

In the processing to distribute a title-unique key as part of the processing to distribute contents as described above, the content-providing server and the content-receiving apparatus carry out mutual authentication processing and share a common key. Only if the mutual authentication processing is completed successfully, does the content-providing server encrypt a title-unique key and transmit the encrypted key to the content-receiving apparatus. The protocol of the mutual authentication processing and the operation to share a common key are suitable for a duplex network such as the Internet but cannot be implemented in a simplex transmission environment such as broadcasting.

In such a case, a title-unique key can be transmitted on the basis of implied authentication. In implied authentication, data to be transmitted is encrypted before being transmitted, and the transmitted data is expected to be decrypted and obtained correctly only by a valid apparatus. The technique explained earlier by referring to Fig. 11 and other figures is a technique based exactly on implied authentication. This technique allows only a device having correct and unrevoked nodes key to compute a root key from an EKB. That is to say, if the server broadcasts an EKB of this technique and a title-unique key encrypted by the root key, only a receiving apparatus having correct and unrevoked node keys is capable of finding a root key by decryption of the EKB and capable of obtaining a title-unique key on the basis of the found root key.

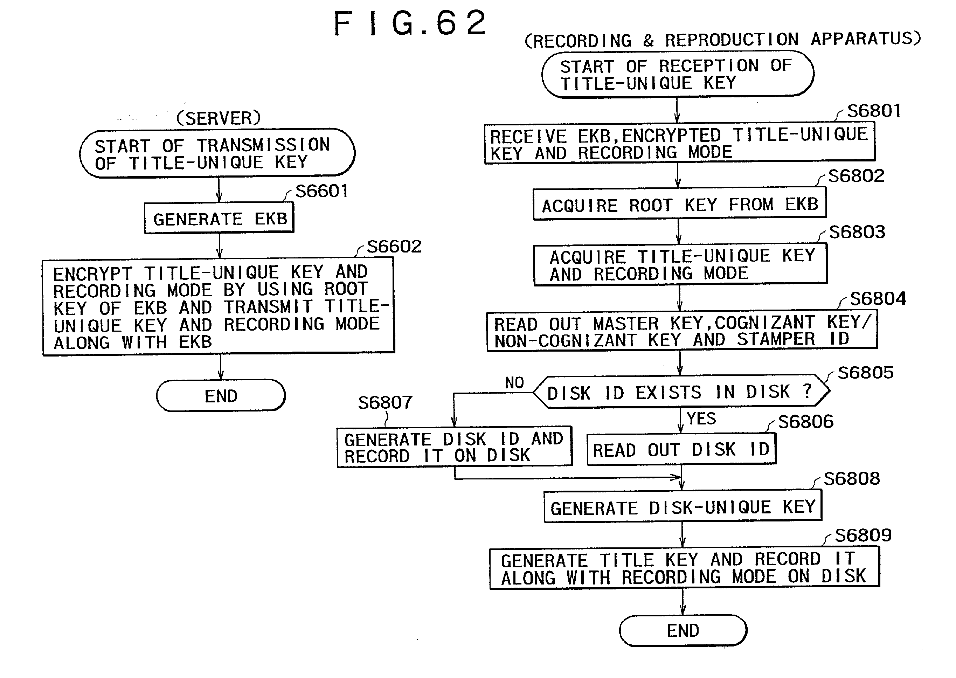

By referring to flowcharts shown in Fig. 62, the following description explains processing to distribute a title-unique key by using an EKB so as to eliminate mutual authentication processing among devices. The flowcharts shown in Fig. 62 represent processing carried out by a server to distribute a title-unique key by using an EKB and processing carried out by a recording & reproduction apparatus to receive a title-unique key distributed by using the EKB.

First of all, the processing carried out by a server to distribute a title-unique key by using an EKB is explained by referring to a flowchart shown on the left side of Fig. 62. As shown in the figure, the flowchart begins with a step S6601 at which an EKB is generated. The EKB can be decrypted by a recording & reproduction apparatus, which has a correct license and is associated with a leaf of the tree structure shown in Fig. 11. Then, the flow of the program continues to the next step S6602 to encrypt a title-unique key and a determined recording mode by using a root key of the EKB, transmitting the encrypted title-unique key, the encrypted recording mode and the EKB to a receiving apparatus. The title-unique key has been generated at the step S6101 of the flowchart representing the processing to encrypt contents as shown in Fig. 59A.

Next, the processing carried out by a recording & reproduction apparatus to receive a title-unique key distributed by using an EKB is explained by referring to a flowchart shown on the right side of the Fig. 62. As shown in the figure, the flowchart begins with a step S6801 at which the encrypted title-unique key, the encrypted recording mode and the EKB are received from the server. As described above, the encrypted title-unique key and the encrypted recording mode have been encrypted by using a root key of the EKB. Then, at the next step S6802, EKB decryption processing is carried out by using a leaf key and node keys to obtain the root key. The leaf key and the node keys are stored in a memory of the recording & reproduction apparatus. If the root key cannot be obtained, the recording & reproduction apparatus is determined to be an apparatus not having a proper license.

Subsequently, at the next step S6803, the encrypted title-unique key and the encrypted recording mode are decrypted by using the obtained root key to result in the title-unique key and the recording mode. Since processing carried out at the next step S6804 and subsequent steps is the same as the step S6303 and subsequent steps of the flowchart shown in Fig. 61B, their explanation is not repeated.

By using an EKB in this way, a title-unique key can be distributed to apparatus each having a proper license without requiring the apparatus to carry out mutual authentications.

As described above, contents are distributed from a server to a DVR. It is to be noted that the same concept can be applied to processing to distribute contents to an apparatus of another type. In this case, a title-unique key for encrypted contents is also transmitted to such an apparatus, which then generates a title key on the basis of the title-unique key. Then, the title key is stored in a recording medium by being associated with the contents. 9: Configuration of an Information-Processing Apparatus or a Server

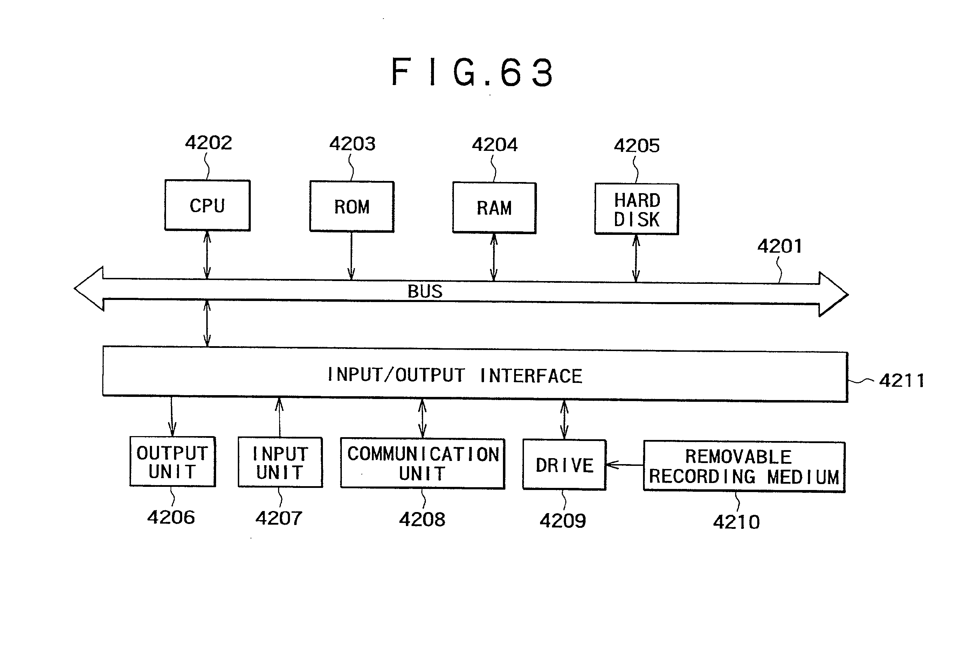

The following description explains a typical hardware configuration of the recording & reproduction apparatus or the server, which carries out a series of processes described above. The processing explained so far by referring to the flowcharts and the block diagrams can be carried out by a combination of hardware and software. For example, while the cryptographic-processing means employed in the recording & reproduction apparatus and the server can be implemented by an encryption & decryption LSI, the cryptographic-processing means can also be implemented by a program executed by a general-purpose computer or a single-chip microcomputer. By the same token, the processing carried out by the TS processing means can also be implemented by software. If a series of processes is implemented by software, programs composing the software are installed in a general-purpose computer, a single-chip microcomputer or the like. Fig. 63 is a block diagram showing a typical configuration of an embodiment implementing a computer in which programs to be executed for carrying out a series of processes are installed.

A program can also be stored in advance in a hard disk 4205 and/or a ROM 4203, which serve as a recording medium embedded in a computer. As another alternative, a program can also be stored or recorded in a removable recording medium 4210 temporarily or permanently. Examples of the removable recording medium 4210 are a floppy disk, a CD-ROM (Compact Disk Read Only Memory), an MO (Magneto Optical) disk, a DVD (Digital Versatile Disk), a magnetic disk and a semiconductor memory. By using such a removable recording medium 4210, programs can be presented to the user as package software.

As described above, a program can be installed in a computer from the removable recording medium 4210. It is to be noted, however, that a program can be downloaded from a download site to a computer by radio or wire communication. An example of the radio communication is communication through an artificial satellite provided for digital satellite broadcasting. An example of the wire communication is communication through a network such as a LAN (Local Area Network) or the Internet. A program downloaded in this way is received by a communication unit 4208 employed in the computer and can be installed in a hard disk 4205 embedded in the computer.

The computer includes an embedded CPU (Central Processing Unit) 4202. The CPU 4202 is connected to an input/output I/F 4211 by a bus 4201. The input/output I/F 4211 is connected to an input unit 4207 including components such as a keyboard and a mouse, which can be operated by the user to enter a command to the CPU 4202. When the user enters a command, the CPU 4202 executes a program stored in the ROM (Read-Only Memory) 4203.

As an alternative, a program executed by the CPU 4202 is loaded from the hard disk 4205 to a RAM (Random-Access Memory) 4204. The program loaded from the hard disk 4205 can be a program stored in advance in the hard disk 4205 or a program downloaded from a satellite or a network, received by the communication unit 4208 and installed in the hard disk 4205. The program loaded from the hard disk 4205 can also be a program read out from a removable recording medium 4210 mounted on a drive 4209 and installed in the hard disk 4205.

The CPU 4202 executes a program to carry out processing represented by any flowchart described above or in accordance with a configuration shown in a processing diagram described above. If necessary, the CPU 4202 outputs a result of the processing to an output unit 4206 by way of the input/output I/F 4211. The output unit 4206 includes components such as an LCD (Liquid Crystal Display) and a speaker. As an alternative, the CPU 4202 outputs a result of the processing to the communication unit 4208 for transmission or stores a result of the processing onto the hard disk 4205.

In this specification, flowchart's processing steps composing a program to be executed by the computer for carrying out various kinds of processing do not have to be implemented in an order indicated by the flowchart along the time axis. Instead, the steps may represent pieces of processing to be carried out in parallel or individually. Examples of such pieces of processing are pieces of concurrent processing or pieces of processing to be carried out as objects.

In addition, a program can be executed by a computer or a plurality of computers. If a program is executed by a plurality of computers, the program can be executed in a distributed-computation way. Furthermore, a program may be transferred to a remote computer for execution.

The embodiments are described above by focusing on a typical configuration in which a functional block for encrypting and decrypting contents is implemented as a single-chip encrypting and decrypting LSI. It is to be noted, however, that the functional block for encrypting and decrypting contents can also be implemented by a software module executed by the CPU 170 employed in the recording & reproduction apparatus shown in Fig. 1 or 2. By the same token, the processing carried out by the transport-stream-processing means 300 can also be implemented by a software module executed by the CPU 170.

The present invention has been explained by referring to some illustrative embodiments. It is apparent to those skilled in the art, however, that the embodiments or portions thereof can be modified or replaced by substitutes within a range not departing from essentials of the present invention. The embodiments used for explaining the present invention are illustrative and thus not to be interpreted as limitations imposed on the present invention.

As described above, in an embodiment of the present invention, when contents are copied or transferred from an information recording & reproduction apparatus to another, or when distributed contents are stored in a recording medium employed in an information recording & reproduction apparatus, the contents can be stored in a new recording medium without decryption and re-encryption. Thus, processing can be carried out with a higher degree of efficiency.

In addition, in accordance with an embodiment of the present invention, when data is copied or transferred to a different information recording & reproduction apparatus (information-processing apparatus), a title-unique key generated by an information recording & reproduction apparatus on the data transmission side is also transmitted to the information recording & reproduction apparatus on the data reception side and used therein as a base for generating a title key, which is then stored onto a recording medium employed in the information recording & reproduction apparatus on the data reception side. The information recording & reproduction apparatus on the data reception side then generates a title-unique key in accordance with a sequence of a procedure for generating a title-unique key on the basis of the stored title key. The title-unique key generated in this way allows stored contents to be reproduced. It is thus possible to provide a copy processing configuration in which contents can be copied to an information recording & reproduction apparatus on the data reception side without decryption and re-encryption and can be reproduced by the information recording & reproduction apparatus on the data reception side only if the apparatus has been granted a proper license.

Furthermore, in accordance with an embodiment of the present invention, when contents distributed by a content-providing server on the data reception side is stored in an information recording & reproduction apparatus, a title-unique key generated by the server is also supplied to the apparatus and used therein as a base for generating a title key, which is then stored onto a recording medium employed in the apparatus. The information recording & reproduction apparatus on the data reception side then generates a title-unique key in accordance with a sequence of a procedure for generating a title-unique key on the basis of the stored title key. The title-unique key generated in this way allows stored contents to be reproduced. It is thus possible to provide a data storing and processing configuration in which contents can be distributed to an information recording & reproduction apparatus on the data reception side without decryption and re-encryption and can be reproduced by the information recording & reproduction apparatus on the data reception side only if the apparatus has been granted a proper license.

Moreover, in accordance with an embodiment of the present invention, in a key distribution configuration based on a tree structure, a title-unique key is transmitted along with an EKB (Effective Key Block), which is required in processing by the receiving apparatus to obtain the title-unique key. Thus, a title-unique key can be transmitted from an apparatus to an apparatus granted a proper license without the need for mutual authentication between the apparatus with a high degree of reliability.

**Claims**

1. An information-processing apparatus for carrying out a cryptographic process on information, comprising cryptographic-processing means for generating a key different from an input key by carrying out processing in accordance with a predetermined key generation sequence on said input key and for decrypting encrypted data stored on a recording medium by using said generated different key,

   wherein said cryptographic-processing means:

   generates a second encryption key by carrying out processing according to a reversed sequence of at least a portion of said predetermined key generation sequence on a first encryption key provided for said encrypted data input from an external source to be stored onto said recording medium; and
   generates a decryption key for decrypting said encrypted data by carrying out processing in accordance with said predetermined key generation sequence on said second encryption key.

2. An information-processing apparatus according to claim 1,

   wherein said cryptographic-processing means generates said decryption key by carrying out processing in accordance with said predetermined key generation sequence on at least one of a stored key of said information-processing apparatus and a stored key of said recording medium in addition to said second encryption key.

3. An information-processing apparatus according to claim 1,

wherein said first encryption key is a title-unique key provided for said encrypted data input from an external source,

said second encryption key is a title key obtainable from processing to decrypt said title-unique key, and

said decryption key for decrypting said encrypted data is generated by carrying out processing in accordance with said predetermined key generation sequence on at least one of a stored key of said information-processing apparatus and a stored key of said recording medium as well as said title key.

4. An information-processing apparatus according to claim 1, further comprising storage means for storing node keys each unique to one of nodes composing a hierarchical tree structure including leaves each associated with one among a plurality of information-processing apparatus different from each other and for storing leaf keys each unique to one of said information-processing apparatus different from each other,

wherein said cryptographic-processing means:

carries out processing to decrypt an effective key block including node keys each encrypted by using keys including at least one of a node key on said hierarchical tree structure's layer at a lower hierarchical level and a leaf key on said hierarchical tree structure's layer at a lower hierarchical level; and

generates a decryption key for decrypting said encrypted data by carrying out processing in accordance with said predetermined key generation sequence on said key obtained as a result of said processing to decrypt said effective key block and said second encryption key.

5. An information-processing apparatus according to claim 1,

wherein said encrypted data is pieces of block data, which each comprise packets composing a transport stream, and

said decryption key generated on the basis of said second encryption key is a block key for each of said pieces of block data.

6. An information-processing apparatus according to claim 1,

wherein said cryptographic-processing means authenticates an apparatus, from which encrypted data is received, in an operation to receive said encrypted data, and accepts said encrypted data on condition that said apparatus transmitting said encrypted data is authenticated successfully.

7. An information-processing apparatus according to claim 1, further comprising storage means for storing node keys each unique to one of nodes composing a hierarchical tree structure including leaves each associated with one among a plurality of information-processing apparatus different from each other and for storing leaf keys each unique to one of said information-processing apparatus different from each other,

wherein said cryptographic-processing means:

carries out processing to decrypt an effective key block including node keys each encrypted by using keys including at least one of a node key on said hierarchical tree structure's layer at a lower hierarchical level and a leaf key on said hierarchical tree structure's layer at a lower hierarchical level; and

obtains said first encryption key as a result of said processing to decrypt said effective key block.

8. An information-processing method of carrying out a cryptographic process on information, comprising a cryptographic-processing step of generating a key different from an input key by carrying out processing in accordance with a predetermined key generation sequence on said input key and of decrypting encrypted data stored on a recording medium by using said generated different key,

wherein said cryptographic-processing step further comprises the steps of:

generating a second encryption key by carrying out processing according to a reversed sequence of at least a portion of said predetermined key generation sequence on a first encryption key provided for said encrypted data input from an external source to be stored onto said recording medium; and

generating a decryption key for decrypting said encrypted data by carrying out processing in accordance with said predetermined key generation sequence on said second encryption key.

9. An information-processing method according to claim 8,

wherein, in said decryption key generating step, said decryption key is generated by carrying out processing in accordance with said predetermined key generation sequence on at least one of a stored key of said information-processing apparatus and a stored key of said recording medium in addition to said second encryption key.

10. An information-processing method according to claim 8,

wherein said first encryption key is a title-unique key provided for said encrypted data input from an external source,

said second encryption key is a title key obtainable from processing to decrypt said title-unique key, and

said decryption key for decrypting said encrypted data is generated by carrying out processing in accordance with said predetermined key generation sequence on at least one of a stored key of said information-processing apparatus and a stored key of said recording medium as well as said title key.

11. An information-processing method according to claim 8,

wherein an information-processing apparatus for executing said information-processing method, comprises:

node keys each unique to one of nodes composing a hierarchical tree structure including leaves each associated with one among a plurality of information-processing apparatus different from each other; and leaf keys each unique to one of said information-processing apparatus different from each other, and

in said decryption key generating step, said decryption key for decrypting said encrypted data is generated by execution of the steps of: carrying out processing to decrypt an effective key block including node keys each encrypted by using keys including at least one of a node key on said hierarchical tree structure's layer at a lower hierarchical level and a leaf key on

said hierarchical tree structure's layer at a lower hierarchical level; and generating said decryption key by carrying out processing in accordance with said predetermined key generation sequence on said key

obtained as a result of said processing to decrypt said effective key block and said second encryption key.

12. An information-processing method according to claim 8,

wherein said encrypted data is pieces of block data, which each comprise packets composing a transport stream, and

said decryption key generated on the basis of said second encryption key is a block key for each of said pieces of block data.

13. An information-processing method according to claim 8,

wherein authenticating of an apparatus, from which encrypted data is received, is performed in an operation to receive said encrypted data, and accepting of said encrypted data is performed on condition that said apparatus transmitting said encrypted data is authenticated successfully.

14. An information-processing method according to claim 8,

wherein an information-processing apparatus for executing said information-processing method, comprises:

node keys each unique to one of nodes composing a hierarchical tree structure including leaves each associated with one among a plurality of information-processing apparatus different from each other; and leaf keys each unique to one of said information-processing apparatus different from each other,

processing to decrypt an effective key block including node keys each encrypted by using keys including at least one of a node key on said hierarchical tree structure's layer at a lower hierarchical level and

a leaf key on said hierarchical tree structure's layer at

a lower hierarchical level is carried out, and

said first encryption key is obtained as a result of said processing to decrypt said effective key block.

15. A program to be executed in a computer system for carrying out a cryptographic process on information, comprising a cryptographic-processing step of generating a key different from an input key by carrying out processing in accordance with a predetermined key generation sequence on said input key and of decrypting encrypted data stored on a recording medium by using said generated different key,

wherein said cryptographic-processing step further comprises the steps of:

generating a second encryption key by carrying out processing according to a reversed sequence of at least a portion of said predetermined key generation sequence on a first encryption key provided for said encrypted data input from an external source to be stored onto said recording medium; and

generating a decryption key for decrypting said encrypted data by carrying out processing in accordance with said predetermined key generation sequence on said second encryption key.

# FIG.1

DIGITAL SIGNAL

INPUT/OUTPUT I/F — 120

ANALOG SIGNAL

INPUT/OUTPUT I/F — 140

A/D & D/A CONVERTER — 141

MPEG CODEC — 130

TS-PROCESSING MEANS — 300

CRYPTOGRAPHIC-PROCESSING MEANS (EXAMPLE: CRYPTOGRAPHIC-PROCESSING LSI) — 150

100

110

ROM — 160

CPU — 170

MEMORY — 180

RECORDING MEDIUM — 190

195

EP 1 291 867 A2

48

# F I G . 2

EP 1 291 867 A2

```
                                                              200

         120                              110

DIGITAL SIGNAL         ┌──────────────────┐
  ←──────────────────→ │ INPUT/OUTPUT  I/F │ ←────────────→
                       └──────────────────┘

         140                 130                      170
                141    ┌──────────┐              ┌──────────┐
   ┌───────────────┐   │   MPEG   │              │   CPU    │
   │ INPUT/OUTPUT I/F │ │  CODEC   │ ←────────→   └──────────┘
ANALOG SIGNAL        │ └──────────┘
  ←──────┐ ┌────────────┐                             180
         │ │  A/D & D/A │ ←──→                   ┌──────────┐
         │ │ CONVERTER  │                         │  MEMORY  │
         └─┴────────────┘          300            └──────────┘
                            ┌────────────┐
         150                │    TS-     │ ←────→
   ┌───────────────┐        │ PROCESSING │
   │ CRYPTOGRAPHIC- │        │   MEANS    │
   │ PROCESSING     │        └────────────┘           210        195
   │ MEANS          │                          ┌────────────┐  ┌──────┐
   │ (EXAMPLE:      │ ←──────────────────────→  │ RECORDING- │ ←│ RE-  │
   │ CRYPTOGRAPHIC- │                          │ MEDIUM I/F │  │CORDING│
   │ PROCESSING LSI)│                          └────────────┘  │MEDIUM│
   └───────────────┘                                           └──────┘
```

# FIG.3A

DIGITAL-SIGNAL-RECORDING PROCESS

↓ S301

RECEIVE DIGITAL SIGNAL

↓ S302

PERFORM TS PROCESSING

↓ S303

PERFORM ENCRYPTION

↓ S304

PERFORM RECORDING

↓

END

# FIG.3B

ANALOG-SIGNAL-RECORDING PROCESS

↓ S321

RECEIVE ANALOG SIGNAL

↓ S322

PERFORM A/D CONVERSION

↓ S323

PERFORM MPEG CODING

↓ S324

PERFORM TS PROCESSING

↓ S325

PERFORM ENCRYPTION

↓ S326

PERFORM RECORDING

↓

END

EP 1 291 867 A2

# F I G.4A

```
┌─────────────────────────┐
│  REPRODUCTION OF        │
│  DIGITAL OUTPUT         │
└─────────────────────────┘
            │
            │ S401
            ▼
┌─────────────────────────┐
│      READ OUT           │
└─────────────────────────┘
            │
            │ S402
            ▼
┌─────────────────────────┐
│      PERFORM            │
│      DECRYPTION         │
└─────────────────────────┘
            │
            │ S403
            ▼
┌─────────────────────────┐
│    PERFORM TS           │
│    PROCESSING           │
└─────────────────────────┘
            │
            │ S404
            ▼
┌─────────────────────────┐
│      OUTPUT             │
└─────────────────────────┘
            │
            ▼
┌─────────────────────────┐
│         END             │
└─────────────────────────┘
```

# F I G.4B

```
┌─────────────────────────┐
│  REPRODUCTION OF        │
│  ANALOG OUTPUT          │
└─────────────────────────┘
            │
            │ S421
            ▼
┌─────────────────────────┐
│      READ OUT           │
└─────────────────────────┘
            │
            │ S422
            ▼
┌─────────────────────────┐
│      PERFORM            │
│      DECRYPTION         │
└─────────────────────────┘
            │
            │ S423
            ▼
┌─────────────────────────┐
│    PERFORM TS           │
│    PROCESSING           │
└─────────────────────────┘
            │
            │ S424
            ▼
┌─────────────────────────┐
│   PERFORM MPEG          │
│   PROCESSING            │
└─────────────────────────┘
            │
            │ S425
            ▼
┌─────────────────────────┐
│   PERFORM D/A           │
│   CONVERSION            │
└─────────────────────────┘
            │
            │ S426
            ▼
┌─────────────────────────┐
│      OUTPUT             │
└─────────────────────────┘
            │
            ▼
┌─────────────────────────┐
│         END             │
└─────────────────────────┘
```

EP 1 291 867 A2

# FIG.5

PLAIN AV DATA

TS1 TS2 TS3 ......... TSX

192BYTES

188BYTES

4BYTES

ATS CCI (COPY CONTROL INFORMATION)

24~32BITS

BLOCK SEED

ENCRYPTED AV DATA

ENCRYPTED DATA

UNENCRYPTED DATA

BLOCK

EP 1 291 867 A2

# F I G. 6

# F I G.7A

TRANSPORT PACKET

INPUT
TRANSPORT
STREAM

# F I G.7B

BLOCK-SEED
ADDER'S
OUTPUT SOURCE
PACKET

BLOCK SEED    SOURCE PACKET

TIME

# F I G.7C

AV DATA ON
RECORDING
MEDIUM

ADDRESS

# F I G. 8

INITIAL VALUE

803 · 804 · 805

COMPARATOR ← TIMING GENERATION CIRCUIT (COUNTER) ← 27MHz X-tal

ATS

801 · 802 · 806

800 · RECORDED AV DATA (SUPPLIED FROM RECORDING MEDIUM) → BLOCK-SEED SEPARATION CIRCUIT → TRANSPORT PACKET → OUTPUT CONTROL CIRCUIT → TRANSPORT STREAM (OUTPUT TO MPEG CODEC OR DIGITAL INTERFACE)

EP 1 291 867 A2

# FIG.9

EP 1 291 867 A2

# F I G.１０

BLOCK SEED     31   ...   0

EXAMPLE 1
ATS 32BITS    | ATS |

EXAMPLE 2
ATS 30BITS
CCI 2BITS    | ATS | CCI |

EXAMPLE 3
ATS 24BITS
CCI 2BITS
OTHER INFORMATION
6BITS    | ATS | CCI | Other information |

EP 1 291 867 A2

# F I G . 1 1

EP 1 291 867 A2

# F I G . 1 2 A

KRB(KEY RENEWAL BLOCK)　　EXAMPLE 1

TRANSMISSION OF ROOT KEY K(t)R OF TIME
t TO DEVICES 0,1 AND 2

| GENERATION:t | |
|---|---|
| INDEX | ENCRYPTION KEY |
| 0 | Enc(K(t)0,K(t)R) |
| 00 | Enc(K(t)00,K(t)0) |
| 000 | Enc(K000,K(t)00) |
| 001 | Enc(K(t)001,K(t)00) |
| 0010 | Enc(K0010,K(t)001) |

# F I G . 1 2 B

KRB(KEY RENEWAL BLOCK)　　EXAMPLE 2

TRANSMISSION OF ROOT KEY K(t)R OF TIME
t TO DEVICES 0,1 AND 2

| GENERATION:t | |
|---|---|
| INDEX | ENCRYPTION KEY |
| 000 | Enc(K000,K(t)00) |
| 001 | Enc(K(t)001,K(t)00) |
| 0010 | Enc(K0010,K(t)001) |

# FIG.13

| GENERATION: t | |
|---|---|
| INDEX | ENCRYPTION KEY |
| 000 | Enc(K000,K(t)00) |
| 001 | Enc(K(t)001,K(t)00) |
| 0010 | Enc(K0010,K(t)001) |
| Enc(K(t)00,K(t)master) | |

RECORDING MEDIUM

K000

EKB PROCESSING → K(t)00

DECRYPTION → K(t)master

K0000

ENCRYPTION → STORAGE

DEVICE 0

EP 1 291 867 A2

# F I G. 1 4

START

S1401

RETRIEVE GENERATION NUMBER

S1402

NEWER THAN GENERATION OF STORED MASTER KEY? — NO

YES

RETRIEVE EKB — S1403

S1404

PERFORM EKB PROCESSING

S1405

WAS K(t)00 OBTAINED? — NO

YES     S1406

RETRIEVE Enc(K(t)00,K(t)master)

S1407

DECRYPT Enc(K(t)00,K(t)master) TO OBTAIN K(t)master

S1408

ENCRYPT AND STORE K(t)master

END

# F I G . 1 5

START

S1501

RETRIEVE GENERATION NUMBER

S1502

MASTER KEY STORED BY ITSELF HAS NEWER GENERATION? — NO

YES S1503

RECORD CONTENTS

END

# FIG.16

1600

1651 — RECORDING-TIME GENERATION NUMBER

1620

1601 — MASTER KEY ← GENERATION NUMBER — 1650

1680 — STAMPER ID

1603 — DISK ID

GENERATE DISK-UNIQUE KEY — 1602

1604

DISK-UNIQUE KEY

1605

TITLE KEY → TITLE KEY

COGNIZANT KEY — 1631

1606 — GENERATE TITLE-UNIQUE KEY

NON-COGNIZANT KEY — 1632

1635

TITLE-UNIQUE KEY

BLOCK SEED

RECORDING MODE → RECORDING MODE

1ST TO 4TH BYTES

GENERATE BLOCK KEY — 1607

1633

DATA TO BE ENCRYPTED

(m+1)TH AND SUBSEQUENT BYTES

BLOCK KEY

ENCRYPTED DATA

1610

1612

SELECTOR → ENCRYPTION → (m+1)TH AND SUBSEQUENT BYTES → SELECTOR → ENCRYPTED CONTENTS

1608

1609

1ST TO M-TH BYTES

1ST TO M-TH BYTES

EP 1 291 867 A2

# FIG.17

EP 1 291 867 A2

EP 1 291 867 A2

# F I G . 1 8

START — S1801

RETRIEVE MASTER KEY, COGNIZANT KEY, NON-COGNIZANT KEY AND STAMPER ID

DISK ID EXISTS ON DISK? — S1802
 — NO → GENERATE DISK ID AND RECORD IT ONTO DISK — S1804

YES

S1803 — RETRIEVE DISK ID

S1805 — GENERATE DISK-UNIQUE KEY

GENERATE TITLE KEY AND SAVE IT ON DISK ALONG WITH RECORDING MODE AND RECORDING-TIME GENERATION NUMBER — S1806

GENERATE TITLE-UNIQUE KEY — S1807

RECEIVE TS PACKET — S1808

ADD ATS(CCI) — S1809

WAS BLOCK X(=32) OR END MARK RECEIVED? — S1810 — NO

YES

FORM BLOCK DATA — S1811

GENERATE BLOCK KEY — S1812

ENCRYPT BLOCK DATA — S1813

SAVE BLOCK DATA IN DISK — S1814

WERE ALL TS PACKETS RECORDED? — S1815
NO

YES

END

65

# FIG.19

TYPICAL
DISK-UNIQUE KEY
GENERATION

INPUT KEY
MASTER KEY(64 BITS)
STAMPER ID(64 BITS)
DISK ID   (64 BITS)

OUTPUT
DISK-UNIQUE KEY(64 BITS)

EXAMPLE 1
STAMPER ID(64 BITS)

DISK ID(64 BITS)

64-BIT BLOCK CRYPTOGRAPHIC
PROCESSING FUNCTION
(KEY LENGTH OF 64 BITS)

MASTER
KEY

DISK-UNIQUE KEY

EXAMPLE 2

MASTER KEY || STAMPER ID || DISK ||

SHA-1

160-BIT-INPUT/
64-BIT-OUTPUT
CONTRACTION FUNCTION
(EXAMPLE:OUTPUTTING
 64 LOW-ORDER BITS OF INPUT)

DISK-UNIQUE KEY

EP 1 291 867 A2

# FIG.20

Transmitted First

31 30 29 28 27 26 25 24 23 22 21 20 19 18 17 16 15 14 13 12 11 10 9 8 7 6 5 4 3 2 1 0

| Data Length | Tag | Channel | Tcode | EMI | Odd/Even | SY |
| --- | --- | --- | --- | --- | --- | --- |

Header CRC

Data Field

Data CRC

# F I G . 2 1

START

S5001

IS RECORDING APPARATUS CAPABLE OF ANALYZING DATA FORMAT? — NO

YES

S5002

IS RECORDING APPARATUS CAPABLE OF DECODING DATA AND RETRIEVING AS WELL AS UPDATING EMBEDDED CCI? — NO

YES

S5003

IS INPUT SPECIFYING EXECUTION OF RECORDING IN NON-COGNIZANT MODE INCLUDED IN USER INPUT TO RECORDING APPARATUS? — YES

NO

S5004

IS EXECUTION SPECIFICATION OF RECORDING IN NON-COGNIZANT MODE INCLUDED IN CONTENTS PACKET SUCH AS RECEIVED DATA? — YES

NO

RECORD DATA IN COGNIZANT MODE

RECORD DATA IN NON-COGNIZANT MODE

EP 1 291 867 A2

# F I G. 22

EXAMPLE 1

TYPICAL GENERATION OF
TITLE-UNIQUE KEY

INPUT
DISK-UNIQUE KEY(64 BITS)
TITLE KEY(64 BITS)
COGNIZANT KEY(64 BITS) OR
NON-COGNIZANT KEY(64 BITS)

OUTPUT
TITLE-UNIQUE KEY(64 BITS)

64-BIT BLOCK
CRYPTOGRAPHIC
PROCESSING FUNCTION
(64-BIT KEY LENGTH)

COGNIZANT KEY
(COGNIZANT MODE)
NON-COGNIZANT KEY
(NON-COGNIZANT MODE)

TITLE KEY

64-BIT BLOCK
CRYPTOGRAPHIC
PROCESSING FUNCTION
(64-BIT KEY LENGTH)

DISK-UNIQUE
KEY

TITLE-UNIQUE KEY

EXAMPLE 2

DISK-UNIQUE KEY || TITLE KEY || COGNIZANT KEY
(COGNIZANT MODE)

DISK-UNIQUE KEY || TITLE KEY || NON-COGNIZANT KEY
(NON-COGNIZANT MODE)

SHA-1

160-BIT-INPUT/64-BIT-OUTPUT
CONTRACTION FUNCTION
(EXAMPLE: OUTPUTTING
64 LOW-ORDER BITS OF INPUT)

TITLE-UNIQUE KEY

EP 1 291 867 A2

# FIG.23

EXAMPLE 1

TYPICAL GENERATION OF BLOCK KEY

BLOCK SEED|| CONSTANT(32 BITS)

INPUT
BLOCK SEED(32 BITS)
TITLE-UNIQUE KEY(64 BITS)

TITLE-
UNIQUE KEY

64-BIT BLOCK CRYPTOGRAPHIC
PROCESSING FUNCTION
(KEY LENGTH OF 64 BITS)

BLOCK KEY

EXAMPLE 2

TITLE-UNIQUE KEY || BLOCK SEED

OUTPUT
BLOCK KEY(64 BITS)

SHA-1

160-BIT-INPUT/64-BIT-OUTPUT
CONTRACTION FUNCTION
(EXAMPLE: OUTPUTTING
64 LOW-ORDER BITS OF INPUT)

BLOCK KEY

EP 1 291 867 A2

# FIG.24

EP 1 291 867 A2

```
      ( FROM STEP S1806 )
              │
              │                    S2001
              ▼                              NON-COGNIZANT MODE
   < WHAT IS RECORDING MODE? >─────────────────────────────────┐
              │                                                  │
              │ CONGNIZANT MODE  S2002                           │  S2003
              ▼                                                  ▼
  ┌──────────────────────────────┐          ┌──────────────────────────────┐
  │ GENERATE TITLE-UNIQUE KEY    │          │ GENERATE TITLE-UNIQUE KEY    │
  │ FROM DISK-UNIQUE KEY,TITLE KEY│         │ FROM DISK-UNIQUE KEY,TITLE KEY│
  │ AND COGNIZANT KEY            │          │ AND NON-COGNIZANT KEY        │
  └──────────────────────────────┘          └──────────────────────────────┘
              │
              ▼
      ( TO STEP S1808 )
```

# F I G . 2 5

FIG.25 2300

PRE-RECORDING GENERATION NUMBER — 2360

RECORDING-TIME GENERATION NUMBER — 2350

2301 — MASTER KEY

2380 — STAMPER ID

2303 — DISK ID

GENERATE DISK-UNIQUE KEY — 2302

2304 TITLE KEY

2305 TITLE KEY

DISK-UNIQUE KEY

COGNIZANT KEY — 2331

2306 — GENERATE TITLE-UNIQUE KEY

NON-COGNIZANT KEY — 2332

2335

TITLE-UNIQUE KEY

2333 — RECORDING MODE

RECORDING MODE

2307 — GENERATE BLOCK KEY

BLOCK SEED 1ST TO 4TH BYTES

2312

(m+1)TH AND SUBSEQUENT BYTES

BLOCK KEY

ENCRYPTED DATA

DECRYPTED DATA

SELECTOR — 2308

2309 — DECRYPTION

(m+1)TH AND SUBSEQUENT BYTES

SELECTOR — 2310

ENCRYPTED CONTENTS

1ST TO M-TH BYTES

1ST TO M-TH BYTES

2320

2312

72

EP 1 291 867 A2

EP 1 291 867 A2

# F I G . 2 6

START

RETRIEVE DISK ID,STAMPER ID,PRE-RECORDING GENERATION NUMBER,MASTER KEY AND COGNIZANT KEY/NON-COGNIZANT KEY — S2401

RETRIEVE TITLE KEY,RECORDING MODE AND RECORDING-TIME GENERATION NUMBER — S2402

REPRODUCIBLE? — S2403
NO
YES

GENERATE DISK-UNIQUE KEY — S2404

GENERATE TITLE-UNIQUE KEY — S2405

READ OUT ENCRYPTED BLOCK DATA — S2406

GENERATE BLOCK KEY — S2407

DECRYPT ENCRYPTED BLOCK DATA — S2408

WAS ALL BLOCK DATA READ OUT? — S2409
NO
YES

END

73

# F I G . 2 7

START

S2501

NO — IS RECORDING-TIME GENERATION NUMBER NEWER THAN PRE-RECORDING GENERATION NUMBER?

YES

S2502

NO — IS MASTER KEY STORED BY ITSELF NEWER THAN RECORDING-TIME GENERATION NUMBER?

YES

S2503

NO — IS KEY FOR RECORDING MODE OWNED? (THE KEY IS COGNIZANT KEY/ NON-COGNIZANT KEY)

YES

DETERMINE TO BE REPRODUCIBLE AND CONTINUE TO STEP S2404

DETERMINE TO BE IRREPRODUCIBLE AND END PROCESSING

# F I G.28

EP 1 291 867 A2

# FIG.29

| GENERATION:t | |
|---|---|
| INDEX | ENCRYPTION KEY |
| 000 | Enc(K000,K(t)00) |
| 001 | Enc(K(t)001,K(t)00) |
| 0010 | Enc(K0010,K(t)001) |
| Enc(K(t)00,K(t)media) | |

RECORDING MEDIUM

K000

EKB PROCESSING → K(t)00

DECRYPTION → K(t)media

DEVICE 0

EP 1 291 867 A2

# F I G. 3 0

```
        ┌─────────────┐
        │    START    │
        └─────────────┘
               │
               ▼
   ┌───────────────────────┐  ⌐S2801
   │     RETRIEVE EKB       │
   └───────────────────────┘
               │
               ▼
   ┌───────────────────────┐  ⌐S2802
   │ PERFORM EKB PROCESSING │
   └───────────────────────┘
               │
               ▼
   ┌──────────────────────────────┐  ⌐S2803
   │ RETRIEVE Enc(K(t)00,K(t)media)│
   └──────────────────────────────┘
               │
               ▼
   ┌──────────────────────────────┐  ⌐S2804
   │ DECRYPT Enc(K(t)00,K(t)media) │
   │ TO FIND K(t)media             │
   └──────────────────────────────┘
               │
               ▼
        ┌─────────────┐
        │     END     │
        └─────────────┘
```

# F I G. 3 1

```
        ┌─────────────┐
        │    START    │
        └─────────────┘
               │
               ▼            ⌐S2901
            ◇─────────◇
           ◇  WAS MEDIA ◇  YES
           ◇  KEY       ◇───────────┐
           ◇ OBTAINED ? ◇           │
            ◇─────────◇             │
               │ NO                 │
               ▼                    │
   ┌───────────────────────┐ ⌐S2902 │
   │   RECORD CONTENTS      │        │
   └───────────────────────┘        │
               │◄───────────────────┘
               ▼
        ┌─────────────┐
        │     END     │
        └─────────────┘
```

# FIG.32

3000

3020

3001 — MEDIA KEY

STAMPER ID

DISK ID

GENERATE DISK-UNIQUE KEY

DISK-UNIQUE KEY

TITLE KEY → TITLE KEY

GENERATE TITLE-UNIQUE KEY

COGNIZANT KEY

NON-COGNIZANT KEY

TITLE-UNIQUE KEY

RECORDING MODE → RECORDING MODE

BLOCK SEED

1ST TO 4TH BYTES

GENERATE BLOCK KEY

BLOCK KEY

(m+1)TH AND SUBSEQUENT BYTES

DATA TO BE ENCRYPTED → SELECTOR → ENCRYPTION

ENCRYPTED DATA (m+1)TH AND SUBSEQUENT BYTES → SELECTOR → ENCRYPTED CONTENTS

1ST TO M-TH BYTES

1ST TO M-TH BYTES

EP 1 291 867 A2

# F I G.33

EP 1 291 867 A2

# F I G. 3 4

START

RETRIEVE MEDIA KEY, COGNIZANT KEY, NON-COGNIZANT KEY AND STAMPER ID — S3201

S3202 — DISK ID EXISTS ON DISK ? — NO

YES

S3203 — RETRIEVE DISK ID

S3204

GENERATE DISK ID AND RECORD IT ONTO DISK

S3205 — GENERATE DISK-UNIQUE KEY

GENERATE TITLE KEY AND SAVE IT ON DISK ALONG WITH RECORDING MODE — S3206

GENERATE TITLE-UNIQUE KEY — S3207

RECEIVE TS PACKET — S3208

ADD ATS(CCI) — S3209

WAS BLOCK X(=32) OR END MARK RECEIVED ? — S3210 — NO

YES

FORM BLOCK DATA — S3211

GENERATE BLOCK KEY — S3212

ENCRYPT BLOCK DATA — S3213

SAVE BLOCK DATA IN DISK — S3214

NO — WERE ALL TS PACKETS RECORDED ? — S3215

YES

END

# FIG.35

3300

3320

3301 — MEDIA KEY

STAMPER ID

DISK ID

GENERATE DISK-
UNIQUE KEY

DISK-UNIQUE KEY

TITLE KEY

TITLE KEY

GENERATE TITLE-
UNIQUE KEY

TITLE-UNIQUE KEY

COGNIZANT KEY

NON-
COGNIZANT KEY

RECORDING
MODE

RECORDING
MODE

GENERATE
BLOCK KEY

BLOCK SEED
1ST TO 4TH
BYTES

DECRYPTED
DATA

(m+1)TH AND
SUBSEQUENT
BYTES

BLOCK
KEY

ENCRYPTED
DATA

SELECTOR

DECRYPTION

(m+1)TH AND
SUBSEQUENT BYTES

SELECTOR

ENCRYPTED
CONTENTS

1ST TO M-TH BYTES

1ST TO M-TH BYTES

EP 1 291 867 A2

81

# F I G . 3 6

```
                    ┌─────────┐
                    │  START  │
                    └─────────┘
                         │
                         ▼
    ┌──────────────────────────────────────────┐  ╭─ S3401
    │ RETRIEVE MEDIA KEY,COGNIZANT KEY/NON-     │
    │ COGNIZANT KEY,DISK ID AND STAMPER ID      │
    └──────────────────────────────────────────┘
                         │
                         ▼
    ┌──────────────────────────────────────────┐  ╭─ S3402
    │ RETRIEVE TITLE KEY AND RECORDING MODE     │
    └──────────────────────────────────────────┘
                         │
            NO           ▼               ╭─ S3403
      ◄──────────< REPRODUCIBLE ? >
      │                  │ YES
      │                  ▼
      │      ┌──────────────────────────┐  ╭─ S3404
      │      │  GENERATE DISK-UNIQUE KEY │
      │      └──────────────────────────┘
      │                  │
      │                  ▼
      │      ┌──────────────────────────┐  ╭─ S3405
      │      │ GENERATE TITLE-UNIQUE KEY │
      │      └──────────────────────────┘
      │                  │
      │                  ▼
      │      ┌──────────────────────────┐  ╭─ S3406
      │      │ READ OUT ENCRYPTED BLOCK DATA │
      │      └──────────────────────────┘
      │                  │
      │                  ▼
      │      ┌──────────────────────────┐  ╭─ S3407
      │      │    GENERATE BLOCK KEY     │
      │      └──────────────────────────┘
      │                  │
      │                  ▼
      │      ┌──────────────────────────┐  ╭─ S3408
      │      │ DECRYPT ENCRYPTED BLOCK DATA │
      │      └──────────────────────────┘
      │                  │
      │  S3409  ▼                    NO
      │     < WAS ALL BLOCK DATA >──────┐
      │       < READ OUT ? >            │
      │                  │ YES          │
      └──────────────────┤              │
                         ▼              │
                    ┌─────────┐         │
                    │   END   │         │
                    └─────────┘         │
```

# F I G.37

FROM STEP S3403

WAS MEDIA KEY OBTAINED ? — S3501

NO

YES

IS KEY FOR RECORDING MODE OWNED ? (THE KEY IS COGNIZANT KEY/NON-COGNIZANT KEY) — S3502

NO

YES

DETERMINE TO BE REPRODUCIBLE AND CONTINUE TO STEP S3404

DETERMINE TO BE IRREPRODUCIBLE AND END PROCESSING

# FIG.38

# F I G. 39

START

RETRIEVE LSI KEY, COGNIZANT KEY/NON-COGNIZANT KEY, DRIVE KEY AND MEDIA KEY — S3501

GENERATE TITLE KEY AND SAVE IT ON DISK ALONG WITH RECORDING MODE — S3502

GENERATE TITLE-UNIQUE KEY — S3503

RECEIVE TS PACKET — S3504

ADD ATS(CCI) — S3505

WAS BLOCK X(=32) OR END MARK RECEIVED ? — S3506  NO

YES

FORM BLOCK DATA — S3507

GENERATE BLOCK KEY — S3508

ENCRYPT BLOCK DATA — S3509

SAVE BLOCK DATA IN DISK — S3510

WERE ALL TS PACKETS RECORDED ? — S3511  NO

YES

END

EP 1 291 867 A2

# F I G.40

64-BIT BLOCK CRYPTOGRAPHIC PROCESSING
FUNCTION (KEY LENGTH OF 64 BITS)

COGNIZANT KEY
(COGNIZANT MODE)
NON-COGNIZANT KEY
(NON-COGNIZANT MODE)
(64 BITS)

DRIVE KEY
(64 BITS)

MEDIA KEY
(64 BITS)

TITLE KEY
(64 BITS)

LSI KEY
(64 BITS)

TITLE-UNIQUE
KEY

# F I G. 4 1

3500

3521

EP 1 291 867 A2

# F I G . 4 2

START

RETRIEVE LSI KEY,COGNIZANT KEY/NON-COGNIZANT KEY,DRIVE KEY AND MEDIA KEY —S3701

RETRIEVE TITLE KEY AND RECORDING MODE —S3702

GENERATE TITLE-UNIQUE KEY —S3703

READ OUT ENCRYPTED BLOCK DATA —S3704

GENERATE BLOCK KEY —S3705

DECRYPT ENCRYPTED BLOCK DATA —S3706

S3707— WAS ALL BLOCK DATA READ OUT ?   NO

YES

END

# FIG.43A

DIGITAL-SIGNAL-
RECORDING PROCESS

RECEIVE DIGITAL
SIGNAL  S4001

IS COPYING
PERMITTED ?  S4002

NO → END

YES

PERFORM TS
PROCESSING  S4003

PERFORM
ENCRYPTION  S4004

PERFORM
RECORDING  S4005

END

# FIG.43B

ANALOG-SIGNAL-
RECORDING PROCESS

RECEIVE ANALOG
SIGNAL  S4011

IS COPYING
PERMITTED ?  S4012

NO → END

YES

PERFORM A/D
CONVERSION  S4013

PERFORM MPEG
CODING  S4014

PERFORM TS
PROCESSING  S4015

PERFORM
ENCRYPTION  S4016

PERFORM
RECORDING  S4017

END

EP 1 291 867 A2

## FIG.44A

REPRODUCTION OF DIGITAL OUTPUT

↓

READ OUT — S4101

↓

PERFORM DECRYPTION — S4102

↓

PERFORM TS PROCESSING — S4103

↓

IS COPYING PERMITTED ? — S4104

- YES → OUTPUT — S4105 → END
- NO → OUTPUT BY USING COPY PREVENTION MECHANISM — S4106 → END

## FIG.44B

REPRODUCTION OF ANALOG OUTPUT

↓

READ OUT — S4111

↓

PERFORM DECRYPTION — S4112

↓

PERFORM TS PROCESSING — S4113

↓

PERFORM MPEG DECODING — S4114

↓

PERFORM D/A CONVERSION — S4115

↓

IS COPYING PERMITTED ? — S4116

- YES → OUTPUT — S4117 → END
- NO → OUTPUT BY USING COPY PREVENTION MECHANISM — S4118 → END

# FIG.45

EP 1 291 867 A2

# FIG.46

```
                    START

AUTHENTICATE RECEIVING APPARATUS AND        S5101
EXCHANGE KEYS WITH RECEIVING APPARATUS

NO        WAS AUTHENTICATION       S5102
              SUCCESSFUL ?
                  YES

READ OUT LSI KEY,COGNIZANT KEY/NON-          S5103
COGNIZANT KEY,DRIVE KEY AND MEDIA KEY

READ OUT TITLE KEY AND RECORDING MODE       S5104

      GENERATE TITLE-UNIQUE KEY             S5105

ENCRYPT AND TRANSMIT TITLE-                  S5106
UNIQUE KEY AND RECORDING MODE

S5107    READ OUT AND TRANSMIT
         ENCRYPTED BLOCK DATA

S5108    WAS ALL BLOCK DATA        NO
         READ OUT ?
                  YES

                    END
```

# FIG.47

ENCRYPTED
TITLE-
UNIQUE KEY

TITLE-UNIQUE KEY

DISK-UNIQUE
KEY

ENCRYPTED
RECORDING
MODE

ENCRYPTED CONTENTS

EP 1 291 867 A2

# FIG.48

START

LET TRANSMITTING APPARATUS PERFORM AUTHENTICATION AND EXCHANGE KEYS — S5201

NO WAS AUTHENTICATION SUCCESSFUL ? — S5202

YES

READ OUT MASTER KEY,COGNIZANT KEY/ NON-COGNIZANT KEY AND STAMPER ID — S5203

S5204 DISK ID EXISTS IN DISK ? NO

S5206

YES

S5205 READ OUT DISK ID

GENERATE DISK ID AND RECORD IT ON DISK

GENERATE DISK-UNIQUE KEY — S5207

RECEIVE AND DECRYPT TITLE-UNIQUE KEY AND RECORDING MODE — S5208

GENERATE TITLE KEY AND RECORD IT ALONG WITH RECORDING MODE ON DISK — S5209

RECEIVE ENCRYPTED BLOCK DATA AND RECORD IT ON DISK — S5210

NO WAS ALL BLOCK DATA RECEIVED ? — S5211

YES

END

# FIG.49

DEVICE A                                                    DEVICE B

Kab                                                         Kab

Rb

Ra ‖ Sa ‖ MAC(Kab,Ra ‖ Rb ‖ Sa)

MAC CHECK

Sb ‖ MAC(Kab,Rb ‖ Ra ‖ Sb)

MAC CHECK

Ks=
MAC(Kab,Sa ‖ Sb)

Ks=
MAC(Kab,Sa ‖ Sb)

EP 1 291 867 A2

# F I G.50

DEVICE A                                                          DEVICE B

PriKeyA,PubKeyA                                          PriKeyB,PubKeyB

Rb

Va=KaG

CertA ‖ Ra ‖ Rb ‖ Va ‖
Sig(PrikeyA,Ra ‖ Rb ‖ Va)
                                                  CertA CHECK
                                                  SigA CHECK
                                                  REVOCATION/REGISTRATION
                                                  LIST CHECK
                                                  Vb=KbG
CertB ‖ Rb ‖ Ra ‖ Vb ‖
Sig(PrikeyB,Rb ‖ Ra ‖ Vb ‖ RevVb ‖ RegVb)
CertB CHECK
SigB CHECK
REVOCATION/REGISTRATION
LIST CHECK
                Ks=KaVb                                          Ks=KbVa

EP 1 291 867 A2

# F I G . 5 1

INVERSE FUNCTION OF 64-BIT BLOCK CRYPTOGRAPHIC PROCESSING
FUNCTION (KEY LENGTH OF 64 BITS)
COGNIZANT KEY(COGNIZANT MODE)
NON-COGNIZANT KEY(NON-COGNIZANT MODE)

INVERSE FUNCTION OF
64-BIT BLOCK CRYPTOGRAHIC
PROCESSING FUNCTION
(KEY LENGTH OF 64 BITS)

TITLE-UNIQUE KEY

TITLE KEY

DISK-UNIQUE KEY

FIG.52A

FIG.52B

# F I G . 5 3

ENCRYPTED TITLE-UNIQUE KEY

ENCRYPTED RECORDING MODE

ENCRYPTED CONTENTS

EP 1 291 867 A2

# FIG.54

```
                    ┌─────────┐
                    │  START  │
                    └─────────┘
                         │
                         ▼
    ┌──────────────────────────────────────────┐  ┌ S5301
    │ AUTHENTICATE RECEIVING APPARATUS AND      │
    │ EXCHANGE KEYS WITH RECEIVING APPARATUS    │
    └──────────────────────────────────────────┘
                         │
         NO         ◇ WAS AUTHENTICATION ◇  ─ S5302
    ◄─────────────  ◇    SUCCESSFUL ?    ◇
    │                        │ YES
    │                        ▼
    │   ┌──────────────────────────────────────────┐  ┌ S5303
    │   │ READ OUT DISK ID,STAMPER ID,PRE-          │
    │   │ RECORDING GENERATION NUMBER,MASTER KEY    │
    │   │ AND COGNIZANT KEY/NON-COGNIZANT KEY       │
    │   └──────────────────────────────────────────┘
    │                        │
    │                        ▼
    │   ┌──────────────────────────────────────────┐  ┌ S5304
    │   │ READ OUT TITLE KEY,RECORDING MODE AND     │
    │   │ RECORDING-TIME GENERATION NUMBER          │
    │   └──────────────────────────────────────────┘
    │                        │
    │        NO      ◇  REPRODUCIBLE ?  ◇  ─ S5305
    │   ◄──────────  ◇                  ◇
    │   │                    │ YES
    │   │                    ▼
    │   │   ┌──────────────────────────────┐  ┌ S5306
    │   │   │  GENERATE DISK-UNIQUE KEY     │
    │   │   └──────────────────────────────┘
    │   │                    │
    │   │                    ▼
    │   │   ┌──────────────────────────────┐  ┌ S5307
    │   │   │  GENERATE TITLE-UNIQUE KEY    │
    │   │   └──────────────────────────────┘
    │   │                    │
    │   │                    ▼
    │   │   ┌──────────────────────────────┐  ┌ S5308
    │   │   │ ENCRYPT AND TRANSMIT TITLE-   │
    │   │   │ UNIQUE KEY AND RECORDING MODE │
    │   │   └──────────────────────────────┘
    │   │                    │
    │   │                    ▼  ◄──────────┐
    │   │  S5309 ┌──────────────────────┐  │
    │   │        │ READ OUT AND TRANSMIT│  │
    │   │        │ ENCRYPTED BLOCK DATA │  │
    │   │        └──────────────────────┘  │
    │   │                    │             │
    │   │  S5310 ◇ WAS ALL BLOCK DATA ◇ NO │
    │   │        ◇    READ OUT ?       ◇───┘
    │   │                    │ YES
    │   └────────────────────┤
    └────────────────────────┤
                             ▼
                    ┌─────────┐
                    │   END   │
                    └─────────┘
```

EP 1 291 867 A2

# F I G . 5 5

# F I G.56

```
            ( START )
                |
                v
LET TRANSMITTING APPARATUS PERFORM       S5401
AUTHENTICATION AND EXCHANGE KEYS
                |
                v
   NO    WAS AUTHENTICATION             S5402
  <----  SUCCESSFUL ?
                | YES
                v
READ OUT LSI KEY,COGNIZANT KEY/NON-      S5403
COGNIZANT KEY,DRIVE KEY AND MEDIA KEY
                |
                v
RECEIVE AND DECRYPT TITLE-UNIQUE KEY     S5404
AND RECORDING MODE
                |
                v
GENERATE TITLE KEY AND RECORD IT         S5405
ALONG WITH RECORDING MODE ON DISK
                |
                v
RECEIVE ENCRYPTED BLOCK DATA             S5406
AND RECORD IT ON DISK
                |
                v
   NO    WAS ALL BLOCK DATA             S5407
  <----  RECEIVED ?
                | YES
                v
            ( END )
```

# F I G.57

INVERSE (DECRYPTION) FUNCTION OF 64-BIT BLOCK
CRYPTOGRAPHIC PROCESSING FUNCTION
(KEY LENGTH OF 64 BITS)

COGNIZANT KEY
(COGNIZANT MODE)
NON-COGNIZANT KEY
(NON-COGNIZANT MODE)
(64 BITS)

DRIVE KEY
(64 BITS)

MEDIA KEY
(64 BITS)

TITLE KEY
(64 BITS)

LSI KEY
(64 BITS)

TITLE-UNIQUE
KEY

EP 1 291 867 A2

# F I G . 5 8

3800

DETERMINE
RECORDING
MODE

GENERATE TITLE-
UNIQUE KEY

ENCRYPTED
TITLE-
UNIQUE KEY

TITLE-UNIQUE KEY

AUTHENTICATION
& ENCRYPTION

ENCRYPTED
RECORDING
MODE

BLOCK SEED

1ST TO 4TH
BYTES

GENERATE
BLOCK KEY

DATA TO BE
ENCRYPTED

(m+1)TH AND
SUBSEQUENT
BYTES

BLOCK
KEY

SELECTOR

ENCRYPTION

ENCRYPTED
DATA

(m+1)TH AND
SUBSEQUENT BYTES

SELECTOR

ENCRYPTED
CONTENTS

1ST TO M-TH BYTES

1ST TO M-TH BYTES

EP 1 291 867 A2

104

# FIG.59A

START OF CONTENTS ENCRYPTION

S6101
GENERATE TITLE-UNIQUE KEY AND RECORDING MODE, AND SAVE THEM ON DISK

S6102
RECEIVE TS PACKET

S6103
ADD ATS(CCI)

S6104
WAS BLOCK X(=32)OR END MARK RECEIVED ?  NO

YES

S6105
FORM BLOCK DATA

S6106
GENERATE BLOCK KEY

S6107
ENCRYPT BLOCK DATA AND SAVE IT IN DISK

S6108
WERE ALL TS PACKETS RECORDED ?  NO

YES

END

# FIG.59B

START OF ENCRYPTED-CONTENTS DATA TRANSMISSION

S6121
READ OUT AND TRANSMIT ENCRYPTED BLOCK DATA

S6122
NO  WAS ALL BLOCK DATA READ OUT ?

YES

END

# FIG.59C

START OF TRANSMISSION OF TITLE-UNIQUE KEY

S6131
AUTHENTICATE RECEIVING APPARATUS AND EXCHANGE KEYS WITH RECEIVING APPARATUS

S6132
NO  WAS AUTHENTICATION SUCCESSFUL ?

YES

S6133
ENCRYPT AND TRANSMIT TITLE-UNIQUE KEY AND RECORDING MODE

END

EP 1 291 867 A2

105

# FIG.60

EP 1 291 867 A2

# FIG.61A

START OF RECEPTION OF
ENCRYPTED CONTENTS DATA

↓ S6201

RECEIVE ENCRYPTED BLOCK DATA
AND RECORD IT ON DISK

↓ S6202

WAS ALL DATA RECEIVED ? — NO

↓ YES

END

# FIG.61B

START OF RECEPTION OF
TITLE-UNIQUE KEY

↓ S6301

LET SERVER PERFORM AUTHENTICATION
AND EXCHANGE KEYS

↓ S6302

WAS AUTHENTICATION SUCCESSFUL ? — NO

↓ YES  S6303

READ OUT MASTER KEY, COGNIZANT KEY/
NON-COGNIZANT KEY AND STAMPER ID

↓ S6304

NO — DISK ID EXISTS IN DISK ?

S6306 ↓        ↓ YES  S6305

GENERATE DISK ID AND     READ OUT DISK ID
RECORD IT ON DISK

↓ S6307

GENERATE DISK-UNIQUE KEY

↓ S6308

RECEIVE AND DECRYPT TITLE-
UNIQUE KEY AND RECORDING MODE

↓ S6309

GENERATE TITLE KEY AND RECORD IT
ALONG WITH RECORDING MODE ON DISK

↓

END

# FIG.62

(RECORDING & REPRODUCTION APPARATUS)

```
        ╭─────────────────────────╮
        │ START OF RECEPTION OF   │
        │ TITLE-UNIQUE KEY        │
        ╰─────────────────────────╯
                     │
                     ▼               ╭S6801
        ┌──────────────────────────────────┐
        │ RECEIVE EKB,ENCRYPTED TITLE-UNIQUE│
        │ KEY AND RECORDING MODE            │
        └──────────────────────────────────┘
                     │               ╭S6802
                     ▼
        ┌──────────────────────────────────┐
        │ ACQUIRE ROOT KEY FROM EKB         │
        └──────────────────────────────────┘
                     │               ╭S6803
                     ▼
        ┌──────────────────────────────────┐
        │ ACQUIRE TITLE-UNIQUE KEY          │
        │ AND RECORDING MODE                │
        └──────────────────────────────────┘
                     │               ╭S6804
                     ▼
        ┌──────────────────────────────────┐
        │ READ OUT MASTER KEY,COGNIZANT KEY/│
        │ NON-COGNIZANT KEY AND STAMPER ID  │
        └──────────────────────────────────┘
                     │               ╭S6805
    NO               ▼
  ╭──────────◇ DISK ID EXISTS IN DISK ? ◇
  │                  │ YES    ╭S6806
  │                  ▼
```

(SERVER)

```
        ╭─────────────────────────╮
        │ START OF TRANSMISSION   │
        │ OF TITLE-UNIQUE KEY     │
        ╰─────────────────────────╯
                     │          ╭S6601
                     ▼
        ┌──────────────────────┐
        │ GENERATE EKB         │
        └──────────────────────┘
                     │          ╭S6602
                     ▼
        ┌────────────────────────────────┐
        │ ENCRYPT TITLE-UNIQUE KEY AND   │
        │ RECORDING MODE BY USING ROOT   │
        │ KEY OF EKB AND TRANSMIT TITLE- │
        │ UNIQUE KEY AND RECORDING MODE  │
        │ ALONG WITH EKB                 │
        └────────────────────────────────┘
                     │
                     ▼
        ╭──────────────────────╮
        │        END           │
        ╰──────────────────────╯
```

S6807

```
        ┌──────────────────────┐    ┌──────────────────────┐
        │ GENERATE DISK ID AND │    │ READ OUT DISK ID     │
        │ RECORD IT ON DISK    │    └──────────────────────┘
        └──────────────────────┘              │
                     │                         │
                     └─────────────┬───────────┘
                                   │          ╭S6808
                                   ▼
                    ┌──────────────────────────────┐
                    │ GENERATE DISK-UNIQUE KEY     │
                    └──────────────────────────────┘
                                   │          ╭S6809
                                   ▼
                    ┌──────────────────────────────────┐
                    │ GENERATE TITLE KEY AND RECORD IT  │
                    │ ALONG WITH RECORDING MODE ON DISK │
                    └──────────────────────────────────┘
                                   │
                                   ▼
                    ╭──────────────────────╮
                    │        END           │
                    ╰──────────────────────╯
```

EP 1 291 867 A2

FIG.63

4201 BUS

4202 CPU
4203 ROM
4204 RAM
4205 HARD DISK

INPUT/OUTPUT INTERFACE 4211

4206 OUTPUT UNIT
4207 INPUT UNIT
4208 COMMUNICATION UNIT
4209 DRIVE
4210 REMOVABLE RECORDING MEDIUM